(19) Europäisches Patentamt
European Patent Office
Office européen des brevets

(11) EP 1 146 061 A1

(12) # EUROPEAN PATENT APPLICATION
published in accordance with Art. 158(3) EPC

(43) Date of publication:
**17.10.2001 Bulletin 2001/42**

(21) Application number: **00956820.5**

(22) Date of filing: **30.08.2000**

(51) Int Cl.[7]: **C08G 18/83**, C08G 18/32, C09J 175/00

(86) International application number:
**PCT/JP00/05890**

(87) International publication number:
**WO 01/16203 (08.03.2001 Gazette 2001/10)**

(84) Designated Contracting States:
**AT BE CH CY DE DK ES FI FR GB GR IE IT LI LU MC NL PT SE**

(30) Priority: **30.08.1999 JP 24243599**
**25.10.1999 JP 30191999**
**07.08.2000 JP 2000237846**
**07.08.2000 JP 2000237857**

(71) Applicant: **Toyo Ink Manufacturing Co. Ltd.**
**Tokyo 104-0031 (JP)**

(72) Inventors:
- **NAKAMURA, Naotoshi**
  **Chuo-ku, Tokyo 331-0031 (JP)**
- **SHIGEMORI, Kazunori**
  **Chuo-ku, Tokyo 104-0031 (JP)**
- **OTSUKI, Tsukasa**
  **Chuo-ku, Tokyo 104-0031 (JP)**
- **MASHIMO, Yukifumi**
  **Chuo-ku, Tokyo 104-0031 (JP)**
- **KAWASHIMA, Miki**
  **Chuo-ku, Tokyo 331-0031 (JP)**
- **IKEDA, Akira**
  **Chuo-ku, Tokyo 331-0031 (JP)**
- **SATO, Toshiaki**
  **Chuo-ku, Tokyo 331-0031 (JP)**
- **SAITO, Hiroshi**
  **Chuo-ku, Tokyo 331-0031 (JP)**

(74) Representative: **Goddar, Heinz J., Dr.**
**FORRESTER & BOEHMERT**
**Pettenkoferstrasse 20-22**
**80336 München (DE)**

(54) **MICHAEL ADDITION TYPE URETHANE-UREA RESIN, PROCESS FOR PRODUCING THE SAME, PRESSURE-SENSITIVE ADHESIVE, PROCESS FOR PRODUCING THE SAME, COATING MATERIAL FOR FORMING INK-RECEIVING LAYER, AND RECORDING MATERIAL**

(57) This invention provides a Michael addition type urethane urea made from starting materials including a polyol (a), a polyisocyanate (b), a polyamine (c) and an unsaturated compound (d), and

comprising a bonded portion represented by the following formula (1-1) or (1-2):

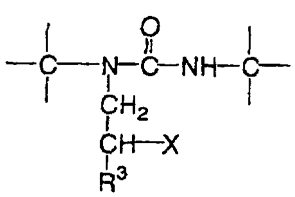

(1-1)

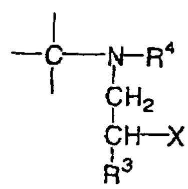

(1-2)

(where $R^3$ represents a monovalent organic group, X represents a hydrogen atom or an alkyl group having 1 to 3 carbon atoms and $R^4$ represents a hydrogen atom or a monovalent organic group).

EP 1 146 061 A1

## Description

Field of the invention

This invention concerns a novel urethane resin sufficiently having characteristics of urethane urea and various functions, and a production process therefor, an adhesive using the same, and a production process therefor, a coating agent for forming an ink receiving layer and a recording material using the coating agent for forming the ink receiving layer.

Description of the Related Art

Since a urethane resin and an acrylic resin have different characteristics, by being combined they can attain characteristics they would not have separately. However, it is well-known that acrylic resins, except for some, are poor in compatibility with urethane resins. In view of the above, various attempts have been made to copolymerize them. However, since methods for producing acrylic resin and methods for producing urethane resin are different from each other, copolymerization is basically difficult. So inter-intrusion type composite resins have been studied, such as 2-component type or microgel type resin synehtsised by mixing a hydroxyl group-containing acrylic monomer and, as a cross linker, isosyanate terminated urethan resin; an acrylic resins having a urethane bond in the side chain which acrylic resins are made from a monofunctional acrylic monomer having a urethane bond; and a urethane-acryl type emulsion using a difunctional acrylic monomer. However, the resins obtained by these methods have a main skeleton comprising chains of acrylic monomers and do not sufficiently achieve the strength which is characteristic of the urethane main chain.

On the other hand, a urethane resin basically made from a polyol component and a polyisocyanate component and variations of each of these components can provide only the changes in the main chain. Thus, it is more difficult to significantly change only a specified physical property in the case of existing urethane resins than in the case of resins obtained by using a monomer having a desired functional group on the side chain, for example, vinylic resins. For example, for changing the polarity of polyurethane resin with the purpose of improving the adhesion to a base material, coagulation or mechanical strength, a urethane urea resin is formed by using an amine component as a monomer in addition to the polyol or polyisocyanate, but the effect is inferior to the effect of the vinylic resin obtained by copolymerization of carboxylic acid containing monomers.

Summary of the Invention

The object of the invention is to provide a Michael addition type urethane urea resin sufficiently having characteristics of a urethane urea resin and also having desired functions, a production process therefor in which the physical properties thereof can be simply and effectively controlled, an adhesive agent, a coating agent for forming an ink receiving layer and a recording material utilizing the same, as well as a process for producing the adhesive.

The present inventors have found that when a urethane urea resin contains a structure in which an unsaturated compound is added by Michael addition to a polyamine as a constituent unit, the urethane resin can be provided with a desired physical property while maintaining the characteristics of the urethane urea resin, and through this finding, they have accomplished this invention.

That is, this invention provides a Michael addition type urethane urea resin made from starting materials including a polyol (a), a polyisocyanate (b), a polyamine (c) and an unsaturated compound (d), and comprising a bond portion represented by the following formula (1-1) or (1-2):

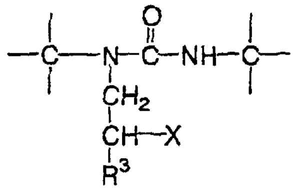

(1-1)

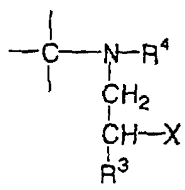

(1-2)

(where $R^3$ represents a monovalent organic group, X represents a hydrogen atom or an alkyl group having 1 to 3 carbon atoms and $R^4$ represents a hydrogen atom or a monovalent organic group).

Further, this invention provides a method of synthesizing such a Michael addition type urethane urea resin, that is, a process for producing a Michael addition type urethane urea resin comprising a step (a) of reacting a polyol (a) and a polyisocyanate (b) to form a urethane prepolymer (A) having an isocyanate group at the terminal end, a step (b) of Michael addition of a polyamine (c) and an unsaturated compound (d) (which may partially or fully contain a quaternary ammonium salt group) to form an amine compound (B) having at least two primary or secondary amino groups, and a step (c) of reacting the urethane prepolymer (A) and the amine compound (B) to prepare a Michael addition type urethane urea resin and, a process for producing a Michael addition type urethane urea resin comprising a step (d) of reacting a polyol (a), a polyisocyanate (b) and a polyamine (c) to prepare a polyurethane urea (C) having a primary or secondary amino group at the terminal end and a step (e) of Michael addition of an unsaturated compound (d) to the polyurethane urea (C).

This invention further provides an adhesive comprising such a Michael type urethane urea resin.

Furthermore, this invention provides a process for producing an adhesive comprising a first step of preparing a Michael addition type urethane urea resin by reacting a urethane prepolymer (A) which has an isocyanate group at the terminal end and which is obtained by reaction of a polyol (a) and a polyisocyanate (b), with an amine compound (B) which has at least two primary or secondary amino groups and which is obtained by a Michael addition reaction of a polyamine (c) and an unsaturated compound (d) and a reaction stopper (f), and a second step of blending a curing agent (D) with the Michael addition type urethane urea resin. As the reaction stopper (f), a monoamine compound is used suitably.

Furthermore, this invention provides a laminate comprising a substrate and the adhesive described above and a coating agent for forming an ink receiving layer which coating agent comprises the Michael addition type urethane urea resin described above.

The coating agent for forming the ink receiving layer may further contain a cationifying agent or a filler and, when filler is contained, the filler and the Michael addition type urethane urea resin can be grafted.

Further, this invention provides a recording material having a receiving layer comprising the coating agent for forming the ink receiving layer on a substrate.

Since the Michael addition type urethane urea type resin of this invention has a structure in which an unsaturated compound is added to a polyamine by Michael addition as a constituent unit, desired physical properties can be obtained while maintaining the characteristics of the urethane urea resin. As a result, moderate adhesion properties which were difficult in existing urethane resins or acrylic resins can be developed by the use of the resin of the present invention. Further, the recording agent of the present invention is capable of forming clear images and is also excellent in water proofness.

Brief Explanation of Drawings

Fig. 1 is a $^{13}$C-NMR chart for an amine compound obtained in Synthesis Example 1.
Fig. 2 is a $^{1}$H-NMR chart for an amine compound obtained in Synthesis Example 2.
Fig. 3 is a $^{1}$H-NMR chart for an amine compound obtained in Synthesis Example 3.
Fig. 4 is a $^{1}$H-NMR chart for an amine compound obtained in Synthesis Example 9.
Fig. 5 is a $^{1}$H-NMR chart for an amine compound obtained in Synthesis Example 10.
Fig. 6 is a $^{1}$H-NMR chart for an amine compound obtained in Synthesis Example 11.
Fig. 7 is a $^{1}$H-NMR chart for an amine compound obtained in Synthesis Example 12.
Fig. 8 is a $^{1}$H-NMR chart for an amine compound obtained in Synthesis Example 13.
Fig. 9 is a $^{1}$H-NMR chart for an amine compound obtained in Synthesis Example 14.
Fig. 10 is an IR chart for a Michael addition type urethane urea resin obtained in Example 2.
Fig. 11 is an IR chart for a Michael addition type urethane urea resin obtained in Example 3.
Fig. 12 is an IR chart for a Michael addition type urethane urea resin obtained in Example 4.
Fig. 13 is an IR chart for a Michael addition type urethane urea resin obtained in Example 9.

Fig. 14 is an IR chart for a Michael addition type urethane urea resin obtained in Example 10.
Fig. 15 is an IR chart for a Michael addition type urethane urea resin obtained in Example 11.
Fig. 16 is an $^1$H-NMR chart for a Michael addition type urethane urea resin obtained in Example 9.
Fig. 17 is an $^1$H-NMR chart for a Michael addition type urethane urea resin obtained in Example 10.
Fig. 18 is an $^1$H-NMR chart for a Michael addition type urethane urea resin obtained in Example 11.
The following is a detailed description of the invention.

< Michael Addition Type Urethane Urea Resin >

The Michael addition type urethane urea resin of the present invention is a urethane urea resin containing a constituent unit whose structure is the result ot Micharl addition of an unsaturated compound to a polyamine compound. That is, this is a Michael addition type urethane urea resin having a bonded portion shown by the formula (1-1) or (1-2):

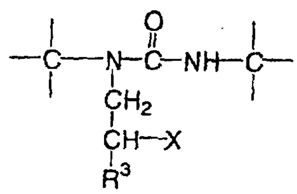
(1-1)

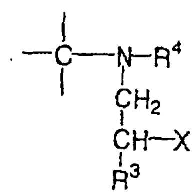
(1-2)

In the formula (1-1) or (1-2), carbon which is not a part of the carbonyl group and which is bonded to nitrogen connected to the group containing $R^3$, is derived from a polyamine (c), which can be bonded with various atoms, and the number of bonds with hydrogen is two or less.
Further, carbon which is bonded to nitrogen which is bonded to the carbonyl group and hydrogen is derived from a polyisocyanate (b), which can be bonded with various atoms and the number of bonds with hydrogen is two or less.
Further, $R^3$ is a monovalent organic group, which is an organic residue derived from an unsaturated compound (d) which is one of the monomers of the urethane urea. Specigic examples include linear, branched or cyclic aliphatic hydrocarbon groups, aromatic groups, and organic groups containing at least one of a nitrogen atom, oxygen atom and sulfur atom in addition to the carbon atoms in the main chain. $R^3$ may contain a halogen atom such as fluorine, chlorine and bromine, and a substituent such as a hydroxyl group, amino group or epoxy group. When $R^3$ is an aromatic group, it may have an aliphatic group as a substituent. Further, the weight-average molecular weight of $R^3$ is, preferably, from 20 to 20,000, more preferably, 40 to 10,000 and, most preferably, 45 to 5,000.
$R^3$ can include, for example, those of the following equations (3) to (12).

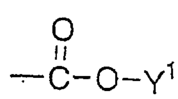
(3)

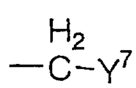
(8)

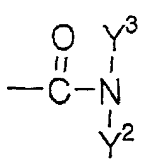
(4)

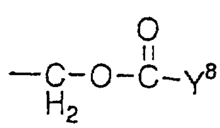
(9)

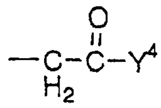 (5)

$-C\equiv N$ (10)

$-O-Y^5$ (6)

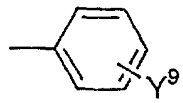 (11)

$-Y^6$ (7)

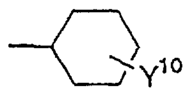 (12)

In the formulae (3) to (12), $Y^1$ to $Y^{10}$ each represents independently a hydrogen atom or a monovalent organic group having a weight-average molecular weight of 15 to 20,000 and, preferably, 20 to 10,000, and the organic group can include those exemplified for $R^3$.

Further, $R^4$ is a hydrogen atom or a monovalent organic group, specifically, a hydrogen atom or a monovalent organic residue derived from the polyamine (c) or a monovalent organic residue derived from the unsaturated compound (d). When a polyurethane urea (C) having terminal secondary amino groups is used, $R^4$ is an organic residue derived from the polyamine (c) forming the terminal end or a reaction stopper (f) to be described later. Those given as examples of $R^3$ may be given as examples of the monovalent organic group. Further, the weight-average molecular weight is preferably from 15 to 1,000 and, more preferably, 15 to 500. Further, when a polyurethane urea (C) having terminal primary amino groups ends is used, $R^4$ is a hydrogen atom or an organic group represented by: $-CH_2-CH(X)-R^3$.

Further, X represents a hydrogen atom or an alkyl group of 1 to 3 carbon atoms derived from the unsaturated compound (d).

The formula (1-1) shows a structure in which at least one primary or secondary amino group contained in the polyamine (c), an unsaturated group contained in the unsaturated compound and an isocyanate group contained in the urethane prepolymer are bonded to each other. Further, the formula (1-2) shows a structure in which a primary or secondary amino group contained in the polyamine (c) having the main chain or the branched end and an unsaturated group contained in the unsaturated compound (d).

The weight-average molecular weight of the Michael addition type urethane urea resin of the present invention (converted to standard polystyrene by GPC) is, preferably, from 1,000 to 200,000 and, more preferably, 5,000 to 150,000, but this depends on the use of the resin. Further, the number-average molecular weight is, preferably, from 1,000 to 150,000 and, more preferably, 4,000 to 100,000. If the molecular weight is too large, the viscosity is excessive making it difficult to handle. On the contrary, if the molecular weight is too small, function as a polymer is not manisfested.

The viscosity of the solution of the Michael addition type urethane urea resin has no particular restriction and may be selected depending on the use of the resin and it is preferably from 100 to 10,000 mPa·s (at 25°C) at 50 wt% solid content.

The Michael addition type urethane urea resin of the present invention includes the Michael addition type urethane urea resins obtained by the following two methods.

One is a method of reacting at least a urethane prepolymer (A) having terminal isocyanate groups which is obtained by reacting at least a polyol (a) and a polyisocyanate (b), with an amine compound (B) having at least two primary or secondary amino groups formed by Michael addition reaction of a polyamine (c) and an unsaturated compound (d) (production process 1). The Michael addition type urethane urea resin obtained by this method generally contains a bonded portion shown by the formula (1-1).

The other is a method of reacting a polyurethane urea (C) having terminal primary or secondary amino groups obtained by reacting at least a polyol (a), a polyisocyanate (b) and a polyamine (c) with an unsaturated compound (d) by Michael addition reaction (synthesis method 2). The Michael addition type urethane urea resin obtained by this method has a terminal portion shown by the formula (1-2). In this invention, the terminal end includes the terminal ends for the main chain and the side chain.

At first, starting materials used for the methods will be described.

< Starting Material >

(Polyol (a))

As the polyol (a), high molecular weight polyols, bisphenols such as bisphenol A or bisphenol F, glycols formed by adding an alkylene oxide such as ethylene oxide or propylene oxide to bisphenols, as well as other polyols can be used. Further, compounds having two or more active hydrogen groups obtained by reacting them with olefins or other compounds such as aromatic hydrocarbons can also be used. They may be used alone or two or more of them may be used together.

The high molecular weight polyols are compounds having repeating units with a polymerization degree of 2 or more and having two hydroxyl groups which can include, for example, urethane polyols having terminal hydroxyl groups formed by reacting polyester polyols, polyether polyols or polyether polyol and/or polyester polyol and less than an equi-molar amount of the following polyisocyanates.

The polyester polyols can be a known polyester polyol, for example, a polyester polyol obtained by a condensation reaction of a polyol component and a dibasic acid component. Examples of the polyol which is the monomer of the polyester polyol can include, for example, diols such as ethylene glycol, propylene glycol, dipropylene glycol, diethylene glycol, triethylene glycol, butylene glycol, 1,6-hexanediol, 3-methyl-1,5pentanediol, 3,3'-dimethylolheptane, polyoxyethylene glycol, polyoxypropylene glycol, 1,3-butanediol, 1,4-butanediol, neopentyl glycol, octanediol, butylethylpentanediol, 2-ethyl-1,3-hexanediol, cyclohexanediol and biephenol A; and polyols having three or more hydroxyl groups such as glycerine, trimethylolpropane and pentaerythritol. The dibasic acid component can include, for example, aliphatic or aromatic dibasic acids such as terephthalic acid, adipic acid, azelaic acid, sebacic acid, phthalic acid anhydride, isophthalic acid and trimellitic acid. Further, polyester polyols obtained by ring-opening polymerization of cyclic ester compounds such as ε -caprolactone poly(β-methyl- γ -valerolactone) and polyvalerolactone, polycarbonate polyols and silicon polyols can also be used as the polyester polyol.

The weight-average molecular weight of the polyester polyols is, preferably, from 1,000 to 5,000 and, more preferably, 1500 to 3500. The amount of them used is, preferably, from 0 to 50 mol% in the polyol as the starting material for the urethane prepolymer (A) or the polyurethane urea (C).

The polyether polyols can include known polyether polyol having two or more hydroxyl groups, for example, polymers, copolymers or graft copolymers of alkylene oxides, for example, tetrahydrofuran, ethylene oxide, propylene oxide and butylene oxide; polyether polyols obtained by condensation of hexanediol, methylhexanediol, heptanediol, octanediol or a mixture thereof; propoxylated or ethoxylated polyether polyols can be used.

As the polymerization initiator for polymerizing the alkylene oxide, polyether polyols as alcohols containing three or more hydroxyl groups, such as polypropylene glycol, ethylene glycol, glycerine, sorbitol, trimethylol propane, trimethylol butane, trimethylol ethane, 1,2,6-hexanetriol and pentaerithrytol can be used suitably. Partially estrified adduct of polyhydric alcohol and polyether polyol can also be used. In this case, the polyether moiety may be a block polymer or a random polymer. The partially esterified adduct of the polyhydric alcohol and the polyether polyol have terminal hydroxy groups but may have alkyloxy group or aromatic hydrocarbonoxy group in some parts.

The weight-average molecular weight of the polyether polyols is, preferably, from 100 to 100,000 and, more preferably, 500 to 25,000 and, more preferably, 1,000 to 10,000 for easily obtaining the effect of side chains. The amount of the polyether polyol used is preferably from 50 to 100 mol% in the polyol as the starting material for the urethane prepolymer (A) or polyurethane urea (C).

Other polyols can include, for example, compounds having two hydroxyl groups such as ethylene glycol, diethylene glycol, triethylene glycol, butane diol, propane diol, 1,6-hexanediol, neopentyl glycol, cyclohexane dimethanol, 3,9-bis(1,1-dimethyl-2-hydroxyethyl-2,2,8,10tetraoxospiro[5.5]undecane, and compounds having three or more hydroxyl groups such as glycerine, trimethylol propane, trimethylol ethane, pentaerythritol, sorbitol and methylglucoside.

Further, as the polyol (a), a polyol containing at least one ionic functional group other than the hydroxyl group may also be used. The ionic functional group can include, for example, those ionic groups such as quaternary ammonium group, carboxylate group, sulfonate group, sulfonic acid group, phosphonium group, phosphinic acid group and sulfuric acid ester group and precursor groups thereof. The precursor group is not an ionic group as is the carboxylic acid or tertiary amino group but rather a group easily converted into an ionic group by neutralizing or quartenarizing reaction with ammonia or tertiary amine, acetic acid or the like.

The polyol containing at least one ionic functional group other than the hydroxyl group is used suitably in that it makes the Michael addition type urethane urea resin aqueous, increases the reaction rate upon synthesis of the urethane prepolymer (A) or the polyurethane urea (C) and improves the film-forming property. Further, use of the polyol having the quaternary ammonium group or tertiary amine group is preferred in view of the improvement of the fixing property of an aqueous ink.

Specific examples of the polyol having at least one ionic functional group other than the hydroxyl group can

include, for example, carboxyl-group containing polyols such as 2,2-bis(hydroxymethyl) propionic acid, 2,2-bis(hydroxymethyl) butyric acid, 2,2-bis(hydroxymethyl) pentanoic acid, and 2,2-bis(hydroxymethyl) butanoic acid and tertiary amino group-containing polyols such as N,N-bis(2-hydroxypropyl) aniline and N-methyldiethanolamine.

Further, specific examples of polyols containing at least one ionic functional group other than the hydroxyl group can also include, for example, polyester polyols containing units of 2 sodium salt of glycerine monophosphate, sodium dimethylol phosphinate and sodium 5-sulfoisophthalate, carboxyl group-containing polyester polyol obtained by addition and/or condensation reaction of low molecular weight glycol and aliphatic or aromatic polybasic acid anhydride, and other carboxylic acid-containing polyols other than those described above formed by addition ring-opening polymerization of lactone using a dimethylol alkanoic acid as an initiator. Among them, polyols containing 2,2-bis(hydroxymethyl) propionic acid, 2,2-bis(hydroxymethyl) butyric acid, 2,2-bis(hydroxymethyl)pentanoic acid and, 2,2-bis (hydroxymethyl) butanoic acid or polyols containing tertiary amine group can be used suitably.

(Polyisocyanate (b))

As the polyisocyanate (b) used for this invention, known compounds can be used and can include, for example, aromatic polyisocyanate, chain or cyclic aliphatic polyisocyanate and araliphatic polyisocyanate.

The aromatic polyisocyanate can include, for example, 1,3-phenylene diisocyante, 4,4'-diphenyldiisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanate toluene, 1,3,5-triisocyanate benzene, dianisidine diisocyanate, 4,4'-diphenylether diisocyalante and 4,4',4"-triphenylmethane triisocyanate.

The chain aliphatic polyisocyanate can include, for example, trimethylene diisocyanate, tetramethylene diisocyanate, hexamethylene diisocyanate (HDI), pentamethylene diisocyanate, 1,2-propylene diisocyanate, 2,3-butylene diisocyanate, 1,3-butylene diisocyanate, dodecamethylene diisocyanate and 2,4,4-trimethylhexamethylene diisocyanate.

The cycloaliphatic polyisocyanate can include, for example, 3-isocyanatemethyl-3,5,5-trimethylcyclohexyl isocyanate (IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylene bis(cyclohexylisocyanate) and 1,4-bis(isocyanate methyl)cyclohexane.

The araliphatic polyisocyanate can include, for example, ω, ω'-diisocyanate-1,3-dimethylbenzene, ω, ω'-diisocyanate-1,4-dimethylbenzene, ω, ω'-diisocyanate-1,4-diethylbenzene, 1,4-tetramethylxylylene diisocyanate and 1,3-tetramethylxylylene diisocyanate.

Trimethylol propane adduct of the polyisocyanate described above or a trimer having an isocyanurate ring can also be used in combination with the polyisocyanate (b) described above.

Further, as the polyisocyanate (b), polyphenylmethane polyisocyanate (PAPI), naphthylene diisocyanate and a polyisocyanate modified product thereof can be used. Examples of the polyisocyanate modified product can include, those modified products having one or more of carbodiimide group, urethodione, urethoimine group, burette group reacted with water and isocyanurate group. The reaction product of a polyol and a diisocyanate can also be used as the polyisocyanate (b).

As the polyisocyanate (b) used in this invention, use of non-yellowing or low-yellowing polyisocyanate compounds is preferred in view of the weather proofness, for example, 4,4'-diphenylmethane diisocyanate, hexamethylene diisocyanate, 3-isocyanatemethyl-3,5,5-trimethylcyclohexyl isocyanate (isophorone diisocyanate), xylylene diisocyanate and 4,4'-methylenebis(cyclohexyl isocyanate) (hydrogenated MDI).

(Polyamine (c))

In this invention, the polyamine (c) is a compound having at least two primary or secondary amino groups which is used for synthesizing the amine compound (B) by Michael addition of an unsaturated compound (d) having at least one unsaturated group. Further, the polyamine (c) is used for synthesizing the urethane urea (C) having at least one primary or secondary terminal amino groups together with the polyol (a) and the polyisocyanate (b).

Known polyamines (c) can be used for this invention and can include, for example, aliphatic polyamine such as ethylene diamine, propylene diamine, trimethylene diamine, tetramethylene diamine, pentamethylene diamine, hexamethylene diamine, triethylene tetramine, diethylene triamine, triaminopropane, 2,2,4-trimethylhexamethylene diamine, tolylene diamine, hydrazine and piperadine, cycloaliphatic polyamines such as isophorone diamine and dicyclohexylmethane-4,4'-diamine, as well as aromatic polyamines such as phenylene diamine and xylylene diamine.

Further, diamines having hydroxyl groups in the molecule such as 2-hydroxylethyl ethylene diamine, N-(2-hydroxyethyl)propylene diamine, (2-hydroxyethylpropylene) diamine, (di-2-hydroxyethylethylene) diamine, (di-2-hydroxyethylpropylene) diamine, (2-hydroxypropylethylene) diamine and (di-2-hydroxypropylethylene) diamine, dimer diamines prepared by converting the carboxyl group of the dimer acid into the amino group, and polyoxyalkylene glycol

diamine having propoxy amines on both terminal ends and represented by the following formula (2) may also be used.

$$H_2\text{-}NCH_2\text{-}CH_2\text{-}CH_2\text{-}O(C_nH_{2n}\text{-}O)_m\text{-}CH_2\text{-}CH_2\text{-}CH_2\text{-}NH_2 \qquad (2)$$

(In the formula (2), n represents an integer between 2 and 4 and m represents an integer between 2 and 50).

Further, a dendrimer having terminal primary or secondary amino groups can also be used as the polyamine (c). The dendrimer can include a starburst conjugate described in Japanese Patent Application Publication No. 6-70132, Japanese Patent Application Publication No. 7-2840 and Japanese Patent Application Publication No. 7-108860 and shown by the following structural formula (iv) obtained by the step of a Michael addition of methyl acrylate to ammonia or ethylene diamine and further introducing a primary amino group to the terminal end by ester amide exchange reaction or by repeating the step so suitable; a propylene imine type dendrimer described in Japanese International Publication No. 8-512345 and 9-508170 and shown by the following structural formulae (i), (ii) and (v) obtained by the step of reacting butylene diamine and acrylonitrile and reducing the terminal nitril group to amine; an aromatic amideamine type dendrimer represented by the following structural formula (iii); a star-like or comb-branched aliphatic polyamino compound described in Japanese Patent Application Laid-Open No. 7-00084, and a polyamine obtained by the production process shown in Japanese Patent Application Laid-Open No. 8-48770, or 8-92369.

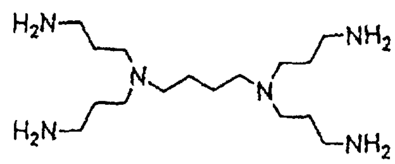

(i)

4-Cascade:1,4-Diaminobutane(4):propylamine

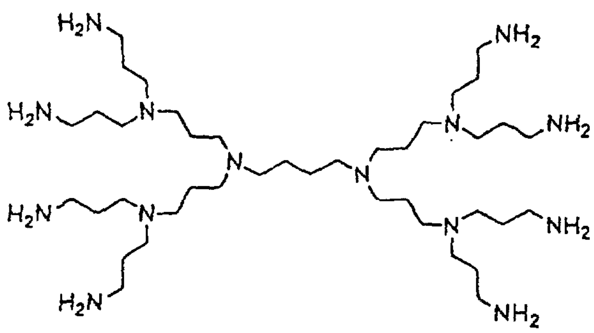

(ii)

8-Cascade:1,4-Diaminobutane(4):(1-azabutylidene)[4]propylamine

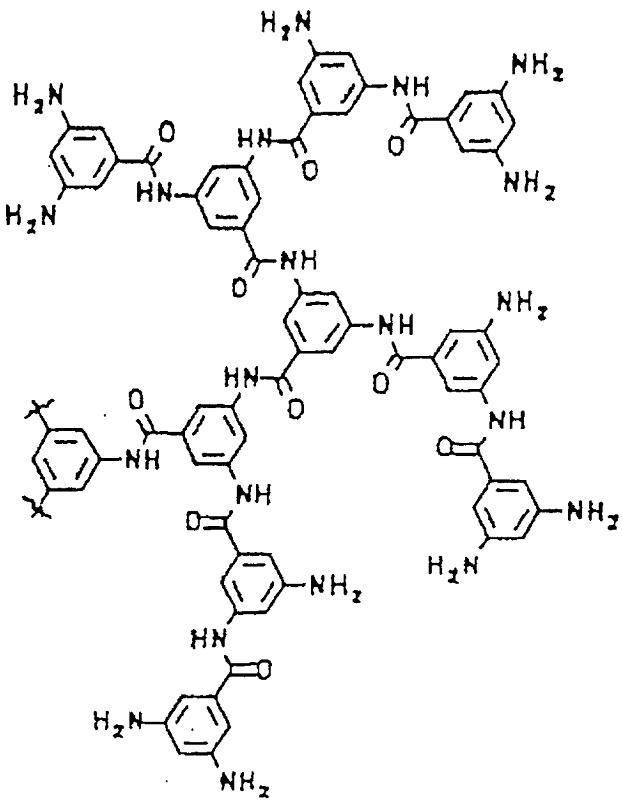

(iii)

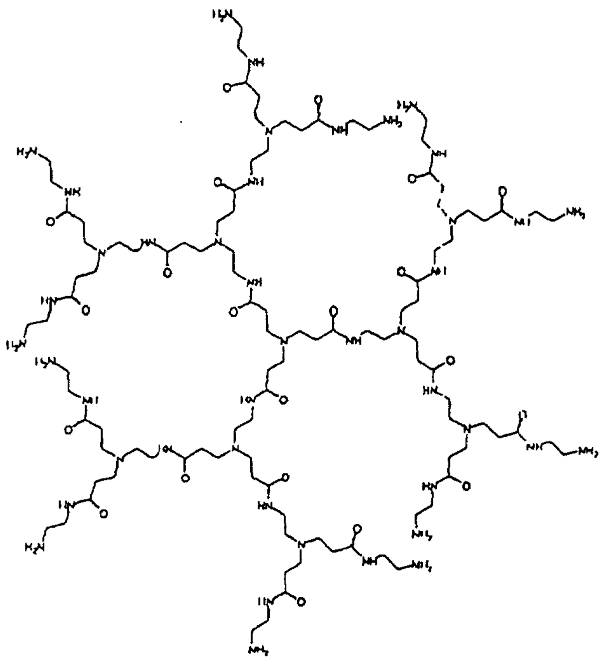

(iv)

12-Cascade:ammonia[3]:
(1,4-diaza-5-oxoheptylidene)$^2$:3-aza-4-oxohexylamine

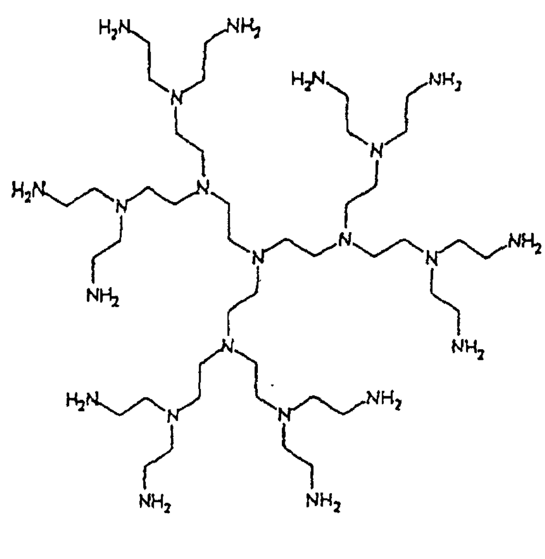

(v)

12-Cascade:ammonia[3]:(1-azapropylidene)$^2$:ethylamine

Among the polyamines (c) described above, isophorone diamine, 2,2,4-trimethylhexamethylene diamine and hexamethylene diamine are preferred since reaction control is easy. It is also preferable from a sanitary point of view. Further, since the polyoxyalkylene glycol diamine represented by the formula (2) can be effectively introduced into the polyethylene glycol chain, it is preferred in a case where the Michael addition type urethane urea resin of this invention is used in a coating agent for forming an aqueous ink receiving layer.

(Unsaturated compound (d))

The unsaturated compound (d) is used for modifying the urethane urea resin in this invention. Accordingly, the kind of the unsaturated compound (d) to be used can be suitably selected depending on the purpose of modification.
When the kind of the unsaturated compound (d) to be used is selected depending on the purpose of the modification, it is preferred that attention be paid to the functional group of the unsaturated compound (d). The functional group of the unsaturated compound (d) can include, for example, alkyl group, polyalkylene glycol group, alkoxy group, phenoxy group, hydroxyl group, carboxyl group, perfluoroalkyl group, alkoxy silyl group, epoxy group, as well as nitrogen-containing groups such as amide group, dialkylamide group and quaternary ammonium salt group.
The unsaturated compound can include, for example, (meth)acrylic unsaturated compound giving the residue having formula (3), an amide type unsaturated compound giving the residue having formula (4), a vinyl aliphatate type unsaturated compound giving the residue having formula (5), a vinyl etheric unsaturated compound giving the residue having formula (6), an allyl acetate type unsaturated compound giving the residue having formula (9), an allyl type unsaturated compound other than the allyl acetate type unsaturated compound and giving the residue having formula (8), a vinyl cyanide type unsaturated compound giving the residue having formula (10), a styrenic or vinyl benzenic type unsaturated compound giving the residue having formula (11), a cycloaliphatic olefinic unsaturated compound giving the residue having formula (12) and unsaturated compound other than the above, such as an $\alpha$ -olefinic unsaturated compound giving the residue having formula (7).
The (meth)acrylic alkyl group-containing unsaturated compound giving the residue having formula (3) can include those alkyl (meth)acrylates having 1 to 22 carbon atoms such as methyl (meth)acrylate, ethyl (meth)acrylate, propyl (meth)acrylate, butyl (meth)acrylate, pentyl (meth)acrylate, 2-ethylhexyl (meth)acrylate, heptyl (meth)acrylate, hexyl (meth)acrylate, octyl (meth)acrylate, nonyl (meth)acrylate, decyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, icosyl (meth)acrylate henicosyl (meth)acrylate and docosyl (meth)acrylate. When the object is to control the polarity, alkyl group-containing acrylate having an alkyl group of, preferably, from 2 to 10 carbon atoms and, more preferably, from 2 to 8 carbon atoms or corresponding methacrylate can be used. When the object is to control the leveling property, the number of carbon atoms is preferably 6 or more. When the polaritynumber of carbon atoms is 23 or more, depending on purpose, it may be difficult for the Michael addition reaction to progress.
The amide type unsaturated compound giving the residue having formula (4) can include, (meth)acrylamide, monoalkylol(meth)acrylamides such as N-methylol(meth)acrylamide, N-methoxymethyl-(meth)acrylamide, N-ethoxymethyl-(meth)acrylamide, N-propoxymethyl-(meth)acrylamide, N-butoxymethyl-(meth)acrylamide and N-pentoxymethyl-(meth)acrylamide and dialkylol(meth)acrylamides such as N,N-di(methylol)acrylamide, N-methylol-N-methoxymethyl(meth)acrylamide, N,N-di(methoxymethyl)acrylamide, N-ethoxymethyl-N-methoxymethylmethacrylamide, N,N-di(ethoxymethyl)acrylamide, N-ethoxymethyl-N-propoxymethylmethacrylamide, N,N-di(propoxymethyl)acrylamide, N-buthoxymethyl-N-(propyxymethyl)methacrylamide, N,N-di(buthoxymethyl)acrylamide, N-buthoxymethyl-N-(methoxymethyl)methacrylamide, N,N-di(pentoxymethyl)acrylamide and N-methoxymethyl-N-(pentoxymethyl) methacrylamide.
The vinyl aliphatate type alkyl group-containing unsaturated compound giving the residue having formula (5) can include, for example, vinyl acetate, vinyl butyrate, vinyl propionate, vinyl hexanoate, vinyl caprylate, vinyl laurate, vinyl palmitate and vinyl stearate.
The vinyl etheric alkyl group-containing unsaturated compound giving the residue having formula (6) can include, butyl vinyl ether and ethyl vinyl ether.
The allyl acetate type unsaturated compound giving the residue having formula (9) can include, for example, allyl acetate.
The allyl type unsaturated compound other than the allyl acetate type unsaturated compound giving the residue having formula (8) can include, for example, allylbenzene and allyl cyanide.
The vinyl cyanide type unsaturated compound giving the residue having formula (10) can include, for example, vinyl cyanide.
The styrene or vinyl benzene type unsaturated compound giving the residue having formula (11) can include, for example, styrene, $\alpha$-methylstyrene, 2-methylstyrene and chlorostyrene.
The alicyclic olefinic unsaturated compound giving the residue having formula (12) can include, for example,

vinylcyclohexane.

Other unsaturated compounds giving the residue having formula (7) can include, for example, α olefin type alkyl group-containing unsaturated compounds such as 1-hexene, 1-octene, 1-decene, 1-dodecene, 1-tetradecene and 1-hexadecene, and vinyl methyl ketone.

Further, the ethynyl compound can also be used as the unsaturated compound and can include, for example, acetylene, ethynylbenzene and ethynyltoluene.

Further, polyalkylene glycol group-containing unsaturated compounds can also be used and they can include, for example, diethylene glycol mono(meth)acrylate, triethylene glycol mono(meth)acrylate, tetraethylene glycol mono (meth)acrylate, hexaethylene glycol mono(meth)acrylate, polyethylene glycol mono(meth)acrylate, dipropylene mono (meth)acrylate, tripropylene glycol mono(meth)acrylate, tetrapropylene glycol mono(meth)acrylate and polytetramethylene glycol mono(meth)acrylate.

Further, polyalkyelene glycol group-containing unsaturated compounds having an alkoxy group at the terminal end can also be used and they can include, for example, methoxyethylene glycol (meth)acrylate, methoxydiethylene glycol (meth)acrylate, methoxytriethylene glycol (meth)acrylate, methoxytetraethylene glycol (meth)acrylate, ethoxytetraethylene glycol (meth)acrylate, propoxytetraethylene glycol (meth)acrylate, n-butoxytetraethylene glycol (meth) acrylate, n-pentoxytetraethylene glycol (meth)acrylate, tripropylene glycol (meth)acrylate, tetrapropylene glycol (meth) acrylate, methoxytripropylene glycol (meth)acrylate, methoxytetrapropylene glycol (meth)acrylate, ethoxytetrapropylene glycol (meth)acrylate, propoxytetrapropylene glycol (meth)acrylate, n-butoxytetrapropylene glycol (meth)acrylate, n-pentoxytetrapropylene glycol (meth)acrylate, polytetramethylene glycol (meth)acrylate, methoxypolytetramethylene glycol (meth)acrylate, methoxypolyethylene glycol (meth)acrylate, and ethoxypolyethylene glycol (meth)acrylate.

Further, polyalkylene glycol group-containing unsaturated compounds having phenoxy group at the terminal end can also be used and they can include, for example, phenoxydiethylene glycol (meth)acrylate, phenoxyethylene glycol (meth)acrylate, phenoxytriethylene glycol (meth)acrylate, phenoxytetraethylene glycol (meth)acrylate, phenoxyhexaethylene glycol (meth)acrylate, phnoxypolyethylene glycol (meth)acrylate, and phenoxytetrapropylene glycol (meth)acrylate.

With an aim of improving the affinity to other components, it is preferable to use an unsaturated compound (d) having from 2 to 25 and, more preferably, 4 to 22 polyalkylene glycol groups as repeating units.

Use of the alkyl group-containing unsaturated compound and the polyalkylene glycol group-containing unsaturated compound in combination is preferred for improving the affinity of the Michael addition type urethane urea resin to other components, in which the weight ratio between both of them is, preferably, from 1:99 to 50:50 and, more preferably, 5:95 to 20:80.

Hydroxyl group-containing unsaturated compounds other than those described above can also be used as the unsaturated compound (d) and they can include, for example,

2 - hydroxylethyl (meth)acrylate,
2-hydroxypropyl (meth)acrylate,
4-hydroxybutyl (meth)acrylate,
glycerol mono(meth)acrylate,
4-hydroxyvinylbenzene,
1-ethynyl-1-cyclohexanol and allyl alcohol.

Further, carboxyl group-containing unsaturated compounds can also be used and they can include, for example, maleic acid, fumaric acid, itaconic acid, citraconic acid and alkyl or alkenyl monoesters thereof, phthalic acid β-(meth)acryloxyethyl monoester, isophthalic acid β-(meth)acryloxyethyl monoester, terephthalic acid β-(meth)acryloxyethyl monoester, succinic acid β-(meth)acryloxyethyl monoester, acrylic acid, methacrylic acid, crotonic acid and cinnamic acid.

Dialkylamino group-containing unsaturated compounds can also be used and they can include, for example,

dimethylaminoethyl (meth)acrylate,
diethylaminoethyl (meth)acrylate,
methyl ethyl aminoethyl (meth)acrylate,
diethylamino styrene and diethylamiino styrene.

Further, a quaternary ammonium salt group-containing unsaturated compound obtained by quaternarizing the dialkylamino group-containing unsaturated compound and having halogen ion such as $Cl^-$, $Br^-$ or $I^-$ or $QSO_3^-$ (Q: alkyl group of 1 to 12 carbon atoms) as a counter ion can also be used and can include, for example, dimethylaminoethyl chloride (meth)acrylate, trimethyl-3-(1-(meth)acrylamide-1,1-dimethylpropyl)ammonium chloride, trimethyl-3-(1-(meth)acrylamidepropyl) ammonium chloride and trimethyl-3-(1-(meth)acrylamide-1,1-dimethylethyl)ammonium chloride. The quaternary ammonium salt group-containing unsaturated compound is used preferably when the Michael addition type urethane urea itself of this invention is provided with a cationic property, in which the quaternary ammonium salt group-containing unsaturated compound can be used for the unsaturated compound partially or entirely.

Perfluoroalkyl group-containing unsaturated compounds can also be used and they can include, for example, perfluoro alkyl (meth)acrylates having perfluoro alkyl group of 1 to 20 carbon atoms such as

perfluoromethylmethyl (meth)acrylate,
perfluoroethylmethyl (meth)acrylate,
2-perfluorobutylethyl (meth)acrylate,
2-perfluorohexylethyl (meth)acrylate,
2-perfluorooctylethyl (meth)acrylate,
2-perfluoroisononylethyl (meth)acrylate,
2-perfluorononylethyl (meth)acrylate,
2-perfluorodecylethyl (meth)acrylate,
perfluoropropylpropyl (meth)acrylate,
perfluorooctylpropyl (meth)acrylate, perfluorooctylamyl (meth)acrylate, and
perfluorooctylundecyl (meth)acrylate; and unsaturated compounds containing perfluoroalkyl group such as perfluoroalkyl alkylenes, such as perfluorobutylethylene,
perfluorohexylethylene, perfluorooctylethylene and perflurodecylethylene.

Further, unsaturated compounds having an alkoxysilyl group can also be used and they can include, for example, vinyl trichlorosilane, vinyl tris(β-methoxyethoxy)silane, vinyltriethoxy silane and γ-(meth)acryloxy propyltrimethoxy silane and derivatives thereof.

Further, epoxy group-containing unsaturated compounds such as glycidyl acrylate and 3,4-epoxycyclohexyl acrylate can also be used.

Further, when the Michael addition type urethane urea resin is provided with curability by actinic energy, an unsaturated compound (d) having two or more unsaturated groups can be used. Unsaturated compound (d) having two or more (meth)acryloyl group or one acryloyl group and one or more methacryloyl group as the unsaturated group can be used suitably as such.

More specifically, the unsaturated compound (d) having one acryloyl group and one or more methacryloyl group can include, for example, 2-hydroxy-3-acryloxypropyl methacrylate and unsaturated compound (d) having two or more (meth)acryloyl groups can include those having two or more functional groups such as

ethylene glycol di(meth)acrylate,
diethylene glycol di(meth)acrylate,
triethylene glycol di(meth)acrylate,
polyethylene glycol di(meth)acrylate,
polypropylene glycol di(meth)acrylate,
1,3-butanediol di(meth)acrylate,
1,4-butanediol di(meth)acrylate,
neopentyl glycol di(meth)acrylate,
1,6-hexanediol di(meth)acrylate
trimethylolethane (meth)acrylate,
tetramethylolmethane tri(meth)acrylate,
dipentaerythritol alkylate (meth)acrylate,
Actilane 421 (AKCROS CHEMICAL), and
Actilane 423 (AKCROS CHEMICAL).

The unsaturated compounds (d) can be used alone or two or more of them can be used in combination.

< Synthesis Method 1 >

The Synthesis Method 1 includes a step (a) of reacting a polyol (a) and a polyisocyanate (b) to prepare a urethane prepolymer (A) having terminal isocyanate group, a step (b) of reacting a polyamine (c) and an unsaturated compound (d) by Michael addition to prepare an amine compound (B) having at least two primary or secondary amino groups, and a step (c) of reacting the urethane prepolymer (A) and the amino compound (B) to prepare a Michael addition type urethane urea resin.

(Step a)

This step is a step of synthesizing the urethane prepolymer (A) having at least one terminal isocyanate group. As the starting materials for the urethane prepolymer (A), a polyamine (c), water and a compound (e') having a group capable of reacting with the isocyanate group and the ionic group described above may be used optionally in addition to the polyol (a) and the polyisocyanate (b).
The compound (e') having the group capable of reacting the isocyanate group and the ionic group described above can include, for example, diamino carboxylic acid, sodium diamino benzene sulfonate, sodium hydroxyethyl phosphonate and N-methylethanol amine.
Various methods are usable for the step (a) and they can be generally classified into the following two methods.

(1) A method of preparing a solution containing a polyol (a), a polyisocyanate (b) and, optionally, a compound (e') having a group capable of reacting with an isocyanate group and an ionic group, a solvent and a catalyst, and reacting the polyol (a), the polyisocynate (b) and, if any, the compound (e') having the group capable of reacting with the isocyanate group and the ionic group.
(2) A method of mixing a polyol (a) and, optionally, a compound (e') having a group capable of reacting with an isocyanate group and an ionic group and a solvent, dropping a polyisocyanate (b) into the mixture and then optionally adding a catalyst.

When the reaction is to be controlled accurately, (2) is preferred. The reaction temperature in the step (a) is, preferably, from 0 to 120°C and, more preferably, 50 to 110°C. If it is higher than 120°C, it is difficult to control the reaction rate, and thus a urethane prepolymer having predetermined weight-average molecular weight and structure can not be obtained. The step (a) is preferably conducted in the presence of a catalyst at 50 to 110°C for 1 to 20 hours.
The blending ratio for the polyol (a) and the polyisocyanate (b) is selected, for example, in accordance with the reactivity of the compounds, the ratio of tri-valent compounds or compounds with higher valents in the polyol (a) or the polyisocyanate, and the purpose for which the obtained resin is used. For incorporating at least one isocyante group in the urethane prepolymer, it is necessary that the isocyanate groups of the polyisocyanate (b) is one mol or more based on one mol of the functional groups capable of reacting with the isocyanate groups of the polyol (a) or the compound (e'), and it is within a range from 1.01 to 4.00 mol and, more preferably, from 1.40 to 3.00 mol.
As the catalyst usable for the step (a), a known catalyst, for example, tertiary amine compounds and organic metal compounds can be used.
Examples of the tertiary amine compounds can include triethylamine, triethylenediamine, N,N-dimethyl benzylamine, N-methylmorpholine and diazabicycloundecene (DBU), which may be used alone or in combination.
Examples of the organic metal compound include tin compounds and non-tin compounds.
Examples of the tin compounds can include dibutyl tin dichloride, dibutyl tin oxide, dibutyl tin dibromide, dibutyl tin dimaleate, dibutyl tin dilaurate (DBTDL), dibultyl tin diacetate, dibutyl tin sulfide, tributyl tin sulfide, tributyl tin oxide, tributyl tin acetate, triethyl tin ethoxide, tributyl tin ethoxide, dioctyl tin oxide, tributyl tin chloride, tributyl tin trichloroacetate and tin 2-ethylhexanoate.
Examples of the non-tin compound can include titanium compound such as dibutyl titanium dichloride, tetrabutyl titanate and butoxy titanium trichloride, lead compounds such as lead oleate, lead 2-ethylhexanoate, lead benzoate and lead naphthate, iron compounds such as iron 2-ethylhexanoate and iron acetylacetonate, cobalt compounds such as cobalt benzoate and cobalt 2-ethylhexanoate, zinc compounds such as zinc naphthate and zinc 2-ethylhexanoate and zoiconium naphthate.
Among the catalysts described above, dibutyl tin dilaurate (DBTDL) and tin 2-ethylhexanoate are preferred in view of sanitation and high reactivity.
The catalyst such as the tertiary amine compound and the organic metal compounds can be used alone or in combination and, particularly, in a case of using polyester diols and polyether diols in combination, it is preferred to use dibutyl tin dilaurate and tin 2-ethylhexanoate in combination since homogeneous urethane prepolymer (A) can be obtained stably.
The organic metal compound catalyst used at the time of synthesis of the urethane prepolymer (A) remarkably promotes the reaction when further reacted with the amine compound (B). The reaction between the isocyanate group and the amino group is extremely fast by nature but the reaction is further promoted sometimes by the presence of the organic metal compound catalyst making the control difficult. When a chelate compound is present in such a case, it forms a chelate with the organic metal compound catalyst and reaction with the amine compound (B) can be controlled easily by adjusting the catalytic activity.
The chelate compound can include, for example, acetyl acetone, dimethylglyoxime, oxine, dithizone, polyaminooxy acid such as ethylenediamine tetraacetic acid (EDTA), oxycarboxylic acid such as citric acid and condensated phosphoric acid. Among the chelate compounds, acetyl acetone is preferred since it is soluble in an organic solvent

and has volatility and can be removed easily if necessary.

Further, the chelate compound remains in the polyurethane urea resin also after the reaction. When the polyurethane resin of this invention is used as an adhesive, it is preferred to further add a curing agent, in which the chelate compound also controls the reaction rate between the polyurethane urea resin and the curing agent to provide an adhesive having excellent storage stability.

Known solvents can be used suitably upon synthesis of the polyurethane prepolymer (A) of this invention. The solvent serves to facilitate the control of reaction. The solvent used for such a purpose can include, for example, methyl ethyl ketone, ethyl acetate, toluene, xylene, acetone, benzene, dioxane, acetonitrile, tetrahydrofuran, diglyme, dimethyl sulfoxide, N-methyl pyrrolidone and dimethyl formamide. Particularly, ethyl acetate, toluene, methyl ethyl ketone or a mixed solvent thereof is preferred in view of the solubility of the Michael addition type urethane urea resin, boiling point of the solvent and the solubility of the amine compound (B). Further, when the solvent is used, the concentration of the solid resin content in the reaction system is, preferably, from 50 to 95% by weight and, more preferably, 60 to 90% by weight. Excessively low concentration is not preferred since the reactivity is lowered excessively.

(Step b)

This step is a step of reacting the polyamine (c) and the unsaturated compound (b) by Michael addition to prepare an amine compound (B) having at least two primary or secondary amino groups. The amine compound (B) is used as the starting material for the urea-forming reaction for the modification of the urethane resin.

In the Michael addition reaction of the polyamine (c) and the unsaturated compound (d), 1 molar equivalent of active hydrogen of the amino groups in the polyamine (c) and 1 molar equivalent of the unsaturated groups in the unsaturated compound (d) are reacted. Since the polyamine (c) can easily conduct Michael addition with the vinyl group or ethynyl group of the compound having an electron attracting group, a (meth)acrylic compound, particularly, an acrylate compound is preferred as the compound (d). Further, comparing the acrylate compound and the corresponding methacrylate compound, the acrylate compound is more preferred in view of its higher efficiency for the Michael addition reaction.

Further, as the method of synthesizing the amine compound (B), known method for the Michael addition reaction can be used as it is. When the unsaturated compound is a (meth)acryl compound, particularly, an acrylate compound, the reaction proceeds at 10 to 100°C by optionally using an alcohol or the like as a catalyst. Depending on the type of the unsaturated compound to be used, a reaction temperature of about 40 to 80°C is preferred. Excessively high reaction temperature is not preferred since an ester amide exchange reaction is caused. Further, when the unsaturated compound has no electron attracting group, the reaction is possible in the presence of a metal catalyst, in which an appropriate reaction rate is preferably attained when reaction is carried out at a temperature from 60 to 100°C in the presence of a metal catalyst. Further, the solvent may or may not be used and when used, the type used is not particularly restricted. Known solvents such as methyl ethyl ketone, toluene, acetone and benzene can be used. Further, when a hydroxyl group is not contained in the unsaturated compound (d) or the polyamine (c) used, it is preferred to use an alcoholic solvent such as methanol, ethanol, isopropanol, isobutanol, n-butanol, or a mixed solvent thereof. The concentration of the reactants in the solution when the reaction solvent is used is, preferably, 20% or more and, more preferably, 50% or more. A lower concentration is not preferred, since the reaction proceeds with difficulty. Further, the reaction time is from 30 min. to 5 hours, but may vary depending on the kind of the unsaturated compound used.

In the step (b), the ratio between the polyamine (c) and the unsaturated compound (d) added thereto is different depending on the purpose of using the amine compound (B).

For obtaining an amine compound (B) having at least two primary or secondary amino groups, it is preferred to react the unsaturated compound at a ratio, preferably, from 0.1 to 1.0 mol and, more preferably, 0.2 to 0.98 mol based on one mol of the primary amino groups of the polyamine (c). Less than 0.1 mol of the unsaturated compound is not preferred since obtaining the effects the side chains become difficult and the storage stability is poor.

(Step c)

This step is a step of reacting the urethane prepolymer (A) and the amine compound (B) to prepare a Michael addition type urethane urea resin, in which a polyamine (c) or a reaction stopper (f) may optionally be added.

The urea-forming reaction between the urethane prepolymer (A) and the amine compound (B) is conducted by (1) a method of dropping a solution comprising an amine compound (B) into a solution comprising a urethane prepolymer (A) or (2) a method of charging a solution comprising the amine compound (B) into a flask, and dropping the solution of the urethane prepolymer (A) therein.

The method, in which a stable reaction can be conducted, is selected depending on the case and, generally, the method (1) in which the operation is easy is preferred. The temperature for the urea-forming reaction in this invention

is, preferably, 100°C or lower. It is further, preferably, 70°C or lower. When the reaction rate is high and can not be controlled even at 70°C, 50°C or lower is further preferred. When it is higher than 100°C, controling the reaction rate is difficult and it is difficult to obtain a Michael addition type urethane urea resin having predetermined molecular weight and structure.

A solvent can be used in this step and the examples of the solvents are the same as those for the step (B).

Further, when an alcoholic solvent is used as a solvent for synthesizing the amine compound (B), the temperature in the reaction system is controlled, preferably, to 50°C or lower and, more preferably, 40°C or lower at the time of dropping in the amine compound (B).

The reaction stopper (f) has a function of controlling the molecular weight or reacting with isocyanate groups remaining at the terminal ends of the Michael addition type urethane urea resin in order to stabilize the reactivity of the resin.

The reaction stopper (f) used in this invention can include, for example, dialkyl amines such as diethyl amine, di-n-butylamine, di-n-octylamine, dicyclohexylamine and diisononylamine, monoamines having a hydroxyl group such as monoethanolamine, diethanolamine, 2-amino-2-methyl-1-propanol, tri(hydroxymethyl)amino methane and 2-amino-2-ethyl-1,3-propanediol, alkyl hydrazines such as monomethyl hydrazine, 1,1-dimethyl hydrazine and benzyl hydrazine, hydrazides such as formhydrazide, acetohydrazide and lauric hydrazide, monoamine compounds having tertiary amino group and primary amino group on one side such as N,N-dimethyl-1,3-propanediamine and N,N-diethyl-1,3-propanediamine, as well monoamine compounds having alkoxysilyl group such as γ-aminopropyltriethoxy silane can also be used. When the amine compound obtained from the polyamine (c) and the unsaturated compound (d) has only one primary or secondary amino group, the amine compound is used as the reaction stopper (f). In this case, the obtained Michael addition type urethane urea resin has a terminal structure shown by the formula (1-2) above.

For obtaining the amine compound having one primary or secondary amino group, the ratio for the unsaturated compound (d) and the polyamine (c) is selected such that (number of moles of active hydrogen of the primary or secondary amino groups in the polyamine (c)) - (number of moles of the unsaturated compound (d)) is from 0.9 to 1.2 and, preferably, 0.95 to 1.1. If the difference is 0.9 or less, there is a high possibility that two or more primary or secondary amino groups remain or a high possibility that no amino groups remain.

Among the reaction stoppers (f), monoamines having a hydroxyl group such as 2-amino-2-methyl-propanol can form a Michael addition type urethane urea resin having terminal hydroxyl groups excellent in storage stability. Further, the Michael addition type urethane urea resin having terminal hydroxyl groups is preferred since the terminal hydroxyl groups function as crosslinking sites at the time of crosslinking by the addition of a polyisocyanate curing agent. In the case of the monoamine having a hydroxyl group, both of the amino group and the hydroxyl group can react with the terminal isocyanate groups in the Michael addition type urethane urea resin, in which the amino group shows higher reactivity and reacts preferentially with the isocyanate group.

Further, an amine compound having a tertiary amino group and a primary amino group such as N,N-dimethyl-1,3-propanediamine or N,N-diethyl-1,3-propanediamine can be used suitably for the introduction of cationic groups to the terminal ends of the Michael addition urethane urea resin.

In this step, polyamine (c) and an amine compound having one primary or secondary amino group as the reaction stopper (f) can also be used in addition to the amine compound (B) as described above. The blending ratio for the amino group containing compound and the urethane prepolymer (A) has no particular restriction and it is selected optionally depending on the use and the required functions. Usually, the number of moles of the amino groups in the amino group containing compound based on one mol of the isocyanate groups in the urethane prepolymer (A) is, preferably, from 0.70 to 0.97 and, more preferably, 0.8 to 0.96 where the isocyanate group is used in excess of the amino group and, preferably, from 1.001 to 1.40 and, more preferably, from 1.01 to 1.2 where the amino group is used in excess of the isocyanate group. A ratio out of this range is not preferred since a predetermined molecular weight can not be obtained.

The amount of the reaction stopper (f) used is different depending on whether the amine compound (B) or the polyamine (c) are admixed with the reaction stopper (f) and then added to the reation systems, or the reaction stopper is added solely at the end, but is generally, from 0 to 0.5 mol and, preferably, 0.01 to 0.3 mol based on one mol of the isocyanate groups in the urethane prepolymer (A) when added after admixture, and it is from 0.5 to 3.0 mol when added solely at the end and, particularly, from 1 to 3.0 mol when the resin is to be stabilized, based on one mol of the isocyanate groups present finally. If the amount of the reaction stopper is not within range described above, undesired effects such as lowering of the film forming performance and discoloration or coloration are observed.

The end point of the reaction is judged in accordance with measurement for isocyante % by titration or confirming of disappearance of the isocyanate peak by IR measurement.

< Synthesis Method 2 >

The Synthesis Method 2 includes a step (d) of reacting a polyol (a), a polyisocyanate (b) and a polyamine (c)

to prepare a polyurethane urea (C) having at least one primary or secondary amino group at the terminal end and a step (e) of reacting the unsaturated compound (d) to the polyurethane urea (C) by Michael addition.

(Step d)

This step is a step of reacting a polyol (a), polyisocyanate (b) and a polyamine (c) to synthesize a polyurethane urea (C) having at least one primary or secondary amino group on the terminal end. As the starting materials for the polyurethane urea (C), the amine compound (B) and the compound (e') having the group capable of reacting with the isocyanate group and the ionic group described above may be used in addition to the polyol (a), the polyisocyanate (b) and the polyamine (c). Further, although the reaction stopper (f) can also be used, it is preferably not used.

In the step (d), the polyol (a) and the polyisocyanate (b) are at first reacted to synthesize the urethane prepolymer (A) having the terminal isocyanate group, in the same manner as in the step (a) and then the urethane prepolymer (A), the polyamine (c) and, optionally, the reaction stopper (f) are reacted.

The conditions at the time of synthesizing the urethane prepolymer (A) are identical with those for the step (a).

When the urethane prepolymer (A), the polyamine (c) and, optionally, the reaction stopper (f) are reacted, there can be used, for example, (1) a method of mixing the urethane prepolymer (A), the polyamine (c) and, optionally, the reaction stopper (f) and then reacting them, or (2) a method of reacting the urethane prepolymer (A) and the polyamine (c) and then mixing the reaction product further with the polyamine (c) and, optionally, the reaction stopper (f) and reacting them.

The temperature for reacting the urethane prepolymer (A), the polyamine (c) and, optionally, the reaction stopper (f) is identical with the reaction temperature for the step (c).

In this step, the blending ratio for the amino group-containing compound, that is, the polyamine (c) and the amine compound having one primary or secondary amino group as the reaction stopper (f), and the urethane prepolymer (A) is not restricted particularly and selected optionally depending on the use and the required function. In the case of using the production method (1) above, the number of moles of the amino group in the amino group-containing compound based on one mol of the isocyanate groups in the urethane prepolymer (A) is, preferably, from 1.001 to 1.40 and, more preferably, 1.01 to 1.2. Further, in a case of adopting the production method (2) above, the number of moles of the amino groups in the polyamine (c) added at first based on one mol of the isocyanate groups in the urethane prepolymer (A) is, preferably, from 0.70 to 0.97 and, more preferably, 0.8 to 0.96. Subsequently, the polyamine (c) and the reaction stopper (f) are added such that the number of moles of the amino groups of the entire amino group-containing compounds used in this step based on one mol of the isocyanate groups in the urethane prepolymer (A) is, preferably, from 1.001 to 1.40 and, more preferably, 1,01 to 1.2.

The end point of the reaction is judged in accordance with measurement for isocyanate % by titration or confirming of disappearance of the isocyanate peak by IR measurement.

(Step e)

The step is a step of adding the unsaturated compound (d) to the polyurethane urea (C) by a Michael addition reaction.

The ratio of the primary or secondary amino groups contained in the polyurethane urea (C) and the unsaturated compound (d) is not specified and it is desirable that the unsaturated compound is at a ratio of, preferably, from 0.1 to 1.0 and, more preferably, 0.5 to 0.98 mol based on one mol of the active hydrogen of the primary or secondary amino groups contained in the polyurethane urea (C). If the unsaturated compound is 0.1 mol or less, manifestation of modification effect is difficult.

< Use >

The Michael addition type urethane urea resin of this invention can be used, for example, for coating materials such as various kinds of surface treatment agents, for example, paint, ink binder, overcoat varnish, antistatic agent, anti-clouding agent or water repellent and oil repellent agent, surface treatment material such as adhesive and bonding agents, fine particle dispersant such as those for organic or inorganic pigment and compatibilizing agent. Particularly, the Michael addition type urethane urea resin produced by the Synthesis Method 1 can be used particularly suitably for adhesives to be described later, laminates using these resins, coating agents for forming ink receiving layers and recording materials using them.

When the Michael addition type urethane urea resin of this invention is used as described above, for the purpose of block prevention, curl prevention, adjustment of surface gloss, improvement of weather-resistance, improvement of soaking property of an ink drop, it is possible to blend the Michael addition type urethane urea resin with one or more of other resins, for example, thermoplastic resins such as acrylic resin, polyamide, epoxy resin, polyurethane

resin, polyvinyl acetate, polyvinyl acetal, polystyrene, fluoro resin, polycarbonate, polyether, polyisobutylene, petroleum resin, rosin, nitrocellulose, sugar ester, vinyl chloride/vinyl acetate copolymer, ethylene/vinyl acetate copolymer, α -olefin/maleic anhydride copolymer and styrene/maleic acid anhydride copolymer, and phenol resin, urea resin, melamine resin, amino resin, polyester resin, alkyd resin, silicon resin and epoxy resin, as well as ultraviolet ray- or electron ray-curable resins such as epoxy acrylate, polyester acrylate, urethane acrylate, polyether acrylate and phosphazene resin, so as not to hinder the purpose of the invention.

Further, if necessary, one or more of additives, for example, fillers such as talc, calcium carbonate and titanium oxide, tackifier, light decomposing agent, biodegradation promotor, UV-ray absorbent and fluorescent dyes such as fluorescent whitener, pigmenting dye, colorant, viscosity improver, defoaming agent, leveling agent, crater preventive agent, settling preventive agent, antioxidant, light stabilizer, flame retardant, wax and heat stabilizer can be suitably added.

The light decomposing agent can include, for example, benzoins, benzoin alkyl ethers, benzophenone and derivatives thereof, acetophenone and derivatives thereof, quinones, thioxanthones, phthalocyanine, anatase type titanium oxide, ethylene - carbon monoxide copolymer and sensitizers of aromatic ketone and metal salt.

The biodegradation promotor can include, for example, organic acids such as oxo acids and saturated dicarboxylic acids and lower alkyl esters of such organic acids and alcohols having about 1 to 4 carbon atoms.

The oxo acid can include, for example, those oxo acids having about 2 to 6 carbon atoms such as glycolic acid, lactic acid, citric acid, tartaric acid and malic acid.

The saturated dicarboxylic acids can include lower saturated dicarboxylic acids having about 2 to 6 carbon atoms such as oxalic acid, malonic acid, succinic acid, succinic acid anhydride and glutaric acid.

As the degradation inhibitor used in this invention, at least one selected from the group consisting of antioxidant, UV-ray absorbent and light stabilizer is used.

Examples of the antioxidant used in this invention include, a radical chain inhibitor (primary antioxidant) and an peroxide decomposing agent (secondary antioxidant).

Examples of the radical chain inhibitor (primary antioxidant) include phenolic antioxidant and amine type antioxidant.

Examples of the peroxide decomposing agent (secondary antioxidant) include sulfur type antioxidant and phospholic antioxidant.

Examples of the phenolic type antioxidant include monophenol type, bisphenol type and polymeric phenol antioxidant.

Examples of the monophenol type antioxidant include 2,6-di-t-butyl-p-cresol, butylated hydroxyanisol, 2,6-di-t-butyl-4-ethylphenol and stearin-β-(3,5-di-t-butyl-4-hydroxyphenyl)propionate.

Examples of the bisphenol type antioxidant include 2,2'-methylene bis(4-methyl-6-t-butylphenol), 2,2'-methylene bis(4-ethyl-6-t-butylphenol), 4,4'-thiobis(3-methyl-6-t-butylphenol), 4,4'-butylidene bis(3-methyl-6-t-butylphenol), 3,9-bis[1,1-dimethyl-2-[β-(3-t-butyl-4-hydroxy-5-methylphenyl)propyonyloxy]ethyl]2,4,8,10-tetraoxaspiro [5,5]undecane.

Examples of the polymeric phenol type antioxidant include 1,1,3-tris(2-methyl-4-hydroxy-5-t-butylphenyl)butane, 1,3,5-trimethyl-2,4,6-tris(3,5-di-t-butyl-4-hydroxybenzyl)benzene, tetrakis-[methylene-3-(3',5'-di-t-butyl-4'-hydroxyphenyl)propionate]methane, bis[3,3'-bis-(4'-hydroxy-3'-t-butylphenyl)butylic acid]glycolester, 1,3,5-tris(3',5'-di-t-butyl-4'-hydroxybenzyl)-S-triazine-2,4,6-(1H, 3H, 5H)trion and tocophenol. IRGANOX L 135 (Ciba Specialty Chemicals Co. Ltd) is particularly preferred in view of the compatibility with the resin.

The sulfur type antioxidant can include, for example, dilauryl 3,3'-thiodipropionate, dimirystyl 3,3'-thiodipropionate and distearyl 3,3'-thiodipropionate.

The phospholic antioxidant can include, for example, triphenyl phosphite, diphenyl isodecylphosphite and phenyldiisodecylphosphite.

The UV-ray absorbent used in this invention can include, for example, benzophenoen type, benzotrizole type, salycilic acid type, oxalic anilide type, cyanoacrylate type and triazine type UV-ray absorbers.

The benzophenone type UV-ray absorbent can include, for example, 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-dimethoxybenozphenone, 2,2'-dihydroxy-4,4'-dimethoxybenzophenone, 2-hydroxy-4-methoxy-5-sulphobenzophenone and bis(2-methoxy-4-hydroxy-5-benzoylphenyl)methane.

The benzotriazole type UV-type absorbent can include, for example, 2-(2'-hydorxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6"-tetrahydrophthalimidemethyl)-5'-methylphenyl]benzotriazole, 2,2'-methylene bis[4-(1,1,3,3-tetramethylbutyl)-6-(2H-benzotriazole-2-yl)phenol] and [2(2'-hydroxy-5'-methacryloxyphenyl)-2H-benzotriazole. TUNUVIN 571 (Ciba Specialty Chemicals Co. Ltd.) is especially preferred in view of the compatibility with the resin.

The salycilic acid type UV-ray absorbent can include, for example, phenyl salicylate, p-tert-butylphenyl salicylate and p-octylphenyl salicylate.

The cyanoacrylate type UV-ray absorbent can include, for example, 2-ethylhexyl-2-cyano-3,3'-diphenylacrylate and ethyl-2-cyano-3,3'-diphenylacrylate.

The light stabilizer used in this invention can include, for example, hindered amine type light stabilizer and UV-ray stabilizer.

Examples of the hindered amine type light stabilizer can include [bis(2,2,6,6-tetramethyl-4-piperidyl)sebacate], bis(1,2,2,6,6-pentamethyl-4-piperidyl)sebacate and methyl 1,2,2,6,6-pentamethyl-4-piperidylsebacate. Trade names of products can include, for example, TINUVIN 765 (Ciba Specialty Chemicals Co. Ltd.), Adecastab LA-77 (Asahi Denka), Chimassorb 944LD (Ciba Specialty Chemicals Co. Ltd.), TINUVIN 622LD (Ciba Specialty Chemicals Co. Ltd.), TINUVIN 144 (Ciba Specialty Chemicals Co. Ltd.), Adecastab LA-57 (Asahi Denka), Adecastab LA-62(Asahi Denka), Adecastab LA-67(Asahi Denka), Adecastab LA-63(Asahi Denka), Adecastab LA-68(Asahi Denka), Adecastab LA-82(Asahi Denka), Adecastab LA-87(Asahi Denka) and Goodrite UV-3034 (Goodrich). TINUVIN 765 (Ciba Specialty Chemicals Co. Ltd.) is particularly preferred in view of the compatibility with resin.

The UV-ray stabilizer can include, for example, nickel bis(octylphenyl)sulfide, [2,2'-thiobis(4-tert-octylphenolate)]-n-butylamine nickel, nickel complex-3,5-di-tert-butyl-4-hydroxybenzyl-monoethylate phosphate, nickel-dibutylthiocarbamate, benzoate type quencher and nickel-dibutyldithiocarbamate.

The degradation inhibitor can include the antioxidant, the UV-ray absorbent and/or light stabilizer in combination. TINUVIN B 75 (Ciba Specialty Chemicals Co.) contains IRGANOX L 135 (Ciba Specialty Chemicals Co.), TINUVIN 571 (Ciba Specialty Chemicals Co.) and TINUVIN 765 (Ciba Specialty Chemicals Co.) and can be used preferably without interference of the effects of each other. The amount of use is, preferably, from 0 to 10% by weight based on the solid content.

In the Michael addition type urethane urea resin of this invention, when a compound having two or more unsaturated groups is used as the unsaturated compound (d), a portion of the unsaturated group may sometimes remain wich did not undergo Michael addition reaction. The unsaturated groups which remain can be cured by using an actinic energy ray irradiation device. When a photopolymerization initiator or the like is used the photo curability is further improved.

There is no particular restriction for the photopolymerization initiator used in this invention so long as it is a substance having a function capable of initiating vinyl polymerization by photo-excitation. The mechanism for generating radicals under the irradiation of ultraviolet rays can include two types, that is, a light cleaving system and hydrogen extraction system.

The light cleaving system can include those having an acetophenone structure such as benzoin, acetophenone, and derivatives thereof.

The hydrogen extraction system can include those having thioxanthone structure such as thioxanthone, peroxide, and derivatives thereof.

Those having the acetophenone structure can include, for example, benzoin methyl ether, benzoin ethyl ether, benzoin ispropyl ether, benzoin butyl ether, benzoin isobutyl ether, benzoin, 4,4-bisdimethylaminobenzophenone, 2,2-dietoxyacetophenone, benzyl methyl ketal, benzoin ether, ethoxyacetophenone, acyloxyme ester, chlorinated acetophenone, hydroxy acetophenone, 1-hydroxycyclohexyl phenyl ketone, acylphosphine oxides, with no particular restriction to them. 1-hydroxycyclohexyl phenyl ketone is particularly preferred in view of the compatibility with the resin.

Those having the thioxanthone structure can include, for example, benzophenone, Michler's ketone, methyl o-benzoylbenzoate, dibenzosuberone, 2-ethylanthraquinone, thioxanthone, isobutylthoxanthone and benzyl, with no particular restriction to them.

As the actinic energy ray irradiation device used in this invention, commercially available irradiation devices can be used. The actinic energy ray irradiation device can include those irradiating ultraviolet rays, visible rays and electron beams. UV-ray irradiation type irradiation device is preferred.

For the UV-ray irradiation device, commercially available irradiation devices can be used. The principle of an optical source for irradiation UV-rays can include, for example, discharge lamp system, flash system, laser system and non-electrode lamp system.

Use of this invention will be descrived in details.

(Adhesive)

Adhesives are generally grouped into acrylic resin type and rubber type when classified based on the constituent starting materials but these have the following drawbacks. While the acrylic resin adhesive is excellent in adhesive property, once it has been adhered it can not be sufficiently easily peeled off again for general industrial use and odor or skin irritation is too strong for medical use and further improvement has been desired for both of them. Addition of a low molecular material such as a plasticizer is indispensable for ensuring performance of the rubber

adhesive but the low molecular weight material causes bleeding after the lapse of long time thereby causing remarkable deterioration of performance.

In recent years, acrylic resin adhesives whose performance can be relatively easy controlled are common but problems such as peeling subsequent to adhesion, odor and skin irritation have not yet been solved. With respect to peeling subsequent to adhesion, it is inevitable in the present situation for "glue residue" to be generated when the acrylic resin adhesives are applied to adherends and then peeled from the adherends after the lapse of several days in that the adhesion strength increases and resins transfer to the adherends.

The acrylic resin adhesives have been improved in various ways and one of effective countermeasures is to allow a second peeling by making the adhesives mildly adhesive by imparting an adhesive strength of 39.4 g/cm width (100 g/inch width) or less. However, it is extremely difficult to obtain a mildly adhesive, acrylic resin adhesive having extremely small adhesive strength and the holding strength of this acrylic resin adhesive is often insufficient. Also, the adhesive strength varies depending on the amount of the curing agent added. When a sheet coated with an adhesive is affixed to a window glass, mild adhesion is necessary in order to affix the sheet smoothly with no air bubbles, and this is difficult with the acrylic resin adhesive. Further, although there has been a strong demand on the market for the development of an adhesive which allows peeling subsequent to adhesion, and which has medium adhesive strength in the range of 315 to 591 g/cm width (800 - 1500 inch/width), because the problem of glue residue cannot be solved with the acrylic resin adhesive, the above-described adhesive was not available. Further, in the acrylic resin adhesives, odor and skin irritation are basic problems and it is difficult to solve these problems so long as the acrylic acid resin is used as the main component.

As a countermeasure, research has been carried out in order to provide performance not obtainable with the acrylic resin by providing an urethane resin with adhesiveness. Attempts have been made so far to prepare an adhesive by utilizing a high cohesive force of a urethane resin but the adhesion of the urethane resin adhesive prepared merely by an urethanizing reaction between the polyol and the diisocyanate is low. It may be thought that the adhesive strength of the polyurethane adhesive can be increased by decreasing the amount of the curing agent but, since this decreases the crosslinking structure and cohesive force becomes insufficient, satisfactory peeling subsequent to adhesion can not be obtained, and it has been difficult to improve the adhesive strength for the polyurethane adhesives having medium or higher adhesion.

Further, referring to the weather proofness, importance has often been attached to the high cohesive force and intimate adhesion which are characteristics of the products utilizing the urethane resin adhesives. These are satisfactory under relatively mild conditions but problem such as increase in the adhesive strength or transfer of the adhesives to adherends, that is, "glue residue" has occurred under severe conditions such as direct irradiation of sunlight and UV-ray, so that weather proofness was poor.

Further, the urethane adhesives are generally of a two-component curing type and most of the curing mechanisms utilize the reaction between compounds having an isocyanate group and compounds having an active hydrogen. However, the two-component curing type has drawbacks compared with the one-component curing type in that the workability is poor and curing conditions change depending on atmospheric moisture or temperature. Particularly, operation under high humidity conditions often have undesired effects on the physical properties.

With respect to each to the uses of the adhesives, medical adhesives are generally classified into the acrylic resin type and the rubber type depending on the constituent components of the adhesive layer. However, both of them have the drawbacks described above. Further, while the acrylic resin adhesives are excellent in the adhesive property, the crosslinking is strong, thus causing a great loss of modulus of elasticity at a room temperature and the adhesive can not conform with the movement of skins. Further, higher safety has been demanded for various chemical components mixed into the adhesives. Furthermore, odors inherent to acrylic material also cause a problem.

Further, in the use as the medical adhesives, unless the adhesives have an appropriate moisture permeability, the portion to which the adhesives have been affixed forms a favorable culture medium having an appropriate temperature and humidity to result in growth of bacterial groups and may cause skin irritations due to the increase of the acidity which result from pH change.

Referring to the moisture permeability suitable to the medical adhesive tapes, the average water loss in the body through the skins excluding visible sweat is about 250 ($g/m^2 \cdot 24h$) as demonstrated in various literatures. However, those portions such as palms and soles of the feet show higher water loss of about 500 $g/m^2$. In this specification, moisture permeability is determined in accordance with the moisture permeability test method (CUP method) for moisture proof packaging material (JIS Z 0208). As described in Japanese Patent Application Publication No. 7-83760, while there has been an adhesive material showing a moisture permeability of 400 to 3000 $g/m^2$ 24h), since a mixture of acrylic resin (Krysbon 7367-SL, manufactured by Dainippon Ink & Chemicals Inc.), synthesis rubber (KRATON Thermoplastic Bar, manufactured by Shell Co.) and natural rosin (KE707, manufactured by Yasuhara Yushi Co.) is used for the adhesive layer, the problems inherent to respective adhesives as described above have not been completely solved and the extent to which the problems have been solved depends on the case.

As the countermeasure, while use of urethane resins having good moisture permeability and which does not

cause no skin irritation has been studied, it has drawbacks as described above and the use of the urethane adhesives as the adhesive layer for the medical adhesives has been difficult.

On the other hand, although the biodegradable adhesive have been demanded in view of the protecting the global environment, those in which the adhesive itself is biodegradable and which have high performance are scarcely known.

For example, Japanese Patent Application Laid-Open No. 4-220478 proposes an adhesive tape using a biodegradable film base but the adhesive itself is not biodegradable.

As the biodegradable adhesive, those mainly comprising natural rubber (Japanese Patent Application Laid-Open No. 7-26219 and Japanese Patent Application Laid-Open No. 7-286147), those having the aliphatic polyester for the main chain skeleton (Japanese Patent Application Laid-Open No. 6-228508 and Japanese International Patent Application Publication No. 10-504057, Japanese Patent Application Laid-Open No. 11-21340 and Japanese Patent Application Laid-Open No. 11-21533) have been known but each of them has a drawback in view of the performance. The natural rubber adhesives cause remarkable deterioration of the performance due to the bleeding of the low molecular material such as a plasticizer after long time use as described above. The adhesives having the aliphatic polyester for the main chain can not obtain a sufficient adhesive strength by itself and thus use is limited. As a method of increasing the adhesive strength, there is a method of mixing a tackifier represented by the rosin with aliphatic polyester adhesive, but the rosin is unstable in the presence of heat, light and oxygen and poor in aging resistance.

Finally, with regard to the blister suppressing adhesives, pressure sensitive adhesives using the acryl polymer as the main component have been used so far for the adhesive sheets used when a plastic material is the adherend in view of the easy control of the light fastness, cost, transparency and adhesive property. However, when a polyester having high gas barrier property or the like is used for the substrate, blisters caused by gases released from the adherend plastic cause the appearance to be poor. This phenomenon of blisters occuring is thought to be due to the pressure of gases having no room for escape since the plastic film of the substrate forms a barrier for the gases released from the adherend.

This problem is solved in Japanese Patent Application Laid-Open No. 2-51577 by adding a filler to the adhesive layer to form an escape for the released gases and adsorb them. However, since the method of forming the escape for the gases by the filler sacrifices the transparency of the film, it can not be used as a transparent label.

Japanese Patent Application Publication No. 7-98923 describes decreasing blisters by using, as an adhesive component, a graft polymer having a weight-average molecular weight (Mw) of 150,000 to 2,000,000 formed by copolymerizing an acrylic monomer and a macro monomer having copolymerizable unsaturated double bonds on one terminal end. However, undesired effects on the physical property is given, since the copolymerizability of the macro monomer is poor, and unreacted macro monomer partially remains in this method. Also there are limits for the types of the acrylic monomer and macro monomer as well as the number of copolymerization parts thereof in view of the compatibility between the acrylic monomer and the macro monomer, and also clouding occurs sometimes in the adhesion layer. Further, there is also a problem that the macro monomer is expensive in the cost.

Japanese Patent Application Laid-Open No. 11-12553 discloses a transparent adhesive film capable of overcoming the foregoing problems of the blister without deteriorating the transparency by adding a specified styrenic or $\alpha$-methylstyrenic tackifier to an acrylic copolymer having Mw of 800,000 or more. However, the tackifier is poor in light fastness and heat resistance and has problems that it is colored brown causing appearance to be extremely poor when left for a long time under UV-rays or high temperature conditions.

Japanese Patent Application Laid-Open NOs. 6-49425 and 8-3521 describe obtaining blister resistance by blending the acrylic polymer having predetermined monomer compositions with metal chelate and aziridine crosslinkers, respectively. However, when the specified crosslinkers as described above are used, since the crosslinking rate is increased relatively compared with the case of using customary isocyanate crosslinkers, anchoring property to the substrate is deteriorated, the thus formed adhesion layer is poor in the stress relaxation performance, causes raising or peeling when used over a long period of time thus limiting the range of its use.

Further, since a liquid crystal device comprises two sheets of substrates each having an electrode and polarization plates or laminates of a polarization plate and a phase difference plate disposed respectively at the outside of the two sheets of substrates, high blister suppressing performance is requied for adhering the polarization plates to the substrate. The ability to be peeled subsequent to adhering is also required in view of the production step and, accordingly, adhesives for suppressing the blister which are capable of satisfying such requirments have been desired.

The adhesives using the Michael addition type urethane urea resin of the Synthesis Method 1 do not have the drawbacks of the rubber adhesives, acrylic resin adhesives or of those adhesives having an aliphatic polyester for the main skeleton. They do not cause skin irritations, and are transparent and usable stably for a long time, excellent in moisture permeability and aging resistance and have medium adhesive strength and biodegradability.

Further, when the adhesives contain the deterioration inhibitor in order to prevent decomposition of the polyol which is one of the constituent components of the urethane, it can exhibit favorable weather proofness.

Further, when the adhesives are cured by using a photopolymerization initiator or the like, they can exhibit

favorable peeling after adhesion.

Further, when the Michael addition type urethane urea resin of this invention used in the adhesives has a urethane - urea bonding content within a predetermined range, the adhesives can exhibit a favorable blister suppressing property.

Further, when the adhesives contain a photopolymerization initiator, they are curable by UV-rays, thereby capable of solving the problems of the two-component curing type urethane resin adhesives described above.

Further, when the Michael addition type urethane urea resin of the synthesis method 1 has a specified urethane urea bonding ratio, it can be used as adhesives having blister resistance.

The Michael addition type urethane urea resin of the Synthesis Method 1 can be used, specifically, as medical adhesives, biodegradable adhesives and blister suppressing adhesives.

The biodegradability referred to in this invention means that high molecular weight materials are degraded into low molecular weight materials by the effect of enzymes or microorganisms. For example, when an adhesive shows 10% or more weight reduction after lapse of seven days in composts, it is judged to have biodegradability. Further, since one of the objects of the biodegradability adhesive of this invention is that it is easily decomposed in the earth, it may be decomposed chemically due to moisture in the atmosphere along with biodegradation in the compost.

When the Michael addition type urethane urea resin of this invention is used as an adhesive, a solvent is used for synthesizing the same. The concentration of the obtained Michael addition type urethane urea resin in the solution is, preferably, about 5 to 95% by weight and, more preferably, 10 to 90% by weight. The viscosity of the solution is, preferably, from 1000 to 5000 mPa·s (25°C) when the concentration of the solid content to the solution is 50% by weight. If the viscosity is 5000 mPa·s or higher, coating operation may possibly be difficult and, on the other hand, if it is lower than 1000 mPa·s, a resin of a sufficient molecular weight can not sometimes be synthesized.

The Michael addition type urethane urea resin of this invention may be used as it is for the adhesive but a curing agent (D) may be blended with the Michael addition type urethane urea resin.

For the curing agent (D) used in this invention, the polyisocyanate (b) described above can be used.

The blending amount of the curing agent (D) is, generally, from 0.5 to 10 parts by weight based on 100 parts by weight of the Michael addition type urethane urea resin. If the curing agent (D) is 0.5% by weight or less, the cohesive force is lowered and when it is 10 parts by weight or more, the adhesive strength is lowered. It is preferably from 1 to 5 parts by weight.

The curing agent can be blended with the Michael addition type urethane urea resin by a known blending method.

While the medical adhesives are required to have a moisture permeability of 1500 (g/$m^2$ · 24h) or more, the Michael addition type urethane urea resin of this invention inherently satisfies the condition for the moisture permeability and can be used preferably as the medical adhesives.

Further, in a case of using the Michael addition type urethane urea resin of this invention as biodegradable adhesives, it preferably comprises starting material mainly of an aliphatic material. Specifically, the unsaturated compound (d) comprises an aliphatic unsaturated compound, the polyamine (c) comprises an aliphatic polyamine, the polyisocyanate (b) comprises an aliphatic polyisocyanate, and the polyol (a) comprises a polyurethane polyol as a reaction product of an aliphatic polyether, an aliphatic polyester polyol, an aliphatic polyester polyol and a polyether polyol, and the aliphatic polyisocyanate (b). The polyurethane polyol can include, an urethanizing reaction product of the aliphatic polyester polyol and the aliphatic polyisocyanate (b), and an urethanizing reaction product of the aliphatic polyester polyol, the polyether polyol and the aliphatic polyisocyanate (b). Both terminal components of the polyurethane polyols comprise the aliphatic polyester polyol or polyether polyol thus both terminal ends comprise hydroxyl groups. The polyurethane polyol may be of low molecular weight or high molecular weight and polyurethane polyol having two or more functional groups and a molecular weight of from 1000 to 5,000 and, more preferably, polyurethane polyol having two or more functional groups and a molecular weight of from 2000 to 4,000 is used.

The polyether polyol may be of low molecular weight or high molecular weight and, preferably, polyether polyol having two or more functional groups and a molecular weight of from 1000 to 5,000 and, more preferably, polyether polyol having two or more functional groups and a molecular weight of from 1,000 to 4,000 is used. The amount used is, preferably, from 0 to 50 mol% in the polyol constituting the urethane prepolymer (A).

The biodegradable adhesive can contain other polyols an extent that biodegradability does not deteriorate. As the polyether polyols used, known polyether polyols can be used. For example, a polyether polyol obtained by polymerizing oxyrane compounds such as ethylene oxide, propylene oxide, butylene oxide and tetrahydrofuran by using water or low molecular weight polyol such as propylene glycol, ethylene glycol, glycerine and trimethylol propane as an initiator, specifically, those having two or more functional groups such as polypropylene glycol, polyethylene glycol and polytetramethylene glycol can be used.

As the biodegradable adhesives, other resins, for example, acrylic resin, aromatic polyester resin, amino resin, epoxy resin and polyurethane resin can also be used together with urethane urea resin of the present invention within such a range as not to deteriorate biodegradability. Further, additives, for example, tackifier, fillers such as talc,

calcium carbonate and titanium oxide, colorant, UV-ray absorbent, antioxidant, defoamer, light stabilizer, light decomposing agent and biodegradation promotor can be blended depending on the application uses.

The urethane urea bond content of the adhesives for suppressing blister is, preferably, from 10 to 40% by weight based on the entire urethane resin. If the urethane urea bond content is 10% by weight or less, the cohesive force of the resin is insufficient and the blister suppressing performance thereby deteriorates and, on the other hand, if it exceeds 40% by weight, the urethane resin no longer shows the physical property of the pressure sensitive adhesive. The urethane urea bond content in this invention is calculated as described below.

The urethane-urea bond content is the percent by weight of the total number of urethane bonds and urea bonds in the urethane resins, assuming that: the terminal hydroxyl groups of the polyol (a) are all converted to urethane bonds; the terminal amino groups of the polyamine (c) are all converted to urea bonds; and when a reaction inhibitor is included, the reaction site thereof with an isocyanate group is converted to a urea bond if it is an amino group, and converted to a urethane bond if it is an hydroxyl group. Given that the weight of the urethane bond is 59 (NHCOO-) and the weight of the urea bond is 58 (NHCONH-), the urethane urea bond content can be calculated in accordance with the following equation. The isocyanate groups reacting with the amino groups or the hydroxyl groups are entirely derived from the polyisocyanate (b). The compound having the active hydrogen means the reaction stopper (f) containing the amino group and/or hydroxyl group.

$$\text{Urethane urea bond content (\%)} = \{(\text{number of moles of the polyol (a) added} \times \text{number of terminal hydroxyl groups} \times 59) + (\text{number of moles of polyamine (c) added} \times \text{number of amino group terminals} \times 58) + (\text{number of moles of compound having active hydrogen added} \times 58 \text{ or } 59)\}/\text{weight of solid content} \times 100$$

As the polyol (a) used for synthesizing the Michael addition type urethane urea resin of this invention used in the adhesives for suppressing blister, a polyether polyol having two or more functional groups with a molecular weight, preferably, from 500 to 5,000 and more preferably, a polyether polyol having two or more functional groups and a molecular weight from 500 to 2,000 is used.

(Laminate)

The laminate of this invention comprises a substrate and a layer of the adhesive and, optionally, may have a finishing layer. Further, the laminate may also comprise an adhesive layer formed between identical or different substrates. Such laminate can include, for example, tape, label, seal, cosmetic sheet, anti-slipping sheet and both-face adhesive tape.

Examples of the substrate include plastic film, metal foil, cloth, wood, glass plate, paper, foamed sheet and a peel sheet such as peel paper.

When the peel sheet is used as the substrate, after forming the adhesive layer on the peel sheet, the adhesive layer can be transferred to a sheet such as a plastic film or can be affixed to the plastic sheet.

Examples of the plastic material for the plastic film include polyvinyl chloride, polyethylene terephthalate (PET), polyurethane, nylon, processed polyolefin, unprocessed polyolefin, polymethacryl acrylate, polycarbonate and Teflon. A PET film is particularly preferred in view of the adhesion to the substrate or easy coating.

Further, examples of the metal of a metal foil include iron, aluminum, tin plate or galvanized iron sheet.

Examples of the paper substrate in this invention include plain paper, coated paper and art paper.

When the Michael addition type urethane urea resin adhesive of this invention is used for the medical adhesive tape, it is preferred that the moisture permeability of the substrate is 1500 ($g/m^2 \cdot 24h$) or more.

The substrate for the medical adhesive tape has no particular restriction so long as the conditions described above can be satisfied and cloth, paper, non-woven fabric, polymeric film or the like can be used.

Examples of the cloth material fiber include cotton rayon, polyester and acetate.

The paper can be those mainly comprising pulp and mixed with Manila hemp or chemical fibers to improve the support strength.

Examples of the non-woven fabric include fibers such as of rayon, polyester and nylon.

Examples of the polymeric film include those of soft PVC, polyethylene, copolymer of polyethylene and vinyl acetate, polypropylene and urethane.

When the Michael addition type urethane urea resin adhesive of this invention is used for the biodegradable adhesive tape, it is necessary that the substrate has a biodegradability.

There is no particular restriction for the substrate of the biodegradable adhesive tape so long as it can be decomposed by microorganisms or the like in environments such as in soils and sea water. Such sheet substrates can include, for example, paper, cloth and polymeric film.

The paper can be pulp or pulp mixed with Manila hemp for improving the support strength.

The cloth can be cotton, rayon and acetate.

The polymeric film can be known natural polymeric or synthetic polymeric films. The natural polymeric film can be one of plant origin, animal origin and microorganism origin. Further, the synthetic polymeric film can be, for example, aliphatic polyester, polyol and polycarbonate.

The biodegradable polymer of plant origin can be, for example, cellulose, starch and alginic acid.

The biodegradable polymer of animal origin can include synthesized polymers of polysaccharide such as chitin (chitosan) and hyaluronic acid and protein such as collagen (gelatin) and albumin.

The biodegradable polymer of microorganism origin can be, for example, poly(3-hydroxyalkanoate) and hyaluronic acid.

Examples of the aliphatic polyester include glycol dicarboxylic acid condensate such as polyethylene succinate and polybutylene succinate, polylactide of polyglycolic acid or polylactic acid, polylactones such as poly(ε-caprolactone), as well as polybutylene terephthalate adipate.

Polyol can be, for example, polyvinyl alcohol.

The polycarbonate can be, for example, polyester carbonate.

Other biodegradable synthetic polymers can be, for example, polyacid anhydride, polycyanoacrylate, polyorthoester or polyphosphasene.

The polyurethane resin adhesive of this invention can be coated on a substrate by using a known coating method.

When the substrate is a plastic film, metal foil or glass plate, the thickness of the substrate is, preferably, from 15 to 100 μm. When the substrate is paper, the thickness of the substrate, is preferably, from 15 to 5000 μm.

Further, the thickness of the adhesive layer is, preferably, from 5 to 100 μm.

(Coating Agent for Forming Ink Receiving Layer)

In recent years, organic solvents in inks have been noted in the printing industry in view of the improvement of the working environment in printing sites and in view of the problems of atmospheric pollution, and much attention has been paid to aqueous inks rather than inks containing organic solvents.

Compared with the organic solvents-containing inks, the aqueous inks have advantageous characteristics in that (1) petroleum resources can be economized, (2) they have less disadvantageous effects on the environment and are highly safe, (3) they are non-flashing and cause less fire danger thus reducing the need for facilities such as explosion proof facilities and warehouses for dangerous materials, and (4) the printed matter has less odor caused by residual solvents.

However, the aqueous inks have problems in that drying after printing is not rapid, which result in problems such as leveling and stain of inks and blockings caused by poor drying, as well as the energy consumption at the time of drying is large.

Examples of the printing method using the aqueous ink include ink jet printing, gravure printing and flexographic printing. However, since paper having permeability is often used for the recording material, at present printing to a recording material using a plastic film as a substrate has not yet been popularized in view of poor drying.

In the ink jet printing, there is less noise, high speed printing and multi-color printing are possible and image quality has been improved remarkably in recent years due to the improvement for the resolution power. Further, along with marketing of ink jet printers for personal use at a reduced cost, the ink jet printer has rapidly become widely used in homes and offices.

Most of inks used for the ink jet printing are of an aqueous nature in view of the problems of odors, and paper such as plain paper or synthetic paper and a plastic substrate having an ink receiving layer on the surface such as an OHP sheet have been used so far. Such recording materials are required to have rapid ink absorption, as well as have excellent ink fixing property, coloring property, clearness and image gradation. Further, the images obtained by ink jet recording are also required to be excellent in the retainability, durability, particularly, water resistance and light fastness (weather proofness).

A coating agent comprising a water soluble resin or a hydrophilic resin mixed with an inorganic filler such as silica is coated on the surface of a recording material and various modifications have been made to the coating agent for satisfying various characteristics as described above.

As the resins used so far for the ink receiving layer of aqueous inks, there have been generally used a polyvinyl

alcohol (Japanese Patent Application Laid-Open No. 60-56587), a reaction product of an isocyanate compound and a polyether polyol (Japanese Patent Application Laid-Open No. 60-248387 and Japanese Patent Application Laid-Open No. 61-32787), a polyvinyl pyrrolidone (Japanese Patent Application Laid-Open No. 2-243380/1990), an acrylci resin or cationically modified resin thereof. However, it is difficult to maintain a balance between the different properties and, for example, it is poor in water resistance although excellent in ink absorbability and image clarity when used alone. Also a coating liquid is unstable if two or more resins are used since the compatibility between the resins is not sufficient. Further, an ink receiving layer has been proposed which is filled with a filler and a porous film is formed, thereby improving the ink absorbability by utilizing the capillary phenomenon (Japanese Patent Application Laid-Open No. 62-79237). However, the coating film is hard and not suitable for use requiring stretching ability.

A coating agent for forming a ink receiving layer well balanced in the coating liquid characteristic, printability and coated film property can be provided by the use of the Michael addition type urethane urea resin according to the Synthesis Method 1.

When the Michael addition type urethane urea resin according to the Synthesis Method 1 is used as the coating agent for forming the ink receiving layer, the weight-average molecular weight of the Michael addition type urethane urea resin of this invention is, preferably, within a range from 10,000 to 50,000 and the number-average molecular weight is, preferably, within a range from 8,000 to 30,000 from the view point of a balance between tackiness of the surface, water resistance and solubility.

When the Michael addition urethane urea resin contains carboxyl groups or tertiary amino groups, since the dispersibility or solubility of the resin to water can be improved, the Michael addition type urethane urea resin can also be ionized in order to enhance the ink fixing property.

Anionization of the Michael addition type urethane urea resin having carboxyl groups is conducted mainly for improving the dispersibility or solubility to water. Neutralizing reaction for the carboxyl groups as anionization means may be conducted before addition, simultaneously with addition or after addition of the Michael addition type urethane urea resin to water. The basic compound used for the neutralization of the carboxyl groups can include ammonia, organic amines such as monoethylamine, diethylamine, trimethylamine, triisopropylamine, tributylamine, triethanolamine, methyldiethanolamine, monoethanolamine, dimethylethanolamine, diethylethanolamine, morpholine, N-methylmorpholine and 2-amino-2-ethyl-1-propanol, and inorganic alkalis such as sodium hydroxide, and potassium hydroxide. These may be used alone or in a combination of two or more of them. Among them, those which are water soluble and highly volatile and easily dissociated by heat are preferred, ammonia, trimethylamine or triethylamine being particularly preferred.

Further, cationization for the urethane urea in a case where the Michael addition type urethane urea resin of this invention has a tertiary amino groups by the use of the polyol containing the tertiary amino group as the ionic functional groups, the unsaturated compound (d) having the tertiary amino group and the reaction stopper (f), is conducted for improving the fixing property of the aqueous ink and the dispersibility and the solubility of the resin in water.

The acidic compound used for neutralization or quaternarization of the tertiary amino groups as the cationifying means can include, for example, inorganic acid compounds such as phosphoric acid or hydrochloric acid, and organic acid compounds such as acetic acid, succinic acid, alkyl sulfuric acid such as dimethyl sulfuric acid or diethyl sulfuric acid, benzyl chloride, methyl chloride, ethyl chloride, butyl chloride, propyl chloride, ethyl bromide, butyl bromide, butyl iodide and $\alpha$-chloroparaxylene.

Known quaternarizing agents used for quaternarization can include, the organic acid compounds described above and such quaternarizing agents are usually used alone or in an admixture of two or more of them. Known methods can be utilized for the quaternarizing reaction. Usually, the quaternarizing reaction is conducted in a nitrogen atmosphere at a temperature from 60 to 100°C and completed in 1 to 6 hours after adding the quaternarizing agent to the Michael addition type urethane urea resin.

The coating agent for forming the ink receiving layer containing the Michael addition type urethane urea resin of this invention can contain a cationifying agent for improving the fixing property of the aqueous ink and for preventing static charges formed to the coated film. As the cationifying agent, antistatics obtained by the production method described in Japanese Patent No. 2925723 and Japanese Patent Application Publication No. 6-74406, and cationically modified product of hydrophilic resins such as cation-modified acrylic copolymer and cation modified polyvinyl alcohol, cation modified natural rubber as described in Japanese Patent No. 2867013 can be used suitably.

Further, the amine compound obtained by Michael addition reaction of the unsaturated compound containing the quaternary ammonium salt group to the polyamine (c) can also be used as the cationifying agent having favorable compatibility with the Michael addition type urethane urea resin of this invention.

For obtaining such an amine compound, it is preferred to use, as the polyamine (c), isophorone diamine, 2,2,4-trimethylhexamethylene diamine or hexamethylene diamine, and use a dendrimer having a primary or secondary amino group at the terminal end of the dendrimer since many cationic components can be introduced into the molecule.

There is no particular restriction for the amount of the unsaturated compound (d) used in a case of synthesizing the amine compound as the cationifying agent and it is, preferably, from 0.5 to 1.2 mol and, more preferably, 0.8 to 1

mol based on 1 mol of active hydrogen of the primary or secondary amino group in the polyamine (c). If the amount of the unsaturated compound (d) used is less than 0.5 mol, the amine component remains, which is not suitable for long time storage. Further, if the amount of the unsaturated compound (d) used is more than 1.2 mol, many free unsaturated compounds remain, and this is not preferable.

When the amine compound is synthesized as the cationifying agent, it is preferred that 10 to 100 mol%, preferably, 40 to 100 mol% of the unsaturated compound (d) is the quaternary ammonium salt group-containing unsaturated compound (d) as described above and, if the amount of the quaternary ammonium salt group-containing unsaturated compound to the total amount of unsaturated compound is less than 10 mol%, it can not function effectively as the cationifying agent.

The blending amount of the cationifying agent is preferably, 30% or less of the total solid content in the coating agent for forming the ink receiving layer and, more preferably, it is 20% by weight or less. A blending amount of the cationifying agent of more than 30% is not preferred since the coated film property such as water proofness deteriorate.

The coating agent for forming the ink receiving layer containing the Michael addition type urethane urea resin of this invention may also contain organic or inorganic fillers with an aim of improving the printability and the coated film property.

In this invention, examples of the organic filler include natural products such as starch, and fine resin particles, for example, acrylic material such as polymethyl methacrylate, polystyrene material, styrene-acryl material, nylon material such as nylon 6, nylon 12 and nylon 6 - 12, olefin materials such as high density polyethylene, low density polyethylene, polypropylene and ethylene tetrafluoride, polyester materials, phenol materials and benzoguanazine materials.

In this invention, examples of the inorganic filler include those inorganic fillers such as clay, diatomaceous earth, aluminum silicate, calcium silicate, magnesium silicate, hydrotalsite, talc, kaoline, sintered kaoline, barium sulfate, titanium dioxide, calcium sulfate, light calcium carbonate, heavy calcium carbonate, magnesium hydroxide, magnesium carbonate, titanium oxide, zinc carbonate, zinc oxide, zinc hydroxide, zinc sulfide, lead oxide, zirconium oxide, magnesium oxide, synthetic amorphous silica, colloidal silica, alumina, alumina sol, pseudo hematite, aluminum hydroxide, lithopone, zeolite and montomollionite.

Among the inorganic fillers, barium sulfate, amorphous silica, colloidal silica and alumina sol are preferred in a case of making the ink receiving layer transparent. Further, when alumina sol or colloidal silica is used as the filler component, a stable liquid mixture can be obtained by making the Michael addition type urethane urea resin of this invention aqueous by the method described above and then mixing the same with the filler.

When the coating agent for forming the ink receiving layer of this invention contains the filler, the coated film performance can further be improved by not merely mixing the filler with the Michael addition type urethane urea resin of this invention but grafting the filler with the Michael addition type urethane urea resin. In particular, when the blending ratio of the filler is high, grafting of the filler and the resin is preferred since the mechanical property of the coated film can be improved outstandingly.

Specifically, the filler can be grafted to the Michael addition type urethane urea resin obtained:

(1) in a case of using compounds having a hydroxyl group and/or carboxyl group as the unsaturated compound (d) and the reaction stopper (f) and epoxy group-containing acrylate as the unsaturated compound (d),
(2) in a case of using the nitrogen containing unsaturated compound having a methylol group or N-alkoxymethyl group such as monoalkylol(meth)acrylamide or dialkylol(meth)acrylamide as the unsaturated compound (d) and
(3) in a case of using a compound having an alkoxysilyl group as the unsaturated compound (d) and the reaction stopper (f).

When the Michael addition type urethane urea resin has hydroxyl groups, carboxyl groups and epoxy groups, the resin and the filler can be grafted by adding a silane coupling agent into the mixed solution of the resin and the filler and heated while stirring at 40 to 100°C for 10 min to 3 hours.

Further, when the Michael addition type urethane urea resin has methylol groups or N-alkoxymethyl groups, the resin and the filler can be grafted by heating while stirring the liquid mixture of the resin and the filler, and optionally in the presence of an acid catalyst.

When the Michael addition type urethane urea resin has alkoxysilyl groups, the resin and the filler can be grafted by heating while stirring the liquid mixture of the resin and the filler at 40 to 100°C for 10 min to 3 hours.

When the Michael addition type urethane urea resin is grafted to the alumina sol or the colloidal silica, it is preferred to mix the filler after making the resin aqueous by the method described above or making the resin aqueous at the time of the grafting reaction since a stable grafting product can be obtained.

The amount of the filler to be blended is different depending on the purpose and, for example, when the purpose is to prevent blocking or to improve the mechanical property of the coated film, it is, preferably, from 5 to 50% by weight and, more preferably, 10 to 40% by weight based on the total amount of the coating agent. If it is more than

50%, the mechanical property, particularly, blending property and extendability of the coated film deteriorate. Further, in a case where the purpose is to improve the drying property of the ink, the blending amount of the filler is, preferably, from 50 to 95% by weight and, more preferably, 60 to 90% by weight. If it is 50 to 95% by weight or less, sufficient effect can not be obtained.

(Recording Material)

The recording material of this invention has a receiving layer comprising a coating agent for forming the ink receiving layer on a substrate and has a favorable fixing property for aqueous inks.

When the receiving layer for the aqueous ink is disposed by using the coating agent for forming the ink receiving layer of this invention, the polyol (a) used for synthesizing the Michael addition type urethane urea resin of this invention to be used as the coating agent for forming the ink receiving layer preferably contains a polyalkylene glycol chain formed by ethylene oxide and ethylene glycol since water absorbability is provided to the resin. Particularly, it is preferred that the content of the polyalkylene glycol chain in the Michael addition type urethane urea resin is within a range from 40 to 70% by weight in view of the absorption of the aqueous ink. If the content of the polyalkylene glycol chain is less than 40% by weight, the ink absorbability is slow and dot gain (swelling of dot) is caused or bleeding is caused and thus clear images can not be obtained. Further, when the content of the polyalkylene glycol chain exceeds 70% by weight, tackiness is increased causing blocking and also the water proofness is lowered. Further, it is preferred that the content of the polyalkylene glycol chain is 45 to 60% by weight in view of the balance for the water absorbability, water proofness and the film forming property of the ink receiving layer

The receiving layer is formed on at least one of the surfaces of the substrate and the method of formation can be known coating system used after preparing the constituent components of the ink receiving layer so as to make them into paints. As the coating system, for example, spray, spin coater, die coater, gravure coater, knife coater, dip coater and comma coater can be used.

The thickness of the receiving layer is, generally, from 5 to 100 μm and, preferably, 10 to 50 μm in view of the balance for ink absorbability, intimate adhesiveness and cost.

Examples of the substrate on which the receiving layer is disposed include paper and plastic films of polyethylene terephthalate, polyethylene naphthalate, polyvinyl fluoride, polyvinylidene fluoride, rigid polyvinyl chloride, polyvinylidene chloride, nylon, polyimide, polystyrene, polyvinyl alcohol, ethylene-vinyl alcohol copolymer, polycarbonate, polyacrylonitrile, polybutene, soft polyvinyl chloride, polyvinylidene fluoride, polyethylene, polypropylene, polyurethane, ethylene-vinyl acetate copolymer and polyvinyl acetate. In addition, various kinds of non-woven fabrics, synthetic paper, metal foils or composite sheets which combine these, metals, woods and glass may also be used. However, the surface free energy on the surface of the substrate is, desirably, within a range from 20 to 60 MN/m and corona treatment or plasma treatment may be applied to the surface of the substrate, or a resin of excellent intimate adhesivity with the substrate may be coated to the substrate in order to improve the intimate adhesion between the substrate and the receiving layer.

Example

Next, this invention will be described more in details by way of examples but the invention is not restricted to these examples.

Synthesis examples are given below.

Synthesis Example 1

300 g of isophorone diamine (IPDA) and 300 g of toluene were charged in a four-necked flask equipped with a stirrer, a reflux cooling tube, a nitrogen introduction tube, a thermometer and a dropping funnel, to which 176 g of ethylacrylate (EA) and 184 g of 2-hydroxyethyl acrylate were dropped at a room temperature. After completion of dropping, they were reacted at 80°C for 1 hour and then 360 g of toluene were added to form a compound (1). A $^{13}$C-NMR chart for the obtained compound (1) is shown in Fig. 1 and the assigned formula thereof is shown below.

Assigned structural formula:

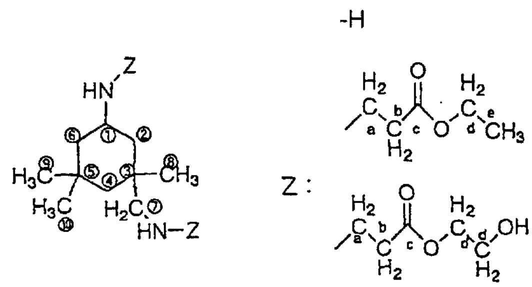

Synthetic Example 2

300 g of isophorone diamine (IPDA) and 300 g of toluene were charged in a four-necked flask equipped with a stirrer, a reflux cooling tube, a nitrogen introduction tube, a thermometer and a dropping funnel, to which 226 g n-butyl acrylate and 229 g of 4-hydroxybutyl acrylate were dropped at a room temperature. After completion of dropping, they were reacted at 80°C for 1 hour and then 455 g of toluene was added to form a compound (2). An NMR chart for the obtained compound (2) is shown in Fig. 2 and the assigned formula thereof is shown below.

Assigned structural formula:

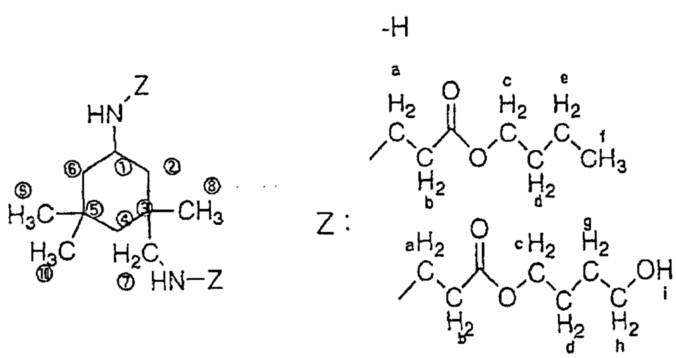

Synthesis Example 3

300 g of isophorone diamine (IPDA) and 300 g of toluene were charged in a four-necked flask equipped with a stirrer, a reflux cooling tube, a nitrogen introduction tube, a thermometer and a dropping funnel, to which 176 g of ethylacrylate and 229 g of 4-hydroxybutyl acrylate were dropped at a room temperature. After completion of dropping, they were reacted at 80°C for 1 hour and then 405 g of toluene was added to form a compound (3). An NMR chart for the obtained compound (3) is shown in Fig. 3 and the assigned formula thereof is shown below.

Assigned structural formula:

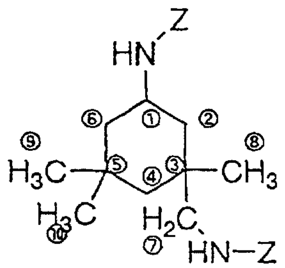

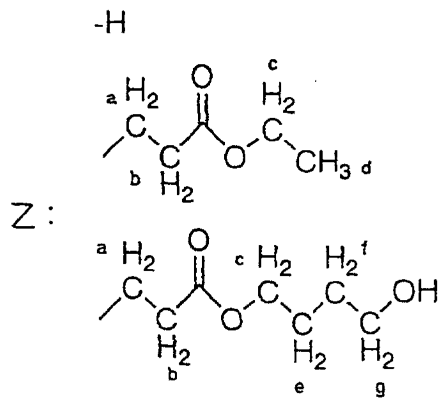

Synthesis Examples 4 to 8

Compounds (4) - (8) were synthesized with the compositions shown in Table 1 by the same process as in Synthesis Example 1.

Synthetic Example 9

60 g of ethylene diamine (ED) and 60 g of methanol (MeOH) were charged in a four-necked flask equipped with a stirrer, a reflux cooling tube, a nitrogen introduction tube, a thermometer and a dropping funnel, to which 232 g of 2-hydroxyethyl acrylate was dropped at a room temperature. After completion of dropping, they were reacted at 50°C for 1 hour and then 232 g of MeOH was added to form a compound (9). An NMR chart for the obtained compound (9) is shown in Fig. 4 and the assigned formula thereof is shown below.

Assigned structural formula:

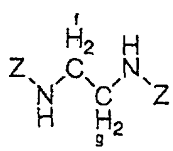

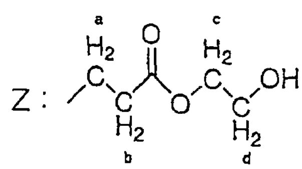

, -H

Synthesis Example 10

116 g of hexamethlenediamine (HMDA) and 116 g of MeOH were charged in a four-necked flask equipped with a stirrer, a reflux cooling tube, a nitrogen introduction tube, a thermometer and a dropping funnel, to which 190 g of EA was dropped at a room temperature. After completion of dropping, they were reacted at 50°C for 1 hour and then 190 g of MeOH was added to form a compound (10). An NMR chart for the obtained compound (10) is shown in Fig. 5 and the assigned formula thereof is shown below.

Assigned structural formula:

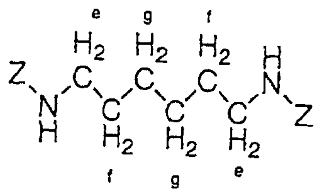

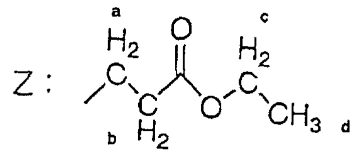

, -H

Synthesis Example 11

170 g of IPDA and 170 g of MeOH were charged in a four-necked flask equipped with a stirrer, a reflux cooling tube, a nitrogen introduction tube, a thermometer and a dropping funnel, to which 190 g of EA was dropped at a room temperature. After completion of dropping, they was reacted at 50°C for 1 hour and then 190 g of MeOH were added to form a compound (11). An NMR chart for the obtained compound (11) is shown in Fig. 6 and the assigned formula thereof is shown below.

Assigned structural formula:

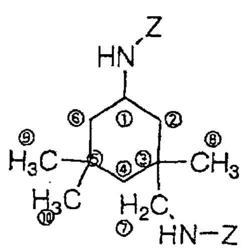

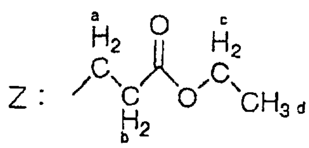

, -H

Synthesis Example 12

85 g of IPDA and 85 g of MeOH were charged in a four-necked flask equipped with a stirrer, a reflux cooling tube, a nitrogen introduction tube, a thermometer and a dropping funnel, to which 227 g of dimethylaminoethyl methylchloride acrylate (an aqueous 79% solution) was dropped at a room temperature. After completion of dropping, they were reacted at 50°C for 3 hours and then NV (nonvolatile component) was adjusted to 50% with MeOH to form a compound (12). An NMR chart for the obtained compound (12) is shown in Fig. 7 and the assigned formula thereof is shown below.

Assigned structural formula:

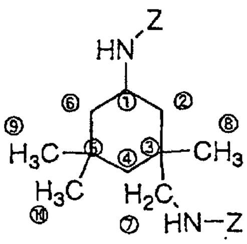

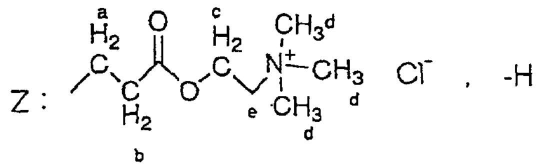

Synthesis Example 13

170 g of IPDA and 170 g of isoproylalcohol (IPA) were charged in a four-necked flask equipped with a stirrer, a reflux cooling tube, a nitrogen introduction tube, a thermometer and a dropping funnel, to which 319 g of dimethylaminoethyl methylchloride acrylate (aqueous 79% solution) and 72 g of 4-hydroxybutyl acrylate was dropped at a room temperature. After completion of dropping, they were reacted at 50°C for 1 hours and then NV was adjusted to 50% with IPA to form a compound (13). An NMR chart for the obtained compound (13) is shown in Fig. 8 and the assigned formula thereof is shown below.

Assigned structural formula:

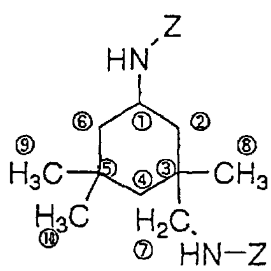

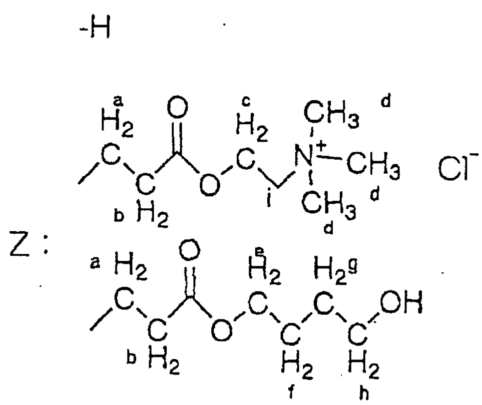

Synthesis Example 14

170 g of IPDA and 170 g of IPA were charged in a four-necked flask equipped with a stirrer, a reflux cooling tube, a nitrogen introduction tube, a thermometer and a dropping funnel, to which 294 g of dimethylaminoethyl methylchloride acrylate (aqueous 79% solution) and 170 g of polyethylene glycol (average polymerization degree = 4.5) acrylate (Blenmer AE 200, manufactured by Nippon Oils & Fats Co. Ltd.) was dropped at a room temperature. After completion of dropping, they were reacted at 50°C for 3 hours and then NV was adjusted to 50% with IPA to form a compound (14). An NMR chart for the obtained compound (14) is shown in Fig. 9 and the assigned formula thereof is shown below.

Assigned structural formula: à

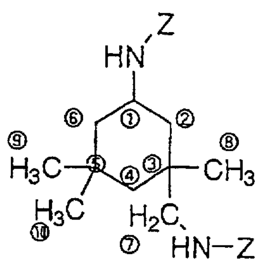

-H

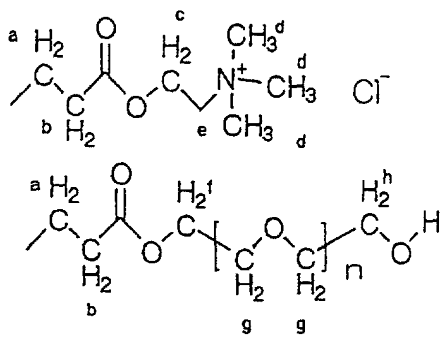

n=3-4

Synthesis Examples 15 to 21

Compounds (15) - (21) were synthesized with the compositions shown in Table 1 by the same process as in Synthesis Example 1.

Synthesis Example 22

106 g of Actilane 423 (AKCROS Chemical), 36 g of ethyl acrylate and 141 g of toluene were charged in a four-necked flask equipped with a stirrer, a reflux cooling tube, a nitrogen introduction tube, a thermometer and a dropping funnel, to which 60 g of isophorone diamine was dropped at a room temperature. After completion of dropping, they were reacted at 50°C for 1 hour and then 60 g of toluene was added to form a compound (22).

Synthesis Example 23

106 g of Actilane 421 (AKCROS Chemical) and 36 g of ethyl acrylate, 141 g of toluene were charged in a four-necked flask equipped with a stirrer, a reflux cooling tube, a nitrogen introduction tube, a thermometer and a dropping funnel, to which 60 g of isophorone diamine was dropped at a room temperature. After completion of dropping, they were reacted at 50°C for 1 hour and then 60 g of toluene was added to form a compound (23).

Synthesis Example 24

170 g of IPDA and 170 g of IPA were charged in a four-necked flask equipped with a stirrer, a reflux cooling tube, a nitrogen introduction tube, a thermometer and a dropping funnel, to which 175 g of dimethylaminoethyl methylchloride acrylate (aqueous 79% solution), 86 g of dimethylaminoethylmethyl acrylate and 6 g of N-methoxymethylacrylamide (NMMA) were dropped at a room temperature. After completion of dropping, they were reacted at 50°C for 3 hours and then NV was adjusted to 50% with IPA to form a compound (24).

Synthesis Example 25

170 g of IPDA and 170 g of IPA were charged in a four-necked flask equipped with a stirrer, a reflux cooling tube, a nitrogen introduction tube, a thermometer and a dropping funnel, to which 568 g of dimethylaminoethyl methylchloride acrylate (aqueous 79% solution), and 115 g of 4-hydroxybutyl acrylate were dropped at a room temperature. After completion of dropping, they were reacted at 50°C for 1 hours and then NV was adjusted to 50% with IPA to form a compound (25).

Table 1 shows starting materials used in Synthesis Examples 1 to 25 and molecular weight of the obtained

amine compounds (B).

Table 1

| Synth. Exam. No. | Synthesis conditions | | | Polyamine(c) | | | Unsaturated compound (d) | | | | | | | | |
|---|---|---|---|---|---|---|---|---|---|---|---|---|---|---|---|
| | Solvent/ Catalyst | Reaction time (hr) | Temperature (°C) | Kind | Mn | Blending amount (g) | (1) | Mn | Blending amount (g) | (2) | Mn | Blending amount (g) | (3) | Mn | Blending amount (g) |
| 1 | Toluene | 1 | 80 | IPDA | 170 | 300 | 2-HEA | 116 | 184 | EA | 100 | 176 | | | |
| 2 | Toluene | 1 | 80 | IPDA | 170 | 300 | 4-HBA | 144 | 229 | n-BA | 128 | 226 | | | |
| 3 | Toluene | 1 | 80 | IPDA | 170 | 300 | 4-HBA | 144 | 229 | EA | 100 | 176 | | | |
| 4 | Toluene 300+508g | 1 | 80 | IPDA | 170 | 300 | 2-HEA | 116 | 184 | 2-EHA | 184 | 324 | | | |
| 5 | Toluene 300+350g | 1 | 80 | IPDA | 170 | 300 | 2-HEA | 116 | 102 | EA | 100 | 247 | | | |
| 6 | Toluene 300+374g | 1 | 80 | IPDA | 170 | 300 | 2-HEA | 116 | 286 | EA | 100 | 88 | | | |
| 7 | Toluene 300+553g | 1 | 80 | IPDA | 170 | 300 | 4-HBA | 144 | 228.6 | 2-EHA | 184 | 324.6 | | | |
| 8 | Toluene 300+388g | 1 | 80 | TMHMDA | 158 | 300 | 2-HEA | 116 | 198 | EA | 100 | 190 | | | |
| 9 | Methanol | 1 | 50 (cool required) | ED | 60 | 60 | 2-HEA | 116 | 232 | | | | | | |
| 10 | Methanol | 1 | 50 | HMDA | 116 | 116 | EA | 100 | 190 | | | | | | |
| 11 | Methanol | 1 | 50 | IPDA | 170 | 170 | EA | 100 | 190 | | | | | | |
| 12 | Methanol | 3 | 50 | IPDA | 170 | 85 | DMAEAQ | 194 | 227 | | | | | | |

Table 1 (Continued)

| | | | | | | | | | | | | | | | |
|---|---|---|---|---|---|---|---|---|---|---|---|---|---|---|---|
| 13 | IPA | 1 | 50 | IPDA | 170 | 170 | DMAEAQ | 194 | 319 | 4-HBA | 144 | 72 | | | |
| 14 | IPA | 3 | 50 | IPDA | 170 | 170 | Blenmer AE200 | 283 | 170 | DMAEAQ | 194 | 294 | | | |
| 15 | IPA 170+538g | 1 | 50 | IPDA | 170 | 170 | Blenmer AE200 | 283 | 538 | | | | | | |
| 16 | IPA 170+355g | 1 | 50 | IPDA | 170 | 170 | Blenmer AE200 | 283 | 255 | EA | 100 | 100 | | | |
| 17 | IPA 170+516g | 1 | 50 | IPDA | 170 | 170 | Blenmer AE200 | 283 | 510 | NMMA | 115 | 6 | | | |
| 18 | Toluene 300g/ copper acetate 0.2g+ toluene 187g | 3 | 100 | IPDA | 170 | 300 | vinyl cyanide | 53 | 187 | | | | | | |
| 19 | Toluene 300g/ copper acetate 0.2g+ toluene 360g | 3 | 100 | IPDA | 170 | 300 | ethynyl benzene | 102 | 360 | | | | | | |
| 20 | Toluene 300g/ copper acetate 0.2g+ toluene 438g | 1 | 80 | IPDA | 170 | 300 | 1-ethyl-1-hexanol | 124 | 438 | | | | | | |
| 21 | Toluene 300g/ | 1 | 80 | TMHMDA | 158 | 300 | Vinyl cyanide | 53 | 201 | | | | | | |

Table 1 (Continued)

| | | | | | | | | | | | | | | | |
|---|---|---|---|---|---|---|---|---|---|---|---|---|---|---|---|
| | copper acetate 0.2g+ toluene 201g | | | | | | | | | | | | | | |
| 22 | Toluene | 1 | 50 | IPDA | 170 | 60 | EA | 100 | 36 | ACTI 423 | | 106 | | | |
| 23 | Toluene | 1 | 50 | IPDA | 170 | 60 | EA | 100 | 36 | ACTI 421 | | 106 | | | |
| 24 | IPA | 3 | 50 | IPDA | 170 | 170 | DMAEA | 143 | 86 | DMA EAQ | 194 | 175 | NM MA | 1 1 5 | 6 |
| 25 | IPA | 1 | 50 | IPDA | 170 | 170 | DMAEA Q | 194 | 568 | 4- HBA | 144 | 115 | | | |

Example 1

257g of polyether polyol PP-2000 (dihydric polyether polyol, OH value 56, manufactured by Sanyo Kasei Industry Co. Ltd.), 43 g of isophorone diisocyanate (manufactured by Huels Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 61 g of the compound (4) was added for 1 hour and, after aging for another 1 hour, 2.1 g of 2-amino-2-methyl-propanol (manufactured by Nagase Industry Co.) was added and the reaction was ended. The reaction solution was colorless and transparent with a solid content of 50%, a viscosity of 2,800 mPA·s, a number-average molecular weight Mn of the solid content of 25,000, and a weight-average molecular weight Mw of 90,000.

Example 2

257g of polyether polyol PP-2000 (dihydric polyether polyol, OH value 56, manufactured by Sanyo Kasei Industry Co. Ltd.), 43 g of isophorone diisocyanate (manufactured by Huels Japan Co. Ltd.), 75 g of toluene and 0.025 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 53 g of the compound (2) was added for 1 hour and, after aging for another 1 hour, 2.0 g of 2-amino-2-methyl-propanol (manufactured by Nagase Industry Co.) was added to confirm that absorption characteristic (2270$cm^{-1}$) of NCO in the IR chart disappeared and then the reaction was ended. The reaction solution was colorless and transparent with a solid content of 50%, a viscosity of 3,800 mPA·s, a number-average molecular weight Mn of the solid content of 27,000, and a weight-average molecular weight Mw of 110,000. Fig. 10 shows an IR absorption spectra for the obtained resin.

Example 3

257g of polyether polyol PP-2000 (dihydric polyether polyol, OH value 56, manufactured by Sanyo Kasei Industry Co. Ltd.), 43 g of isophorone diisocyanate (manufactured by Huels Japan Co. Ltd.), 75 g of toluene and 0.025 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 52 g of the compound (3) was added for 1 hour and, after aging for another 1 hour, 2.0 g of 2-amino-2-methyl-propanol (manufactured by Nagase Industry Co.) was added to confirm that absorption characteristic (2270$cm^{-1}$) of NCO in the IR chart disappeared and then the reaction was ended. The reaction solution was colorless and transparent with a solid content of 50%, a viscosity of 3,800 mPA·s, a number-average molecular weight Mn of the solid content of 27,000, and a weight-average molecular weight Mw of 110,000. Fig. 11 shows an IR absorption spectra for the obtained resin.

Example 4

257g of polyether polyol PP-2000 (dihydric polyether polyol, OH value 56, manufactured by Sanyo Kasei Industry Co. Ltd.), 43 g of isophorone diisocyanate (manufactured by Huels Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 50 g of the compound (1) was added for 1 hour and, after aging for another 1 hour, 2.2 g of 2-amino-2-methyl-propanol (manufactured by Nagase Industry Co.) was added to confirm that absorption characteristic (2270$cm^{-1}$) of NCO in the IR chart disappeared and then the reaction was ended. The reaction solution was colorless and transparent with a solid content of 50%, a viscosity of 3,000 mPA·s, a number-average molecular weight Mn of the solid content of 30,000, and a weight-average molecular weight Mw of 100,000. Fig. 12 shows an IR absorption spectra for the obtained resin.

Example 5

257 g of polyether polyol PP-2000 (dihydric polyether polyol, OH value 56, manufactured by Sanyo Kasei

Industry Co. Ltd.), 43 g of isophorone diisocyanate (manufactured by Huels Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 48 g of the compound (8) were added for 1 hour and, after aging for another 1 hour, 2.0 g of 2-amino-2-methyl-propanol (manufactured by Nagase Industry Co.) was added and then the reaction was ended. The reaction solution was colorless and transparent with a solid content of 50%, a viscosity of 3,500 mPA·s, a number-average molecular weight Mn of the solid content of 28,000, and a weight-average molecular weight Mw of 110,000.

Example 6

129 g of polyether polyol PP-2000 (dihydric polyether polyol, OH value 56, manufactured by Sanyo Kasei Industry Co. Ltd.), 128 g of polyester polyol P-2010 (dihydric polyester polyol, OH value 56, manufactured by Kuraray Co. Ltd.), 43 g of isophorone diisocyanate (manufactured by Huels Japan Co. Ltd.), 75 g of toluene and 0.03 g of dibutyl tin dilaurate and 0.02 g of tin 2-ethylhexylate as catalysts were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 50 g of the compound (1) was added for 1 hour and, after aging for another 1 hour, 2.2 g of 2-amino-2-methyl-propanol (manufactured by Nagase Industry Co.) was added and the reaction was ended. The reaction solution was colorless and transparent with a solid content of 50%, a viscosity of 5,000 mPA·s, a number-average molecular weight Mn of the solid content of 25,000, and a weight-average molecular weight Mw of 90,000.

Example 7

257g of polyether polyol PP-2000 (dihydric polyether polyol, OH value 56, manufactured by Sanyo Kasei Industry Co. Ltd.), 32 g of hexamethylene diisocyanate, 64 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 50 g of the compound (1) was added for 1 hour and, after aging for another 1 hour, 2.2 g of 2-amino-2-methylpropanol (manufactured by Nagase Industry Co.) were added and the reaction was ended. The reaction solution was colorless and transparent with a solid content of 50%, a viscosity of 4,000 mPA·s, a number-average molecular weight Mn of the solid content of 30,000, and a weight-average molecular weight Mw of 110,000.

Example 8

257g of polyether polyol PP-2000 (dihydric polyether polyol, OH value 56, manufactured by Sanyo Kasei Industry Co. Ltd.), 44 g of 4,4-diphenylmethane diisocyanate, 76 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 50 g of the compound (1) was added for 1 hour and, after aging for another 1 hour, 2.2 g of 2-amino-2-methylpropanol (manufactured by Nagase Industry Co.) was added and the reaction was ended. The reaction solution was colorless and transparent with a solid content of 50%, a viscosity of 4,000 mPA·s, a number-average molecular weight Mn of the solid content of 26,000, and a weight-average molecular weight Mw of 85,000.

Example 9

223.5 g of polyethylene glycol (Mw = 2000), 5.5 g of polytetraethylene glycol (Mw = 3000), 30 g of dimethylol butanoic acid, 126,2 g of isophorone diisocyanate, 325 g of methyl ethyl ketone, 0.093 g of dibutyl tin dilaurate as a catalyst were charged to a four-necked flask equipped with a stirrer, a reflux cooling tube, a nitrogen introduction tube, a thermometer and a dropping funnel, heated gradually up to 85°C and reacted for 3.5 hours. After confirming the amount of isocyanate groups reamining by titration, the resultant solution was cooled to 30°C, 360 g of IPA was added and 258 g of the compound (12) was dropped for 30 min, then they were reacted at 50°C for 1 hour. 4.0 g of DBA was

added to confirm that absorption characteristic (2270cm$^{-1}$) of NCO in the IR chart disappeared and then the reaction was ended. The reaction solution was slightly opaque, but it became a transparent solution when 180 g of water was added. The obtained Michael-addition type urethane urea resin solution had a solid content of 33%, a viscosity of 2,000 mPA·s, a number-average molecular weight Mn of the solid content of 10,000, and a weight-average molecular weight Mw of 18,000. Fig. 13 shows an IR chart of the urethane urea and Fig. 16 shows a $^1$H-NMR chart, and the assigned formula is shown below.

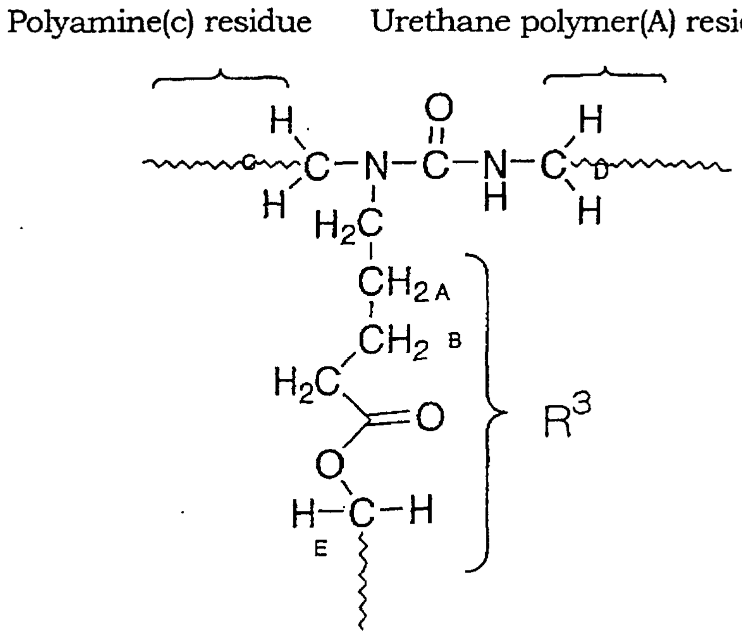


Example 10

47.5 g of polyethylene glycol (Mw = 2000), 1.1 g of polytetraethylene glycol (Mw = 3000), 6.3 g of dimethylol butanoic acid, 26.7 g of isophorone diisocyanate, 55 g of methyl ethyl ketone, 0.02 g of dibutyl tin dilaurate as a catalyst were charged to a four-necked flask equipped with a stirrer, a reflux cooling tube, a nitrogen introduction tube, a thermometer and a dropping funnel, heated gradually up to 85°C and reacted for 3.5 hours. After confirming the amount of isocyanate groups reamining by titration, the resultant solution was cooled to 30°C, 110 g of IPA was added and 24.5 g of the compound (13) and 4.4 g of IPDA were dropped for 30 min and they were further reacted at 50°C for 1 hour. 1.0 g of DBA was added to confirm that absorption characteritic (2270 cm$^{-1}$) of NCO in IR chart disappeared and then the reaction was ended. The reaction solution of the obtained Michael addition type urethane urea resin was colorless and transparent and had a solid content of 35%, a viscosity of 2,000 mPA·s, a number-average molecular weight Mn of the solid content of 12,000, and a weight-average molecular weight Mw of 20,000. Fig. 14 shows an IR chart of the urethane urea and Fig. 17 shows a $^1$H-NMR chart, and the assigned formula is identical with that in Example 9.

Example 11

46.5 g of polyethylene glycol (Mw = 2000), 1.1 g of polytetraethylene glycol (Mw = 3000), 6.2 g of dimethylol butanoic acid, 26.3 g of isophorone diisocyanate, 70 g of methyl ethyl ketone and 0.02 g of dibutyl tin dilaurate as a catalyst were charged to a four-necked flask equipped with a stirrer, a reflux cooling tube, a nitrogen introduction tube, a thermometer and a dropping funnel, heated gradually up to 85°C and reacted for 3.5 hours. After confirming the amount of isocyanate groups reamining by titration, the resultant solution was cooled to 30°C, 105 g of IPA was added and 29 g of a compound (14) and 4.4 g of IPDA were dropped for 30 min and they were further reacted at 50°C for 1 hour. 1.0 g of DBA was added to confirm that absorption characteristic (2270 cm$^{-1}$) of NCO in the IR chart disappeared and then the reaction was ended. The reaction solution of the obtained Michael addition type urethane urea resin was colorless and transparent and had a solid content of 37%, a viscosity of 2,200 mPA·s, a number-average molecular weight Mn of the solid content of 12,800, and a weight-average molecular weight Mw of 22,500. Fig. 15 shows an IR chart of the urethane urea and Fig. 18 shows a $^1$H-NMR chart, and the assigned formula is identical with that in Example

9.

Example 12

257g of polyether polyol PP-2000 (dihydric polyether polyol, OH value 56, manufactured by Sanyo Kasei Industry Co. Ltd.), 43 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 37 g of the compound (18) was dropped for 1 hour and, after aging for another 1 hour, 2.1 g of 2-amino-2-methyl-propanol (manufactured by Nagase Industry Co.) was added and the reaction was ended. The reaction solution was colorless and transparent and had a solid content of 50%, a viscosity of 3,500 mPA·s, a number-average molecular weight Mn of the solid content of 27,000, and a weight-average molecular weight Mw of 95,000.

Example 13

257g of polyether polyol PP-2000 (dihydric polyether polyol, OH value 56, manufactured by Sanyo Kasei Industry Co. Ltd.), 43 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 50 g of the compound (19) were dropped for 1 hour and, after aging for another 1 hour, 2.2 g of 2-amino-2-methyl-propanol (manufactured by Nagase Industry Co.) was added and the reaction was ended. The reaction solution was colorless and transparent and had a solid content of 50%, a viscosity of 3,000 mPA·s, a number-average molecular weight Mn of the solid content of 27,000, and a weight-average molecular weight Mw of 94,000.

Example 14

257g of polyether polyol PP-2000 (dihydric polyether polyol, OH value 56, manufactured by Sanyo Kasei Industry Co. Ltd.), 43 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 56 g of the compound (20) was dropped for 1 hour and, after aging for another 1 hour, 2.0 g of 2-amino-2-methyl-propanol (manufactured by Nagase Industry Co.) was added and the reaction was ended. The reaction solution was colorless and transparent and had a solid content of 50%, a viscosity of 2,500 mPA·s, a number-average molecular weight Mn of the solid content of 27,000, weight-average molecular weight Mw of 96,000.

Example 15

257g of polyether polyol PP-2000 (dihydric polyether polyol, OH value 56, manufactured by Sanyo Kasei Industry Co. Ltd.), 43 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 35 g of the compound (21) was dropped for 1 hour and, after aging for another 1 hour, 2.0 g of 2-amino-2-methyl-propanol (manufactured by Nagase Industry Co.) was added and the reaction was ended. The reaction solution was colorless and transparent and had a solid content of 50%, a viscosity of 2,500 mPA·s, a number-average molecular weight Mn of the solid content of 29,000, weight-average molecular weight Mw of 100,000.

Example 16

129g of polyether polyol PP-2000 (dihydric polyether polyol, OH value 56, manufactured by Sanyo Kasei Industry Co. Ltd.), 128 g of polyester polyol P-2010 (dihydric polyester polyol, OH value 56, manufactured by Kuraray

Co. Ltd.), 43 g of isophorone diisocyanate (manufactured by Hules Japan Co. Ltd.), 75 g of toluene and 0.03 g of dibutyl tin dilaurate and 0.02 g of tin 2-ethylhexanoate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 37 g of the compound (18) was dropped for 1 hour and, after aging for another 1 hour, 2.2 g of 2-amino-2-methyl-propanol (manufactured by Nagase Industry Co.) was added and the reaction was ended. The reaction solution was colorless and transparent and had a solid content of 50%, a viscosity of 3,500 mPA·s, a number-average molecular weight Mn of the solid content of 24,000, and a weight-average molecular weight Mw of 90,000.

Example 17

257g of polyether polyol PP-2000 (dihydric polyether polyol, OH value 56, manufactured by Sanyo Kasei Industry Co. Ltd.), 32 g of hexamethylene diisocyanate, 64 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 35 g of the compound (18) was dropped for 1 hour and, after aging for another 1 hour, 2.2 g of 2-amino-2-methylpropanol (manufactured by Nagase Industry Co.) was added and the reaction was ended. The reaction solution was colorless and transparent and had a solid content of 50%, a viscosity of 3,000 mPA·s, a number-average molecular weight Mn of the solid content of 25,000, and a weight-average molecular weight Mw of 98,000.

Example 18

257g of polyether polyol PP-2000 (dihydric polyether polyol, OH value 56, manufactured by Sanyo Kasei Industry Co. Ltd.), 44 g of 4, 4-diphenylmethane diisocyanate, 76 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 37 g of the compound (18) were dropped for 1 hour and, after aging for another 1 hour, 2.2 g of 2-amino-2-methylpropanol (manufactured by Nagase Industry Co.) was added and the reaction was ended. The reaction solution was colorless and transparent and had a solid content of 50%, a viscosity of 3,000 mPA·s, a number-average molecular weight Mn of the solid content of 23,000, and a weight-average molecular weight Mw of 83,000.

Example 19

50.9 g of polyethylene glycol (Mw = 2000), 1.25 g of polytetraethylene glycol (Mw = 3000), 6.8 g of dimethylol butanoic acid, 28.8 g of isophorone diisocyanate, 70 g of methyl ethyl ketone, and 0.02 g of dibutyl tin dilaurate as a catalyst were charged to a four-necked flask equipped with a stirrer, a reflux cooling tube, a nitrogen introduction tube, a thermometer and a dropping funnel, heated gradually up to 85°C and reacted for 3.5 hours. After confirming the amount of isocyanate groups reamining by titration, the resultant solution was cooled to 30°C, 80 g of IPA was added, and 12.3 g of IPDA was dropped for 30 min and they were reacted at 50°C for 1 hour. After confirming that absorptoption characteristic (2270 $cm^{-1}$) of NCO in the IR chart disappeared, 4.1 g of polyethylene glycol (average polymerization degree = 4.5) acrylate was added to react at 50°C for 2 hours. The obtained reaction solution of Michael addition type urethane urea resin was colorless and transparent and had a solid content of 35%, a viscosity of 2,000 mPA·s, a number-average molecular weight Mn of the solid content of 12,000, and a weight-average molecular weight Mw of 25,000.

Example 20

257g of polyether polyol PP-2000 (dihydric polyether polyol, OH value 56, manufactured by Sanyo Kasei Industry Co. Ltd.), 43 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 160 g of ethyl acetate and 0.9 g of acetyl acetone were added, then 40 g of the compound (1) was dropped for

1 hour and the reaction was ended. The reaction solution was colorless and transparent and had a solid content of 50%, a viscosity of 3,000 mPA·s, a number-average molecular weight Mn of the solid content of 22,000, and a weight-average molecular weight Mw of 75,000.

Example 21

257g of polyether polyol PP-2000 (dihydric polyether polyol, OH value 56, manufactured by Sanyo Kasei Industry Co. Ltd.), 43 g of isophorone diisocyanate (Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 160 g of ethyl acetate and 0.9 g of acetyl acetone were added, then 20 g of the compound (22) was dropped for 1 hour and, after aging for another 1 hour, 20 g of 2-amino-2-methyl-propanol (manufactured by Nagase Industry Co.) was added and the reaction was ended. The reaction solution was colorless and transparent and had a solid content of 50%, a viscosity of 2,500 mPA·s, a number-average molecular weight Mn of the solid content of 20,000, and a weight-average molecular weight Mw of 60,000.

Example 22

257g of polyether polyol PP-2000 (dihydric polyether polyol, OH value 56, manufactured by Sanyo Kasei Industry Co. Ltd.), 43 g of isophorone diisocyanate (Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 160 g of ethyl acetate and 0.9 g of acetyl acetone were added, then 25 g of the compound (23) was dropped for 1 hour and, after aging for another 1 hour, 20 g of 2-amino-2-methyl-propanol (manufactured by Nagase Industry Co.) was added and the reaction was ended. The reaction solution was colorless and transparent and had a solid content of 50%, a viscosity of 2,500 mPA·s, a number-average molecular weight of the solid content of 22,000, and a weight-average molecular weight Mw of 70,000.

Example 23

257g of polyether polyol PP-2000 (dihydric polyether polyol, OH value 56, manufactured by Sanyo Kasei Industry Co. Ltd.), 32 g of hexamethylene diisocyanate, 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 160 g of ethyl acetate and 0.9 g of acetyl acetone were added, then 25 g of the compound (22) was dropped for 1 hour and, after aging for another 1 hour, 20 g of 2-amino-2-methylpropanol (manufactured by Nagase Industry Co.) was added and the reaction was ended. The reaction solution was colorless and transparent and had a solid content of 50%, a viscosity of 2,500 mPA·s, a number-average molecular weight Mn of the solid content of 22,000, and a weight-average molecular weight Mw of 68,000.

Example 24

254g of polyester polyol P-2010 (dihydric polyester polyol, OH value 56, manufactured by Kuraray Co. Ltd.), 43 g of isophorone diisocyanate (Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 160 g of ethyl acetate and 0.9 g of acetyl acetone were added, then 20 g of the compound (22) was dropped for 1 hour and, after aging for another 1 hour, 20 g of 2-amino-2-methylpropanol (manufactured by Nagase Industry Co.) was added and the reaction was ended. The reaction solution was colorless and transparent and had a solid content of 50%, a viscosity of 2,500 mPA·s, a number-average molecular weight Mn of the solid content of 18,000, and a weight-average molecular weight Mw of 60,000.

Example 25

257g of polyether polyol PP-2000 (dihydric polyether polyol, OH value 56, manufactured by Sanyo Kasei Industry Co. Ltd.), 43 g of isophorone diisocyanate (Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 160 g of ethyl acetate and 0.9 g of acetyl acetone were added, then 20 g of the compound (22) was dropped for 1 hour and the reaction was ended. The reaction solution was colorless and transparent and had a solid content of 50%, a viscosity of 2,400 mPA·s, a number-average molecular weight Mn of the solid content of 19,000, and a weight-average molecular weight Mw of 58,000.

Example 26

259g of polyether polyol PP-2000 (dihydric polyether polyol, OH value 56, manufactured by Sanyo Kasei Industry Co. Ltd.), 41 g of 2,2,4-trimethylhexamethylene diisocyanate, 76 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 36 g of the compound (1) was dropped for 1 hour and after aging for another 1 hour, 2.2 g of 2-amino-2-methyl-propanol (manufactured by Nagase Industry Co.) was added and the reaction was ended. The reaction solution was colorless and transparent and had a solid content of 50%, a viscosity of 2,800 mPA·s, a number-average molecular weight Mn of the solid content of 27,000, and a weight-average molecular weight Mw of 90,000.

Example 27

257g of Kuraray polyol P-2010 (dihydric polyesterpolyol, OH value 56, manufactured by Kuraray Co. Ltd.), 43 g of isophorone diisocyanate (Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 150 g of ethyl acetate and 0.9 g of acetyl acetone were added, then 44 g of the compound (4) was dropped for 1 hour, after aging for another 1 hour, 2.1 g of 2-amino-2-methyl-propanol (manufactured by Nagase Industry Co.) were added and the reaction was ended. The reaction solution was colorless and transparent and had a solid content of 50%, a viscosity of 4,000 mPA·s, a number-average molecular weight Mn of the solid content of 20,000, and a weight-average molecular weight Mw of 80,000.

Example 28

257g of Kuraray polyol P-2010 (dihydric polyesterpolyol, OH value 56, manufactured by Kuraray Co. Ltd.), 43 g of isophorone diisocyanate (Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 150 g of ethyl acetate and 0.9 g of acetyl acetone were added, then 37 g of the compound (1) was dropped for 1 hour, after aging for another 1 hour, 2.2 g of 2-amino-2-methyl-propanol (manufactured by Nagase Industry Co.) were added and the reaction was ended. The reaction solution was colorless and transparent and had a solid content of 50%, a viscosity of 4,200 mPA·s, a number-average molecular weight Mn of the solid content of 23,000, and a weight-average molecular weight Mw of 92,000.

Example 29

258g of Kuraray polyol P-2010 (dihydric polyesterpolyol, OH value 56, manufactured by Kuraray Co. Ltd.), 42 g of lysine diisocyanate (manufactured by Kyowa Hakko Kogyo Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 150 g of

ethyl acetate and 0.9 g of acetyl acetone were added, then 37 g of the compound (1) was dropped for 1 hour, after aging for another 1 hour, 2.2 g of 2-amino-2-methyl-propanol (manufactured by Nagase Industry Co.) was added and the reaction was ended. The reaction solution was colorless and transparent and had a solid content of 50%, a viscosity of 18,000 mPA·s, a number-average molecular weight Mn of the solid content of 26,000, and a weight-average molecular weight Mw of 89,000.

Example 30

258g of Kuraray polyol P-2010 (dihydric polyesterpolyol, OH value 56, manufactured by Kuraray Co. Ltd.), 41 g of 2,2,4-trimethylhexamethylene diisocyanate, 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 150 g of ethyl acetate and 0.9 g of acetyl acetone were added, then 39 g of the compound (1) was dropped for 1 hour, after aging for another 1 hour, 2.2 g of 2-amino-2-methyl-propanol (manufactured by Nagase Industry Co.) was added and the reaction was ended. The reaction solution was colorless and transparent and had a solid content of 50%, a viscosity of 15,000 mPA·s, a number-average molecular weight Mn of the solid content of 24,000, and a weight-average molecular weight Mw of 82,000.

Example 31

257g of Kuraray polyol P-2010 (dihydric polyesterpolyol, OH value 56, manufactured by Kuraray Co. Ltd.), 43 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 150 g of ethyl acetate and 0.9 g of acetyl acetone were added, then 40 g of the compound (20) was dropped for 1 hour, after aging for another 1 hour, 2.2 g of 2-amino-2-methyl-propanol (manufactured by Nagase Industry Co.) was added and the reaction was ended. The reaction solution was colorless and transparent and had a solid content of 50%, a viscosity of 6,000 mPA·s, a number-average molecular weight Mn of the solid content of 25,000, and a weight-average molecular weight Mw of 84,000.

Example 32

126 g of Kuraray polyol P-2010 (dihydric polyesterpolyol, OH value 56, manufactured by Kuraray Industry Co. Ltd.), 131 g of polyether polyol PP-2000 (dihydric polyether polyol, OH value 56, manufactured by Sanyo Kasei Kogyo Co. Ltd.), 43 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 150 g of ethyl acetate and 0.9 g of acetyl acetone were added, then 40 g of the compound (1) was dropped for 1 hour, after aging for another 1 hour, 2.2 g of 2-amino-2-methyl-propanol (manufactured by Nagase Industry Co.) was added and the reaction was ended. The reaction solution was colorless and transparent and had a solid content of 50%, a viscosity of 4,000 mPA·s, a number-average molecular weight Mn of the solid content of 21,000, and a weight-average molecular weight Mw of 80,000.

Example 33

256 g of PLACCEL 220 (polycaplolactone diol, Dycell Chemical Industry Co. Ltd.), 43 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 150 g of ethyl acetate and 0.9 g of acetyl acetone were added, then 37 g of the compound (1) was dropped for 1 hour, after aging for another 1 hour, 2.2 g of 2-amino-2-methyl-propanol (manufactured by Nagase Industry Co.) was added and the reaction was ended. The reaction solution was colorless and transparent and had a solid content of 50%, a viscosity of 7,200 mPA·s, a number-average molecular weight Mn of the solid content of 22,000, and a weight-average molecular weight Mw of 90,000.

Example 34

225 g of polyether polyol PP-1000 (dihydric polyether polyol, OH value 112, manufactured by Sanyo Kasei Kogyo Co. Ltd.), 75 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 400 g of ethyl acetate and 0.9 g of acetyl acetone were added, then 85 g of the compound (4) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 4,200 mPA·s, a number-average molecular weight Mn of the solid content of 23,000, and a weight-average molecular weight Mw of 96,000.

Example 35

225 g of polyether polyol PP-1000 (dihydric polyether polyol, OH value 112, manufactured by Sanyo Kasei Kogyo Co. Ltd.), 75 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming the amount of isocyanate groups reamining by titration, the resultant solution was cooled to 40°C, 396 g of ethyl acetate and 0.9 g of acetyl acetone were added, then 69 g of the compound (1) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 4,500 mPA·s, a number-average molecular weight Mn of the solid content of 25,000, and a weight-average molecular weight Mw of 105,000.

Example 36

225 g of polyether polyol PP-1000 (dihydric polyether polyol, OH value 112, manufactured by Sanyo Kasei Kogyo Co. Ltd.), 75 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 2 hours. After confirming the amount of isocyanate groups reamining by titration, the resultant solution was cooled to 40°C, 398 g of ethyl acetate and 0.9 g of acetyl acetone were added, then 79 g of the compound (2) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 4,400 mPA·s, the number-average molecular weight Mn of the solid content of 24,000, weight-average molecular weight Mw of 100,000.

Example 37

225 g of polyether polyol PP-1000 (dihydric polyether polyol, OH value 112, manufactured by Sanyo Kasei Kogyo Co. Ltd.), 75 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 2 hours. After confirming the amount of isocyanate groups reamining by titration, the resultant solution was cooled to 40°C, 395 g of ethyl acetate and 0.9 g of acetyl acetone were added, then 67 g of the compound (8) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 4,600 mPA·s, the number-average molecular weight Mn of the solid content of 26,000, and a weight-average molecular weight Mw of 108,000.

Example 38

225 g of polyether polyol PP-1000 (dihydric polyether polyol, OH value 112, manufactured by Sanyo Kasei Kogyo Co. Ltd.), 75 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 2

hours. After confirming the amount of isocyanate groups reamining by titration, the resultant solution was cooled to 40°C, 397 g of ethyl acetate and 0.9 g of acetyl acetone were added, then 75 g of the compound (20) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 4,400 mPA·s, the number-average molecular weight Mn of the solid content of 24,000, and a weight-average molecular weight Mw of 102,000.

Example 39

224 g of PLACCEL 210 (dihydric captolactone polyol, OH value 114, manufactured by Dycell Chemical Kogyo Co. Ltd.), 76 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 2 hours. After confirming the amount of isocyanate groups reamining by titration, the resultant solution was cooled to 40°C, 396 g of ethyl acetate and 0.9 g of acetyl acetone were added, then 70 g of the compound (1) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 5,400 mPA·s, the number-average molecular weight Mn of the solid content of 24,000, and a weight-average molecular weight Mw of 102,000.

Example 40

225 g of Kuraray polyol P-1010 (dihydric polyester polyol, OH value 112, manufactured by Kuraray Co. Ltd.), 75 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 2 hours. After confirming the amount of isocyanate groups reamining by titration, the resultant solution was cooled to 40°C, 386 g of ethyl acetate and 0.9 g of acetyl acetone were added, then 69 g of the compound (1) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 5,500 mPA·s, the number-average molecular weight Mn of the solid content of 21,000, and a weight-average molecular weight Mw of 90,000.

Example 41

246 g of polyether polyol PP-2000 (dihydric polyether polyol, OH value 56, manufactured by Sanyo Kasei Kogyo Co. Ltd.), 53 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 2 hours. After confirming the amount of isocyanate groups reamining by titration, the resultant solution was cooled to 40°C, 227 g of ethyl acetate and 0.9 g of acetyl acetone were added, then 74 g of the compound (1) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 3,500 mPA·s, the number-average molecular weight Mn of the solid content of 23,000, and a weight-average molecular weight Mw of 95,000.

Example 42

208 g of polyether polyol PP-1000 (dihydric polyether polyol, OH value 112, manufactured by Sanyo Kasei Kogyo Co. Ltd.), 92 g of isophorone diisocyanate (manufactured by Hules Japan Co. Ltd.), 75 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 2 hours. After confirming the amount of isocyanate groups reamining by titration, the resultant solution was cooled to 40°C, 410 g of ethyl acetate and 0.9 g of acetyl acetone were added, then 128 g of the compound (1) was dropped for 1 hour, after aging for another 1 hour, 2.1 g of 2-amino-2-methyl-propanol (manufactured by Nagase Industry Co.) was added and the reaction was ended. The reaction solution was colorless and transparent and had a solid content of 40%, a viscosity of 3,000 mPA·s, the number-average molecular weight Mn of the solid content of 20,000, and a weight-average molecular weight Mw of 60,000.

Example 43

45.2 g of polyethylene glycol (Mw = 2000), 1.1 g of polytetraethylene glycol (Mw = 3000), 6.0 g of dimethylol butanoic acid, 25.5 g of isophorone diisocyanate, 70 g of methyl ethyl ketone, and 0.02 g of dibutyl tin dilaurate as a catalyst were charged to a four-necked flask equipped with a stirrer, a reflux cooling chamber, a nitrogen introduction tube, a thermometer and a dropping funnel, heated gradually up to 85°C and reacted for 3.5 hours. After confirming the amount of isocyanate groups reamining by titration, the resultant solution was cooled to 30°C, 80 g of IPA was added, and 42.5 g of the compound (1-1) was dropped for 30 min, after aging for another 1 hour at 50°C, 0.9 g of DBA was added and, after confirming that absorption characteristic (2270cm$^{-1}$) of NCO in the IR chart disappeared, the reaction was ended. The obtained reaction solution of Michael addition type urethane urea resin was a transparent solution with a solid content of 37%, a viscosity of 2,500 mPA·s, a number-average molecular weight Mn of the solid content of 11,000, and a weight-average molecular weight Mw of 20,000.

Example 44

48.3 g of polyethylene glycol (Mw = 2000), 1.2 g of polytetraethylene glycol (Mw = 3000), 6.45 g of dimethylol butanoic acid, 27.3 g of isophorone diisocyanate, 70 g of methyl ethyl ketone, and 0.02 g of dibutyl tin dilaurate as a catalyst were charged to a four-necked flask equipped with a stirrer, a reflux cooling chamber, a nitrogen introduction tube, a thermometer and a dropping funnel, heated gradually up to 85°C and reacted for 3.5 hours. After confirming the amount of isocyanate groups reamining by titration, the resultant solution was cooled to 30°C, 80 g of IPA was added, and 25.2 g of the compound (12) and 4.5 g of isophorone diamine (IPDA) were dropped for 30 min, after aging for another 1 hour at 50°C, 0.85 g of DBA was added and, after confirming that absorption characteristic (2270 cm$^{-1}$) of NCO in an IR chart disappeared, the reaction was ended. The obtained reaction solution of Michael addition type urethane urea resin was transparent solution with a solid content of 38%, a viscosity of 2,100 mPA·s, a number-average molecular weight Mn of the solid content of 9,000, and a weight-average molecular weight Mw of 16,000.

Example 45

71.3 g of polyethylene glycol (Mw = 2000), 1.75 g of polytetraethylene glycol (Mw = 3000), 14.5 g of isophorone diisocyanate, 80 g of methyl ethyl ketone, and 0.02 g of dibutyl tin dilaurate as a catalyst were charged to a four-necked flask equipped with a stirrer, a reflux cooling chamber, a nitrogen introduction tube, a thermometer and a dropping funnel, heated gradually up to 85°C and reacted for 4.5 hours. After confirming the amount of isocyanate groups reamining by titration, the resultant solution was cooled to 30°C, 70 g of IPA was added, and 26.8 g of the compound (12) was dropped for 30 min, after aging for another 1 hour at 50°C, 0.45 g of DBA was added, and after confirming that absorption characteristic (2270 cm$^{-1}$) of NCO in an IR chart disappeared, the reaction was ended. The obtained reaction solution was slightly opaque, but when 50g of water was added, the solution became transparent. The obtained Michael addition type urethane urea resin solution had a solid content of 37.5%, a viscosity of 1,400 mPA·s, the number-average molecular weight Mn of the solid content of 11,000, and a weight-average molecular weight Mw of 18,700.

Example 46

73.9 g of polyethylene glycol (Mw = 2000), 1.80 g of polytetraethylene glycol (Mw = 3000), 15.0 g of isophorone diisocyanate, 80 g of methyl ethyl ketone, and 0.02 g of dibutyl tin dilaurate as a catalyst were charged to a four-necked flask equipped with a stirrer, a reflux cooling chamber, a nitrogen introduction tube, a thermometer and a dropping funnel, heated gradually up to 85°C and reacted for 4.5 hours. After confirming the amount of isocyanate groups reamining by titration, the resultant solution was cooled to 30°C, 80 g of IPA was added, and 13.9 g of the compound (12) and 2.5 g of isophorone diamine (IPDA) were dropped for 30 min, after aging for another 1 hour at 50°C, 0.46 g of DBA was added, and after confirming that absorption characteristic (2270 cm$^{-1}$) of NCO in an IR chart disappeared, the reaction was ended. The reaction solution was somewhat cloudy but became a transparent solution with addition of 50 g of water. The obtained Michael addition type urethane urea resin solution was colorless and transparent and had a solid content of 37.5%, a viscosity of 1,650 mPA·s, a number-average molecular weight Mn of the solid content of 11,000 and a weight-average molecular weight Mw of 18,900.

Example 47

2.6 g of aqueous ammonia (28%) was added to 143 g of the resin solution (NV 35%) obtained in Example 10 into a four-necked flask equipped with a stirrer, a reflux cooling chamber, a nitrogen introduction tube, a thermometer and a dropping funnel, and stirred at 50°C for 1 hour. 120 g of water was added and a mantle heater was set to 100°C,

a nitrogen gas was charged at 50 $cm^3$/min and stirred at 400 rpm to substitute the solvent. After confirming that NV was 35%, ammonia was added till pH was in the range of 9 to 10, and 667 g of colloidal silica (Cataloid SI-30 NV 30%, manufactured by Catalyst Chemical Co.) was charged to a dropping funnel and dropped for 20 min. The NV of the obtained solution was 31%.

Example 48

100 g of the resin solution obtained in Example 47 was charged to a four-necked flask equipped with a stirrer, a reflux cooling chamber, a nitrogen introduction tube, a thermometer and a dropping funnel, and 0.065 g of γ-aminopropyl trimethoxysilane (KBM903) was further added, then heated while being stirred at 70°C for 2 hours to conduct grafting. The NV of the obtained solution was 33%.

Example 49

45.0 g of polyethylene glycol (Mw = 2000), 1.1 g of polytetraethylene glycol (Mw = 3000), 5.9 g of dimethylol propionic acid, 25.4 g of isophorone diisocyanate, 70 g of methyl ethyl ketone and 0.02 g of dibutyl tin dilaurate as a catalyst were charged to a four-necked flask equipped with a stirrer, a reflux cooling chamber, a nitrogen introduction tube, a thermometer and a dropping funnel, heated gradually up to 85°C and reacted for 3.5 hours. After confirming the amount of isocyanate groups reamining by titration, the resultant solution was cooled to 30°C, 80 g of IPA was added, and 35 g of the compound (15) and 4.2 g of IPDA were dropped for 30 min and, after reacting for another 1 hour at 50°C, 0.8 g of DBA was added and, after confirming that absorption characteristic (2270 $cm^{-1}$) of NCO in an IR chart disappeared, the reaction was ended. The obtained Michael addition type urethane urea solution was colorless and transparent and had a solid content of 37.5%, a viscosity of 2,000 mPA·s, a number-average molecular weight Mn of the solid content of 12,700 and a weight-average molecular weight Mw of 23,000.

Example 50

71.5 g of polyethylene glycol (Mw = 2000), 1.2 g of polytetraethylene glycol (Mw = 3000), 14.5 g of isophorone diisocyanate, 70 g of methyl ethyl ketone and 0.02 g of dibutyl tin dilaurate as a catalyst were charged to a four-necked flask equipped with a stirrer, a reflux cooling chamber, a nitrogen introduction tube, a thermometer and a dropping funnel, heated gradually up to 85°C and reacted for 4.5 hours. After confirming the amount of isocyanate groups reamining by titration, the resultant solution was cooled to 30°C, 80 g of IPA was added, and 19.3 g of a compound (17) and 2.4 g of IPDA were dropped for 30 min and, after reacting for another 1 hour at 50°C, 0.45 g of DBA was added and, after confirming that absorption characteristic (2270 $cm^{-1}$) of NCO in an IR chart disappeared, the reaction was ended. The obtained Michael addition type urethane urea solution was colorless and transparent and had a solid content of 37%, a viscosity of 2,100 mPA·s, a number-average molecular weight Mn of the solid content of 10,700 and a weight-average molecular weight Mw of 19,500.

Example 51

68.2 g of polyethylene glycol (Mw = 2000), 1.67 g of polytetraethylene glycol (Mw = 3000), 0.71 of N-methyl diethanolamine (MDA), 16.3 g of isophorone diisocyanate, 80 g of methyl ethyl ketone and 0.01 g of dibutyl tin dilaurate as a catalyst were charged to a four-necked flask equipped with a stirrer, a reflux cooling chamber, a nitrogen introduction tube, a thermometer and a dropping funnel, heated gradually up to 85°C and reacted for 3.5 hours. After confirming the amount of isocyanate groups reamining by titration, the resultant solution was cooled to 30°C, 80 g of IPA was added, and 26.3 g of the compound (24) was dropped for 30 min and, after reacting for another 1 hour at 50°C, 0.40 g of N,N-diethyl-1,3-propane diamine was added and, after confirming that absorption characteristic (2270 $cm^{-1}$) of NCO in an IR chart disappeared, the reaction was ended. The obtained Michael addition type urethane urea solution was colorless and transparent and had a solid content of 36.6%, a viscosity of 2,500 mPA·s, a number-average molecular weight Mn of the solid content of 11,000 and a weight-average molecular weight Mw of 19,000.

150 g of the obtained resin solution was charged into a four-necked flask equipped with a stirrer, a reflux cooling chamber, a nitrogen introduction tube, a thermometer and a dropping funnel, methyl ethyl ketone and IPA were removed by stripping at 70°C while dropping acetic acid and ion exchanged water to obtain an aqueous emulsion.

Example 52

74.2 g of polyethylene glycol (Mw = 2000), 1.83 g of polytetraethylene glycol (Mw = 3000), 15.1 g of isophorone diisocyanate, 80 g of methyl ethyl ketone and 0.02 g of dibutyl tin dilaurate as a catalyst were charged to a four-necked

flask equipped with a stirrer, a reflux cooling chamber, a nitrogen introduction tube, a thermometer and a dropping funnel, heated gradually up to 85°C and reacted for 4.0 hours. After confirming the amount of isocyanate groups reamining by titration, the resultant solution was cooled to 30°C, 80 g of IPA was added, 12.2 g of a compound (24) and 2.5 g of IPDA were dropped for 30 min and, after reacting for another 1 hour at 50°C, 0.47 g of DBA was added and, after confirming that absorption characteristic (2270 $cm^{-1}$) of NCO in an IR chart disappeared, the reaction was ended. The obtained Michael addition type urethane urea solution was colorless and transparent and had a solid content of 37%, a viscosity of 2,300 mPA·s, a number-average molecular weight Mn of the solid content of 10,600 and a weight-average molecular weight Mw of 18,000.

150 g of the obtained resin solution was charged into a four-necked flask equipped with a stirrer, a reflux cooling chamber, a nitrogen introduction tube, a thermometer and a dropping funnel, and methyl ethyl ketone and IPA were removed by stripping at 70°C while dropping acetic acid and ion exchanged water to obtain an aqueous emulsion.

Example 53

135 g of the resin solution obtained in Example 52 was charged into a four-necked flask equipped with a stirrer, a reflux cooling tube, a nitrogen introduction tube, a thermometer and a dropping funnel, and methyl ethyl ketone and IPA were removed by stripping at 80°C while dropping acetic acid and ion exchanged water to obtain an aqueous emulsion. The solid content was 35%. Further, 2000 g of alumina sol (Cataloid AS-2, NV 10%, manufactured by Catalyst Chemical Co. Ltd.) was charged to a dropping funnel, and dropped for 10 min. Further, the temperature was elevated to 100°C, NV was increased to 20%, and grafting of alumina sol was completed. The obtained dispersion was a slightly yellowed thixotropic liquid.

Example 54

50.9 g of polyethylene glycol (Mw = 2000), 1.25 g of polytetraethylene glycol (Mw = 3000), 6.8 g of dimethylol butanoic acid, 28.8 g of isophorone diisocyanate, 70 g of methyl ethyl ketone and 0.02 g of dibutyl tin dilaurate as a catalyst were charged to a four-necked flask equipped with a stirrer, a reflux cooling chamber, a nitrogen introduction tube, a thermometer and a dropping funnel, and heated gradually up to 85°C and reacted for 3.5 hours. After confirming the amount of isocyanate groups reamining by titration, the resultant solution was cooled to 30°C, 80 g of IPA was added, and 12.3 g of IPDA was dropped for 30 min, after reacting for another 1 hour at 50°C and after confirming that absorption characteristic (2270 $cm^{-1}$) of NCO in an IR chart disappeared, 3.5 g of dimethyl aminoethyl methyl chloride acrylate was added and reacted for 2 hours at 50°C. The obtained Michael addition type urethane urea solution was colorless and transparent and had a solid content of 35%, a viscosity of 1,900 mPA·s, a number-average molecular weight Mn of the solid content of 11,000 and a weight-average molecular weight Mw of 22,000.

Comparative Example 1

182 g of polyether polyol PP-2000 (dihydric polyether polyol, OH value 56, manufactured by Sanyo Kasei Kogyo Co. Ltd.), 18.5 g of isophorone diisocyanate (manufactured by Hules Japan Co. Ltd.), 200 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 3 hours. The amount of isocyanate group remaining was determined by IR and when there was none remaining, the reaction was ended and the resultant solution was cooled. The reaction solution was colorless and transparent and had a solid content of 50%, a viscosity of 3,500 mPA·s, a number-average molecular weight Mn of the solid content of 25,000, and a weight-average molecular weight Mw of 95,000.

Comparative Example 2

185.5 g of polyester polyol P-2010 (dihydric polyester polyol, OH value 56, manufactured by Kuraray Co. Ltd.), 14.5 g of hexamethylene diisocyanate, 200 g of toluene and 0.05 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 3 hours. The amount of isocyanate group remaining was determined by IR, and when there was none remaining, the reaction was ended and the resultant solution was cooled. The reaction solution was colorless and transparent and had a solid content of 50%, a viscosity of 4,500 mPA·s, a number-average molecular weight Mn of the solid content of 30,000, and a weight-average molecular weight Mw of 90,000.

Comparative Example 3

35.4 g of 1,6-hexane diol, 88.8 g of isophorone diisocyanate (manufactured by Hules Japan Co. Ltd.), 124 g of toluene and 0.02 g of dibutyl tin dilaurate as a catalyst were charged to a four-necked flask equipped with a stirrer, a reflux cooling chamber, a nitrogen introduction tube, a thermometer and a dropping funnel, heated gradually up to 100°C and reacted for 2 hours. After confirming the amount of isocyanate groups reamining by titration, the resultant solution was cooled to 40°C, 154 g of a 44% solution (weight/weight) of isophorone diamine in toluene was dropped for 1 hour, and after aging for 1 hour, 17.8 g of 2-amino-2-methyl-propanol (manufactured by Nagase Sangyo Co. Ltd.) was added and the reaction was ended. The reaction solution was colorless and transparent and had a solid content of 50%, a viscosity of 1,500 mPA·s, a number-average molecular weight Mn of the solid content of 2,000 and a weight-average molecular weight Mw of 7,000.

Comparative Example 4

A solution comprising 75 g of butyl acrylate, 20 g of 2-ethylhexyl acrylate, 5 g of 2-hydroxyethyl acrylate, 135 g of ethyl acetate, 15 g of toluene and 0.2 g of benzoyl peroxide was charged to a four-necked flask equipped with a stirrer, a nitrogen introduction tube, a thermometer and dropping funnel, to a reactor equipped with a reflux cooler and reacted under a nitrogen gas stream at 80 to 85°C for 8 hours. The solution was colorless and transparent and had a solid content of 40% and a viscosity of 5200 mPa·s.

Comparative Example 5

A solution comprising 75 g of butyl acrylate, 5 g of 2-ethylhexyl acrylate, 135 g of ethyl acetate, 15 g of toluene and 0.2 g of benzoyl peroxide was charged to a four-necked flask equipped with a stirrer, a nitrogen introduction tube, a thermometer and dropping funnel to a reactor equipped with a reflux cooler, and reacted under a nitrogen gas stream at 80 to 85°C for 8 hours. The solution was colorless and transparent and had a solid content of 40% and a viscosity of 5200 mPa·s.

Comparative Example 6

271 g of Kuraray polyol P-2010 (dihydric polyester polyol, OH value 56, manufactured by Kuraray Co. Ltd.), 29 g of isophorone diisocyanate (Hules Japan Co. Ltd.), 75 g of toluene and 0.05 g of dibutyl tin dilaurate as a catalyst were charged to a four-necked flask equipped with a stirrer, a reflux cooling tube, a nitrogen introduction tube, a thermometer and a dropping funnel, heated gradually up to 100°C and reacted for 2 hours. After confirming that the isocyanate groups disappeared by titration, the solution was cooled to 40°C, 225 g of ethyl acetate and 0.9 g of acetyl acetone were added and aged for another one hour and the reaction was ended. The reaction solution was colorless and transparent and had a solid content of 50%, a viscosity of 17,000 mPA·s, a number-average molecular weight Mn of the solid content of 46,000, and a weight-average molecular weight Mw of 110,000.

Comparative Example 7

52.0 g of polyethylene glycol (Mw = 2000), 1.27 g of polytetraethylene glycol (Mw = 3000), 6.9 g of dimethylol butanoic acid, 29.4 g of isophorone diisocyanate, 70 g of methyl ethyl ketone and 0.02 g of dibutyl tin dilaurate as a catalyst were charged to a four-necked flask equipped with a stirrer, a reflux cooling tube, a nitrogen introduction tube, a thermometer and a dropping funnel, heated gradually up to 85°C and reacted for 3.5 hours. After confirming the amount of isocyanate groups reamining by titration, the resultant solution was cooled to 30°C. After adding 90 g of IPA, 9.7 g of IPDA was dropped for 30 min and reacted at 50°C for one hour, and then 0.76 g of DBA was further added and reacted at 50°C for one hour to confirm that absorption characteristic (2270 $cm^{-1}$) of NCO in an IR chart disappeared. The solution was colorless and transparent and had a solid content of 38.6%, a viscosity of 2,500 mPA·s, a number-average molecular weight Mn of the solid content of 13,000, and a weight-average molecular weight Mw of 22,000.

Examples 55 - 70, Comparative Examples 8 - 12

2 g of 75% ethyl acetate solution of hexamethylene diisocyanate trimethylol propane adduct as a curing agent (D) was blended with each of 100 g of the Michael addition type urethane urea resin solutions synthesized in Examples 1 to 8 and 12 to 18 and the urethane urea resins synthesized in Comparative Examples 1 to 4 to prepare adhesives. The adhesives were coated by an applicator on peel paper to a dry thickness of 25 µm, dried at 100°C for 2 min and

the adhesion layers on the peel paper were affixed to substrates to prepare adhesive tapes. After leaving at a room temperature for one week, adhesive strength, holding strength, ball tack and peelability were tested. The test method and the substrate used are as described below.

< Adhesive Strength >

A polyethylene terephthalate film (25 μm thickness) was used as the substrate, after leaving, the peel paper peeled from the adhesive tape was affixed to a stainless steel plate (SUS304) of 0.4 mm thickness at 23°C, 65% RH and roll pressed in accordance with JIS and, after 20 min, peeling strength (180° peeling) pulling rate: 300 mm/min; unit: g/25 mm width) was measured by a Shopper type peeling tester.

< Holding strength >

A polyethylene terephthalate film (25 μm thickness) was used as the substrate, after leaving, peel paper was peeled from the adhesive tape, which was affixed to a stainless steel plate (SUS304) of 0.4 mm thickness over an area of 25 mm × 25 mm and roll pressed in accordance with JIS. After leaving at 40°C for 20 min, a load of 1 kg was applied on the film and it was evaluated as shown below.

NC: Displacement between the film 60 min after the application of the load and an original position is 1 mm or less
SD: Film falling off within 1,000 sec.

< Ball Tack >

A polyethylene terephthalate film (25 μm film thickness) or paper (30 μm thickness) was used as a substrate and a ball tack was measured by the J. Dow type rolling ball method under the conditions of 23°C and 65% RH.

< Peeling after an adhesion >

A polyethylene terephthalate film (25 μm film thickness) or paper (30 μm thickness) was used as a substrate, and, after leaving, peel paper was peeled from an adhesive tape, which was affixed to a stainless steel plate (SUS304) or a glass plate and then left under the conditions of 40°C and 80% RH. Then after cooling at 23°C and 65% RH, the film or paper was released from the plate and the residue of the adhesive was visually evaluated based on the following standards.

OO: The adhesive was not transferred at all to the plate as an adherend
O: The adhesive was transferred slightly with no practical problem
Δ: The adhesive was transferred partially
X: The adhesive was transferred completely

Table 2 shows the result and the substrates used for the evaluation of the ball tack and peeling ability after an adhesion are shown in Table 2.

Table 2

| Example No. | Example of synthesis of used resin solution | Substrate | Adhesion (g/25 mm width) | Holding strength (mm) | Ball tack No. | Peeling after an adhesion | |
|---|---|---|---|---|---|---|---|
| | | | | | | SUS | Glass |
| 55 | 1 | PET | 1000 | NC | 7 | OO | OO |
| 56 | 2 | PET | 1100 | NC | 7 | OO | OO |
| 57 | 3 | PET | 1200 | NC | 7 | OO | OO |
| 58 | 4 | PET | 1200 | NC | 7 | OO | OO |
| 59 | 4 | PET | 1200 | NC | 8 | OO | OO |
| 60 | 5 | Paper | 1100 | NC | 7 | O | OO |
| 61 | 6 | PET | 900 | NC | 7 | O | OO |
| 62 | 7 | PET | 1000 | NC | 7 | OO | OO |
| 63 | 8 | PET | 1200 | NC | 7 | OO | OO |
| 64 | 12 | PET | 950 | NC | 6 | OO | OO |
| 65 | 13 | PET | 930 | NC | 6 | OO | OO |
| 66 | 14 | PET | 910 | NC | 5 | OO | OO |
| 67 | 15 | PET | 900 | NC | 5 | O | OO |
| 68 | 16 | PET | 900 | NC | 6 | O | OO |
| 69 | 17 | PET | 940 | NC | 6 | OO | OO |
| 70 | 18 | PET | 980 | NC | 6 | OO | OO |
| Comp. Exam 8 | Comp. Exam 1 | PET | 1200 | SD | 9 | × | Δ |
| Comp. Exam 9 | Comp. Exam 2 | PET | 200 | NC | <5 | Δ | Δ |
| Comp. Exam 10 | Comp. Exam 3 | PET | 800 | SD | 10 | × | Δ |
| Comp. Exam 11 | Comp. Exam 4 | PET | 900 | NC | 7 | × | Δ |

Table 2 (Continued)

| | | | | | | | |
|---|---|---|---|---|---|---|---|
| Comp. Exam 12 | Comp. Exam 4 | Paper | 900 | NC | 8 | × | Δ |

Examples 71 - 81

2 g of 75% ethyl acetate solution of hexamethylene diisocyanate trimethylol propane adduct as a curing agent (D) was blended with 100 g of the urethane resin solutions synthesized in Examples 4, 5, 20 and, if required, 0.5 g of an antioxidant IRGANOX L 135 (Ciba Special Chemicals Co.) and 0.5 g of a UV-ray absorbent TINUVIN 571 (Ciba Specialty Chemicals Co.) and 0.5 g of a light stabilizer TINUVIN 765 (Ciba Specialty Chemicals Co.) were blended to prepare adhesives. The adhesives were coated by an applicator on peel paper to have a dry thickness of 25 μm, dried at 100°C for 2 min and the adhesion layers on the peel paper were affixed with substrates to prepare adhesive tapes. After leaving at a room temperature for one week, adhesive strength and weather proofness were tested. The test method for the adhesive strength was as described above and the test method for the weather proofness is as described below.

< Weather Proofness >

A polyethylene terephthalate film (25 μm film thickness) was used as a substrate and, after leaving for a while, peel paper was peeled from an adhesive tape which was affixed to a stainless steel plate (SUS304) or a glass plate and after irradiation for 300 hours using a sunshine weatherometer (Suga Shikenki Co.), the tape was released from the plates and the residue of the adhesives was visually observed based on the following standards.

OO: The adhesive was not transferred at all to the plate as an adherend
O: The adhesive was transferred slightly but not a problem for practical use problem
Δ: The adhesive was transferred partially
X: The adhesive was transferred completely

Table 3 shows the result.

Table 3

| Example No. | Example of synthesis of used resin solution | Curing agent (g) | Anti-oxidant (g) | UV-ray absorber (g) | Light stabilizer (g) | substrate | Adhesion (g/25 mm width) | Weather proofness | |
|---|---|---|---|---|---|---|---|---|---|
| | | | | | | | | SUS | Glass |
| 71 | 5 | 2 | 0.5 | 0.5 | 0.5 | PET | 1100 | OO | OO |
| 72 | 5 | 2 | 0.5 | 0 | 0 | PET | 1100 | O | O |
| 73 | 5 | 2 | 0.5 | 0.5 | 0 | PET | 1100 | OO | O |
| 74 | 5 | 2 | 0.5 | 0 | 0.5 | PET | 1100 | O | O |
| 75 | 4 | 2 | 0.5 | 0.5 | 0.5 | PET | 1200 | OO | OO |
| 76 | 4 | 2 | 0.5 | 0 | 0 | PET | 1200 | O | O |
| 77 | 4 | 2 | 0.5 | 0.5 | 0 | PET | 1200 | OO | O |
| 78 | 4 | 2 | 0.5 | 0 | 0.5 | PET | 1200 | O | O |
| 79 | 20 | 2 | 0.5 | 0.5 | 0.5 | PET | 1000 | OO | O |
| 80 | 5 | 2 | 0 | 0 | 0 | PET | 1100 | × | × |
| 81 | 4 | 2 | 0 | 0 | 0 | PET | 1200 | Δ | × |

From Table 3, it can be seen that not only satisfactory adhesive strength but also good weather proofness can be exhibited when the adhesives of this invention contain an deterioration inhibitor.

Examples 82 - 86

1 g of 1-hydroxycyclohexyl phenyl ketone (Ciba Geigy) as a photo polymerization initiator was blended with 100 g of the urethane resin solutions synthesized in Examples 21 to 25 and, further, 0.5 g of an antioxidant IRGANOX L 135 (Ciba Specialty Chemicals Co.), 0.5 g of a UV-ray absorbent TINUVIN 571 (Ciba Specialty Chemicals Co.) and 0.5 g of a light stabilizer TINUVIN 765 (Ciba Specialty Chemcials Co.) were blended to prepare adhesives. The adhesives were coated by an applicator on peel paper to obtain a dry thickness of 25 μm, and the adhesion layers on the peel paper were dried at 100°C for 2 min. After irradiating UV-rays at 120 W/cm using a belt conveyor type UV-ray irradiation device (USHIO) to cure the adhesion layer, it was transferred to a polyethylene terephthalate film (25 μm thickness) and adhesive strength, holding strength, ball tack, peeling after an adhesion and film forming property were tested. The test method for the adhesive strength, holding strength, ball tack and peeling after an adhesion are as described above and the test method for the film forming property is as described below.

< Film-forming Property >

The adhesive layer after irradiating ultraviolet rays at 120 W/cm using the belt conveyor type UV-ray irradiation device (USHIO) described above was evaluated by touching with the hands.

O: Film was formed completely
Δ: Film was formed although not completely
X: Film was not formed.

Examples 87 - 90

Adhesive tapes were prepared in the same manner as in Examples 81 - 85 except for not using the photopolymerization initiator and same tests were conducted.
Table 4 shows the results.

Table 4

| Example No. | Example of synthesis of used resin solution | Substrate | Adhesion (g/25mm width) | Holding strength (mm) | Ball tack No | peeling after an adhesion | | Film forming property |
|---|---|---|---|---|---|---|---|---|
| | | | | | | SUS | Glass | |
| 82 | 21 | PET | 900 | NC | 7 | OO | OO | O |
| 83 | 22 | PET | 800 | NC | 7 | OO | O | O |
| 84 | 23 | PET | 700 | NC | 7 | O | O | O |
| 85 | 24 | PET | 1400 | NC | 8 | O | O | O |
| 86 | 25 | PET | 700 | NC | 8 | O | O | O |
| 87 | 21 | PET | 1000 | NC | 7 | × | × | × |
| 88 | 22 | PET | 1400 | NC | 8 | × | × | × |
| 89 | 23 | PET | 1000 | NC | 7 | × | × | × |
| 90 | 24 | PET | 1400 | NC | 8 | × | × | × |

It can be seen from Table 4 that not only satisfactory adhesive strength but also good peeling after an adhesion and film forming property can be obtained reliably when the adhesive of this invention is cured.

Examples 91 - 99, Comparative Example 13

2 g of 75% ethyl acetate solution of hexamethylene diisocyanate trimethylol propane adduct as a curing agent (D) was blended to 100 g of the urethane resin solutions synthesized in Examples 1, 4 to 8, 14, 26 and Comparative Example 5 and, further, 0.5 g of antioxidant IRGANOX L 135 (Ciba Specialty Chemicals Co.), 0.5 g of UV-ray absorbent TINUVIN 571 (Ciba Specialty Chemicals Co.) and 0.5 g of light stabilizer TINUVIN 765 (Ciba Specialty Chemcials Co.) were blended to prepare adhesives. The adhesives were coated by an applicator on peel paper to obtain a dry thickness of 30 μm, dried at 100°C for 2 min, and the adhesion layers on the peel paper were affixed with substrates to prepare adhesive tapes. After leaving at a room temperature for one week adhesive strength, peeling after an adhesion, moisture permeability and skin irritation were tested. The test method for the adhesive strength and the peeling after an adhesion are as described above and the test for the moisture permeability and the skin irritation are as described below.

< Moisture Permeability >

Moisture permeable urethane films having a moisture permeability of 3,000 to 4,000 were used as the substrate and the moisture permeability of the obtained medical adhesive tapes was measured in accordance with the moisture permeability test method for moisture proof packaging material (cup method) (JIS Z0208).

< Skin Irritation >

Hairs at the back of the body of each test animal were shaven about 24 hours before the test. After measuring the body weight, four test areas of about 6 $cm^2$ area were set for each test animal, in which the keratin layer was scratched in a pattern of a number sign (#) so as not to reach the dermis (injured skin) by using an 18 gauge injection needle at two areas while the other two test areas were left untreated (uninjured skins).

Polyethylene terephthalate films (25 μm thickness) were used as the substrate and, after affixed a specimen obtained by cutting the resultant tape to about 2 cm × 3 cm size at each of the test areas for injured and uninjured skins such that the adhesive surface was in contact with the skins, it was fixed with a plaster patch (Japan Pharmacopoeia). Further, the specimen was held by a Blendarm Surgical Tape (Three M Health Care Co.) such that the entire specimen was in contact with the skin. Other uninjured and injured skins areas were left as they were.

After 4 hours of exposure, the specimens were removed and the exposed areas of the test animals were wiped clean with pure water.

Observation was made at 1, 24, 48 and 72 hours after removing the specimens, and skin reaction and edema formation were scored in accordance with the following standards. If skin reaction was identified when 72 hours had elapsed after removing the specimens, observation was continued till the reaction disappeared for up to a maximum of 14 days.

Evaluation for Skin Reaction

1) Formation of erythema and scab [maximum point 4]

| | |
|---|---|
| no erythema | 0 |
| extremely slight erythema (scarcely distinguishable) | 1 |
| distinct erythema | 2 |
| medium or remarkable erythema | 3 |
| from high erythema to formation of slight scab (deep injury) | 4 |

2) Formation of edema [maximum point 4]

| | |
|---|---|
| no edema | 0 |

(continued)

| | |
|---|---|
| extremely light edema (scarcely distinguishable) | 1 |
| slight edema (distinct edge with remarkable tuber distinguishable) | 2 |
| medium edema (about 1 mm ridge) | 3 |
| high edema (ridge of 1 mm or more and extension exceeding the exposed range) | 4 |

In accordance with Federal Register (1972), an average value obtained by dividing the total sum for the scored values after lapse of 1, 24 and 48 hours after removing the specimens by 6 is defined as primary irritation index (P. I. I.) and the irritation of the specimens was evaluated as "O" for the P.I.I. value of 0.4 or less and "×" for the P.I.I. value of 0.5 or more.

For reference, the standards for ISO 10993-10 are shown below.

Category for primary irritation

| reaction in rabbits | P.I.I |
|---|---|
| No irritation | 0 - 0.4 |
| Weak irritation | 0.5 - 1.9 |
| Medium irritation | 2 - 4.9 |
| Intense irritation | 5 - 8 |

Table 5 shows the result.

Table 5

| Example No. | Example of synthesis of used resin solution | Adhesion (g/ 25mm width) | Peeling after an adhesion SUS | Moisture permeabil ity (g/ $m^2 \cdot 24h$) | Skin irritation property |
|---|---|---|---|---|---|
| 91 | 1 | 1000 | OO | 2500 | O |
| 92 | 4 | 1200 | OO | 2400 | O |
| 93 | 5 | 1100 | O | 2500 | O |
| 94 | 14 | 600 | OO | 2500 | O |
| 95 | 6 | 900 | O | 2300 | O |
| 96 | 7 | 1000 | OO | 2400 | O |
| 97 | 8 | 1200 | OO | 2500 | O |
| 98 | 4 | 1700 | O | 2600 | O |
| 99 | 26 | 1800 | O | 2100 | O |
| Comparat ive Example 13 | Comparat ive Example 5 | 800 | × | 750 | × |

Examples 100 - 106, Comparative Examples 14, 15

2 g of 75% ethyl acetate solution of hexamethylene diisocyanate trimethylol propane adduct as a curing agent (D) was blended with 100 g of the urethane resin solutions synthesized in Examples 27 to 33 and Comparative Synthesis Examples 5, 6 and, further, 0.5 g of antioxidant IRGANOX L 135 (Ciba Specialty Chemicals Co.), 0.5 g of UV-ray absorbent TINUVIN 571 (Ciba Specialty Chemicals Co.) and 0.5 g of light stabilizer TINUVIN 765 (Ciba Specialty Chemcials Co.) were blended to prepare adhesives. The adhesives were coated by an applicator on peel paper to obtain a dry thickness of 25 μm, dried at 100°C for 2 min and the adhesion layers on the peel paper were affixed with substrates to prepare adhesive tapes. After leaving at a room temperature for one week, adhesive strength, peel after

an adhesion, and biodegradability were tested. The test method for the adhesive strength and the peel after an adhesion are as described above and the test for the biodegradability is as described below.

< Biodegradability >

Biodegradable substrates (polylactic acid resin, LAYSHA, 25 μm thickness, manufactured by Mitsui Kagaku Co.) were used as the substrate to prepare samples of 5 cm x 5 cm. After leaving as described above, the samples were placed in a composter (garbage processing apparatus, manufactured by Mitsui Home Co., Ltd. "MAM"), the state of the samples were visually confirmed after seven days and the biodegradability was evaluated by the following standards.

O: samples disappeared
Δ: samples partially remained
X: most of the samples remained

Table 6 shows the result.

Table 6

| Example No. | Example of synthesis of used resin solution | Adhesion (g/25 mm width) | Peeling after an adhesion SUS | Bio-degradabilit y SUS |
|---|---|---|---|---|
| 100 | 27 | 1200 | OO | O |
| 101 | 28 | 1300 | OO | O |
| 102 | 29 | 1400 | O | O |
| 103 | 30 | 1600 | OO | O |
| 104 | 31 | 800 | O | O |
| 105 | 32 | 1100 | OO | O |
| 106 | 33 | 800 | OO | O |
| Comp. Exam 14 | Comp. Exam. 6 | 500 | × | O |
| Comp. Exam 15 | Comp. Exam. 5 | 800 | × | x |

Examples 107 - 116

2 g of 75% ethyl acetate solution of hexamethylene diisocyanate trimethylol propane adduct as a curing agent (D) was blended with 100 g of the urethane resin solutions synthesized in Examples 34 to 42 and Example 4 and, further, 0.5 g of antioxidant IRGANOX L 135 (Ciba Specialty Chemicals Co.), and 0.5 g of UV-ray absorbent TINUVIN 571 (Ciba Specialty Chemicals Co.) and 0.5 g of light stabilizer TINUVIN 765 (Ciba Specialty Chemicals Co.) were blended to prepare adhesives. The adhesives were coated by an applicator on peel paper to obtain a dry thickness of 25 μm, dried at 100°C for 2 min to form adhesive layers. Adhesive strength, adhesiveness between a polarization plate and a glass substrate, and blister suppression were tested. The test method for the adhesive strength is as described above, and those for the adhesiveness between the polarization plate and glass substrate, and blister suppression are as described below.

<Adhesiveness between Polarization Plate and Glass Substrate>

The adhesive layer was transferred to the polarization plate of 0.20 mm thickness and, after aging under the conditions of a temperature of 23°C and a humidity of 65%, the polarization plate and the glass substrate were adhered by being held under the conditions of a temperature of 50°C and a pressure of 5 $kg/cm^2$ for 20 min, and a peeling strength (180° peeling; pulling speed; 300 mm/min; unit g/25 mm width) was measured by a Shopper type peeling tester in accordance with JIS.

< Blister Suppression >

The adhesive layer was affixed to a transparent 2 mm thick polycarbonate plate (manufactured by Nippon Test Panel Co.) by a lip roll to prepare a laminate. Upon forming the laminate, positions on the polycarbonate corresponding to bubbles intruded between the polycarbonate plate and the adhesive tape upon forming the laminate were marked with a magic ink. One day after the affixing, the laminate was placed in an oven at 100°C, and the state of bubbles after one hour and after 30 days was visually evaluated in accordance with the following standards.

OO: more bubbles than those observed upon affixing were not observed
O: additional bubbles and swells were formed partially
X: additional bubbles and swells were formed entirely

Table 7 shows the result of test and the content of urethane urea bonds.

Table 7

| Example No. | Example of synthesis of used resin solution | Adhesio n (g/ 25 mm width) | Adhesion of Polarizing plate and glass substrate (g/ 25 mm width) | Urethane urea bond content (%) | Suppression of blister | |
|---|---|---|---|---|---|---|
| | | | | | 1 hour after | 30 days after |
| 107 | 34 | 900 | 700 | 15.1 | OO | OO |
| 108 | 35 | 800 | 620 | 15.4 | OO | OO |
| 109 | 36 | 800 | 620 | 15.2 | OO | OO |
| 110 | 37 | 700 | 500 | 15.5 | OO | OO |
| 111 | 38 | 800 | 600 | 15.2 | OO | OO |
| 112 | 39 | 1000 | 850 | 15.6 | OO | OO |
| 113 | 40 | 1400 | 1250 | 15.4 | OO | OO |
| 114 | 41 | 600 | 400 | 12.1 | O | O |
| 115 | 42 | 700 | 500 | 19.1 | O | O |
| 116 | 4 | 800 | 620 | 9.4 | × | x |

Examples 117 - 123

Urethane urea resin solutions obtained in Examples 9, 10, 44 to 46, 49, 54 were coated on polyvinyl chloride films by using a bar coater to obtain a dry film thickness of about 30 µm to thereby form ink receiving layers, which were dried at 100°C for 2 min to obtain recording materials. The ink jet printability, gravure ink setting property, water proofness, surface tackiness, substrate conformity and intimate adhesiveness of the recording materials were tested. Further, transparency was evaluated by using the resin solutions. Each of the test methods is as described below.

< Ink Jet Printability >

Ink jet recording was conducted for the obtained recording material by using a commercially available ink jet printer (IO-735X manufactured by Sharp Co.) charged with an aqueous pigment ink ("EXCELLENT" manufactured by Level Co.) and the water absorbability of ink and the printing quality were evaluated collectively in accordance with the following standards.

OO: excellent
O: good
Δ: somewhat poor in drying, bleeding and coloration
X: poor in drying, bleeding and coloration

< Gravure Ink Setting Property >

Gravure printing was conducted for the obtained recording material by using an electromotive gravure printing tester GP-2 (manufacatured by Kurashiki Boseki Co.) charged with aqueous gvarure ink "AQUAKING 3 RED" (manufactured by Toyo Ink Co.) and the ink setting property was evaluated in accordance with the following standards.

OO: excellent
O: good
Δ: somewhat poor in drying, bleeding and coloration
X: poor in drying, bleeding and coloration

< Water Proofness >

The recording material was immersed in distilled water for 24 hours and the degree of the peeling of the ink receiving layer was evaluated in accordance with the following standards.

OO: the receiving layer was not peeled at all
O: the receiving layer was swollen but not peeled
Δ: a portion of the receiving layer was completely peeled
X: all of the receiving layer was peeled

< Surface Tackiness >

The intensity for the tack of the receiving layer were measured by a tacking tester (manufacatured by RESKA) and evaluated in accordance the following standards.

OO: tack was not formed at all
O: very little tack was formed
Δ: some tack was formed
X: much tack was formed

< Transparency >

The resin solution of the urethane urea resin was coated on PET film to obtain a dry thickness of 30 μm by using a by using a blade coater and the transparency of the recording material dried at 100°C for 2 min was evaluated in accordance with the following standards.

OO: completely transparent
O: substantially transparent
Δ: semi-transparent
X: not transparent

< Substrate Conformity >

The obtained recording material was stretched up to 200% and the substrate conformity test was evaluated depending on the degree of peeling and break of the ink receiving layer in accordance with the following standards.

OO: the ink receiving layer was not peeled or cracked/broken at all
O: the ink receiving layer was not peeled or cracked/broken but gloss changed partially
Δ: a portion of the ink receiving layer was peeled or cracked/broken
X: the ink receiving layer was completely peeled or cracked/broken

< Intimate Adhesion >

A cellophane tape was affixed uniformly on the surface of the recording material and the intimate adhesion of the ink receiving layer to the substrate when the cellophane tape was peeled rapidly was evaluated in accordance with the following standards.

OO: the receiving layer was not peeled at all even after a peeling test in excess of 5 cycles
O: the receiving layer was not peeled at all even after a peeling was carried out 1 to 5 times
Δ: a portion of the receiving layers was peeled by the peeling being carried out once
X: All of the receiving layers were peeled by the peeling test being carried out once

Examples 124 - 129, Comparative Example 16

Recording materials were obtained and evaluated in the same manner as in Examples 117 to 123, except for using coating agents for forming ink receiving layer prepared by blending 20 g of the compound obtained in Synthesis Example 25 or Elecond PQ-50B manufactured by Soken Chemical Co. as a cationifying agent with 80 g of the Michael addition type urethane urea resin solutions obtained in Synthesis Examples 11, 19, 43, 50 and a hydrophilic urethane urea resin solution obtained in Comparative Example 7, instead of urethane urea resin solutions obtained in Examples 9, 10, 44 to 46, 49 and 54.

Examples 130 - 135, Comparative Example 17

Recording materials were obtained and evaluated in the same manner as in Examples 117 to 123 except for using silica powder (Aerosil 200 manufacatured by Nippon Aerosil Co.) and barium sulfate powder (BF-10, manufactured by Sakai Chemical Co.) as the filler component for the Michael addition type urethane urea resin solutions obtained in Examples 9, 10, 44, 49 and the hydrophilic urethane urea resin solution obtained in Comparative Example 7, and in Example 34, coating agents for forming ink receiving layer in which a silane coupling agent (KBM 903, manufactured by Shinetsu Silicone Co.) blended in compositions described in Table 8 instead of the urethane resin solutions obtained in Examples 9, 10, 44 to 46, 49, 54.

Example 136

A recording material was obtained and evaluated in the same manner as in Example 117 except for using, a coating agent for forming an ink receiving layer prepared by adding colloidal silica (Cataloid SI-30) to the Michael addition type urethane urea resin solution obtained in Example 47, such that the weight of the resin is 20% by weight of the weight of colloidal silica instead of the urethane urea resin solution obtained in Example 9.

Example 137

A recording material was obtained and evaluated in the same manner as in Example 117 except for using the Michael addition type urethane urea resin solution grafted with colloidal silica obtained in Example 48 instead of the urethane urea resin solution obtained in Example 9.

Examples 138, 139

A recording material was obtained and evaluated in the same manner as in Example 117 except for using, a coating agent for forming an ink receiving layer prepared by adding alumina sol (Cataloid AS-2) to the Michael addition type urethane urea resin solution obtained in Examples 51, 52 such that the weight of the resin is 20% by weight of the weight of the alumina sol instead of the urethane urea resin solution obtained in Example 9.

Example 140

A recording material was obtained and evaluated in the same manner as in Example 117 except for using the Michael addition type urethane urea resin solution grafted with the alumina sol obtained in Example 53 instead of the urethane urea resin solution obtained in Example 9.

Table 8 shows the characteristics of the solution of the coating agent for forming ink receiving layer and the results of evaluation.

Table 8

| Example No. | Resin solution used | | Other component | | Filler | | Solution property | Ink jet printa-bility | Gravure ink setting property | Water proof-ness | Surface tacki-ness | Transparency | Subst-rate confor-mity | Intimate adhe-sion |
|---|---|---|---|---|---|---|---|---|---|---|---|---|---|---|
| | Example showing synthe-sis. | Blending amount (g) | Kind | Blending amount (g) | Kind | Blending amount (g) | | | | | | | | |
| 117 | 9 | 100 | None | None | None | None | | OO | OO | Δ | Δ | OO | OO | OO |
| 118 | 44 | 100 | None | None | None | None | | OO | OO | OO | O | OO | O | OO |
| 119 | 45 | 100 | None | None | None | None | | OO | OO | O | Δ | OO | O | O |
| 120 | 46 | 100 | None | None | None | None | | OO | OO | O | O | OO | O | O |
| 121 | 10 | 100 | None | None | None | None | | OO | OO | OO | OO | OO | O | OO |
| 122 | 49 | 100 | None | None | None | None | | OO | OO | OO | O | OO | OO | O |
| 123 | 54 | 100 | None | None | None | None | | O | O | OO | OO | OO | O | O |
| 124 | 43 | 80 | Syn.Ex25 | 20 | None | None | Homogeneous | OO | O | OO | OO | OO | O | OO |
| 125 | 43 | 80 | Elecond PQ-50E | 20 | None | None | Cloudy | OO | O | OO | OO | Δ | Δ | O |
| 126 | 11 | 80 | Syn.Ex25 | 20 | None | None | Homogeneous | OO | OO | OO | OO | OO | OO | O |
| 127 | 11 | 80 | Elecond PQ-50E | 20 | None | None | Somewhat cloudy | OO | OO | OO | OO | O | O | Δ |
| 128 | 50 | 80 | Elecond PQ-50E | 20 | None | None | Homogeneous | OO | OO | OO | OO | OO | O | Δ |

Table 8 (Continued)

| | | | | | | | | | | | | | | |
|---|---|---|---|---|---|---|---|---|---|---|---|---|---|---|
| 129 | 19 | 80 | Elecond PQ-50E | 20 | None | None | Somewhat cloudy | OO | OO | OO | OO | O | O | Δ |
| Comp. Exam 16 | Comp. Exam 7 | 80 | Elecond PQ-50E | 20 | None | None | Cloudy | OO | OO | OO | OO | Δ | O | Δ |
| 130 | 9 | 50 | None | None | Aerosi 1200 | 50 | Thixotropic dispersion | OO | OO | OO | OO | O | Δ | Δ |
| 131 | 9 | 80 | None | None | BF-10 | 20 | Semitrans-parent dispersion | OO | OO | OO | OO | OO | O | O |
| 132 | 44 | 50 | None | None | Aerosi 1200 | 50 | Semitrans pa-rent thixotripic dispersion | OO | OO | OO | OO | O | Δ | Δ |
| 133 | 10 | 50 | None | None | Aerosi 1200 | 50 | Semitrans pa-rent thixotripic dispersion | OO | OO | OO | OO | O | Δ | Δ |
| 134 | 10 | 50 | KBM903 | 0.02 | Aerosi 1200 | 50 | Semitrans pa-rent thixotripic dispersion | OO | OO | OO | OO | O | O | O |
| 135 | 49 | 50 | None | None | Aerosi 1200 | 50 | Semitrans pa-rent thixotripic dispersion | OO | OO | OO | OO | Δ | Δ | Δ |
| Comp. Exam 17 | Comp. Exam 7 | 50 | None | None | Aerosi 1200 | 50 | Semitrans pa-rent thixotripic dispersion | No film-forming property | | | | × | | |

Table 8 (Continued)

| | | | | | | | | | | | | | | |
|---|---|---|---|---|---|---|---|---|---|---|---|---|---|---|
| 136 | 47 | 20 | None | None | Cataloid SI-30 | 80 | Semitrans pa-rent dispersion | OO | OO | O | OO | OO | Δ | × |
| 137 | 48 | 100 | Cataloid SI-30(80%)graft resin | | | | Semitrans pa-rent dispersion | OO | OO | OO | OO | OO | O | O |
| 138 | 51 | 20 | None | None | Cataloid AS-2 | 80 | Semitrans pa-rent thixotripic dispersion | OO | OO | O | OO | O | Δ | Δ |
| 139 | 52 | 20 | None | None | Cataloid AS-2 | 80 | Semitrans pa-rent thixotripic dispersion | OO | OO | OO | OO | O | Δ | × |
| 140 | 53 | 100 | Cataloid SI-30(80%)graft resin | | | | Semitrans pa-rent thixotripic dispersion | OO | OO | OO | OO | O | O | O |

## Claims

1. A Michael addition type urethane urea resin made from starting materials including a polyol (a), a polyisocyanate (b), a polyamine (c) and an unsaturated compound (d), and
comprising a bonded portion represented by the following formula (1-1) or (1-2):

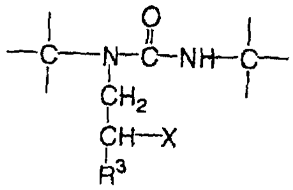

(1-1)

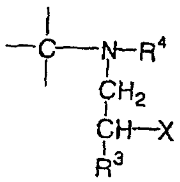

(1-2)

(where $R^3$ represents a monovalent organic group, X represents a hydrogen atom or an alkyl group having 1 to 3 carbon atoms and $R^4$ represents a hydrogen atom or a monovalent organic group).

2. A Michael addition type urethane urea resin according to claim 1, wherein the urethane urea resin is obtained by reacting a urethane prepolymer (A) which has an isocyanate group at the terminal end and which is obtained by reacting the polyol (a) and the polyisocyanate (b), with an amine compound (B) which has at least two primary or secondary amino groups and which is obtained by a Michael addition reaction of the polyamine (c) and the unsaturated compound (d).

3. A Michael addition type urethane urea resin according to claim 1, wherein the urethane urea resin is obtained by Michael addition-reacting a polyurethane urea (C) which has a primary or secondary amino group at the terminal end and which is obtained by reacting the polyol (a), the polyisocyanate (b) and the polyamine (c), with the unsaturated compound (d).

4. A process for producing a Michael addition type urethane urea resin comprising a step (a) of reacting a polyol (a) and a polyisocyanate (b) to form a urethane prepolymer (A) having an isocyanate group at the terminal end, a step (b) of Michael addition of a polyamine (c) and an unsaturated compound (d) to prepare an amine compound (B) having at least two primary or secondary amino groups and a step (c) of reacting the urethane prepolymer (A) and the amine compound (B) to prepare a Michael addition type urethane urea resin.

5. A process for producing a Michael addition type urethane urea resin according to claim 4, wherein the unsaturated compound (d) partially or entirely contains a quaternary ammonium salt group.

6. A process for producing a Michael addition type urethane urea resin comprising a step (d) of reacting a polyol (a), a polyisocyanate (b) and a polyamine (c) to form a polyurethane urea (C) having a primary or secondary amino group at the terminal end, and a step (e) of Michael addition of an unsaturated compound (d) to the polyurethane (C).

7. An adhesive comprising a Michael addition type urethane urea resin according to claim 1.

8. An adhesive comprising a Michael addition type urethane urea resin according to claim 2.

9. An adhesive comprising a Michael addition type urethane urea resin according to claim 3.

**10.** A method of manufacturing an adhesive comprising a first step of preparing a Michael addition type urethane urea resin by reacting a urethane prepolymer (A) which has an isocyanate group at the terminal end and which is obtained by reaction of a polyol (a) and a polyisocyanate (b), with an amine compound (B) which has at least two primary or secondary amino groups and which is obtained by a Michael addition reaction of a polyamine (c) and an unsaturated compound (d), and a reaction stopper (f) and a second step of blending a curing agent (D) with the Michael addition type urethane urea resin.

**11.** A method of manufacturing an adhesive according to claim 10, wherein the reaction stopper (f) is a monoamine compound.

**12.** A laminate comprising a substrate and an adhesive according to claim 7.

**13.** A laminate comprising a substrate and an adhesive according to claim 8.

**14.** A coating agent for forming an ink receiving layer, the coating agent comprising a Michael addition type urethane urea resin according to claim 1.

**15.** A coating agent for forming an ink receiving layer, the coating agent comprising a Michael addition type urethane urea resin according to claim 2.

**16.** A coating agent for forming an ink receiving layer, the coating agent comprising a Michael addition type urethane urea resin according to claim 3.

**17.** A coating agent for forming an ink receiving layer, the coating agent comprising a Michael addition type urethane urea resin formed by the process for producing a Michael addition type urethane urea resin according to claim 5.

**18.** A coating agent for forming an ink receiving layer according to claim 14, the coating agent further comprising a cationifying agent.

**19.** A coating agent for forming an ink receiving layer according to claim 14, the coating agent further comprising a filler.

**20.** A coating agent for forming an ink receiving layer according to claim 19 wherein the filler and the Michael addition type urethane urea resin are grafted.

**21.** A recording material comprising a receiving layer including a coating agent for forming the ink receiving layer according to claim 14 on a substrate.

**22.** A recording material comprising a receiving layer including a coating agent for forming the ink receiving layer according to claim 18 on a substrate.

**23.** A recording material comprising a receiving layer including a coating agent for forming the ink receiving layer according to claim 19 on a substrate.

**Amended claims under Art. 19.1 PCT**

**1.** (amended). A Michael addition type urethane urea resin made from starting materials including a polyol (a), a polyisocyanate (b), a polyamine (c) and an unsaturated compound (d), and

comprising a bonded portion represented by the following formula (1-1) or (1-2):

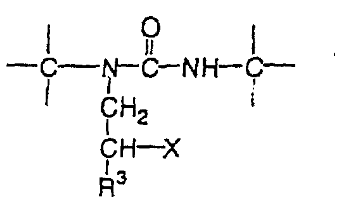

(1-1)

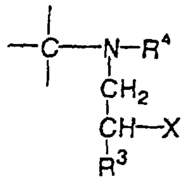 (1-2)

(where $R^3$ represents a monovalent organic group shown in formulae (3) to (12), X represents a hydrogen atom or an alkyl group having 1 to 3 carbon atoms and $R^4$ represents a hydrogen atom or a monovalent organic group):

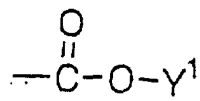 (3)

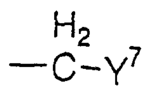 (8)

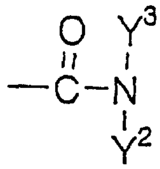 (4)

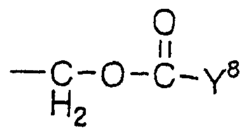 (9)

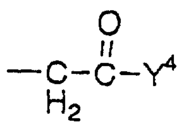 (5)

$-C\equiv N$ (10)

$-O-Y^5$ (6)

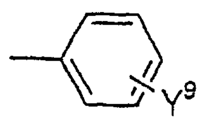 (11)

$-Y^6$ (7)

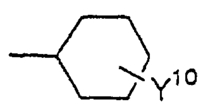 (12)

(where $Y^1$ represents a monovalent organic group having a weight average molecular weight of 15 to 20000 and each of $Y^2$ to $Y^{10}$ represents, independently, a hydrogen atom or a monovalent organic group having a weight average molecular weight of 15 to 20000).

**2.** A Michael addition type urethane urea resin according to claim 1, wherein the urethane urea resin is obtained by reacting a urethane prepolymer (A) which has an isocyanate group at the terminal end and which is obtained by reacting the polyol (a) and the polyisocyanate (b), with an amine compound (B) which has at least two primary or secondary amino groups and which is obtained by a Michael addition reaction of the polyamine (c) and the unsaturated compound (d).

**3.** A Michael addition type urethane urea resin according to claim 1, wherein the urethane urea resin is obtained by Michael addition-reacting a polyurethane urea (C) which has a primary or secondary amino group at the terminal end and which is obtained by reacting the polyol (a), the polyisocyanate (b) and the polyamine (c), with the unsaturated compound (d).

**4.** (amended). A process for producing a Michael addition type urethane urea resin according to claim 1, comprising a step (a) of reacting a polyol (a) and a polyisocyanate (b) to form a urethane prepolymer (A) having an isocyanate

group at the terminal end, a step (b) of Michael addition of the polyamine (c) and an unsaturated compound (d) to prepare an amine compound (B) having at least two primary or secondary amino groups and a step (c) of reacting the urethane prepolymer (A) and the amine compound (B) to prepare an Michael addition type urethane urea resin.

**5.** A process for producing a Michael addition type urethane urea resin according to claim 4, wherein the unsaturated compound (d) partially or entirely contains a quaternary ammonium salt group.

**6.** (amended). A process for producing a Michael addition type urethane urea resin according to claim 1, comprising a step (d) of reacting a polyol (a), a polyisocyanate (b) and a polyamine (c) to form a polyurethane urea (C) having a primary or secondary amino group at the terminal end, and a step (e) of Michael addition of an unsaturated compound (d) to the polyurethane (C).

**7.** An adhesive comprising a Michael addition type urethane urea resin according to claim 1.

**8.** An adhesive comprising a Michael addition type urethane urea resin according to claim 2.

**9.** An adhesive comprising a Michael addition type urethane urea resin according to claim 3.

**10.** A method of manufacturing an adhesive comprising a first step of preparing a Michael addition type urethane urea resin by reacting a urethane prepolymer (A) which has an isocyanate group at the terminal end and which is obtained by reaction of a polyol (a) and a polyisocyanate (b), with an amine compound (B) which has at least two primary or secondary amino groups and which is obtained by a Michael addition reaction of a polyamine (c) and an unsaturated compound (c), and a reaction stopper (f) and a second step of blending a curing agent (D) with the Michael addition type urethane urea resin.

**11.** A method of manufacturing an adhesive according to claim 10, wherein the reaction stopper (f) is a monoamine compound.

**12.** A laminate comprising a substrate and an adhesive according to claim 7.

**13.** A laminate comprising a substrate and an adhesive according to claim 8.

**14.** A coating agent for forming an ink receiving layer, the coating agent comprising a Michael addition type urethane urea resin according to claim 1.

**15.** A coating agent for forming an ink receiving layer, the coating agent comprising a Michael addition type urethane urea resin according to claim 2.

**16.** A coating agent for forming an ink receiving layer, the coating agent comprising a Michael addition type urethane urea resin according to claim 3.

**17.** A coating agent for forming an ink receiving layer, the coating agent comprising a Michael addition type urethane urea resin formed by the process for producing a Michael addition type urethane urea resin according to claim 5.

**18.** A coating agent for forming an ink receiving layer according to claim 14, the coating agent further comprising a cationifying agent.

**19.** A coating agent for forming an ink receiving layer according to claim 14, the coating agent further comprising a filler.

**20.** A coating agent for forming an ink receiving layer according to claim 19 wherein the filler and the Michael addition type urethane urea resin are grafted.

**21.** A recording material comprising a receiving layer including a coating agent for forming the ink receiving layer according to claim 14 on a substrate.

**22.** A recording material comprising a receiving layer including a coating agent for forming the ink receiving layer according to claim 18 on a substrate.

**23.** A recording material comprising a receiving layer including a coating agent for forming the ink receiving layer according to claim 19 on a substrate.

FIG. 1

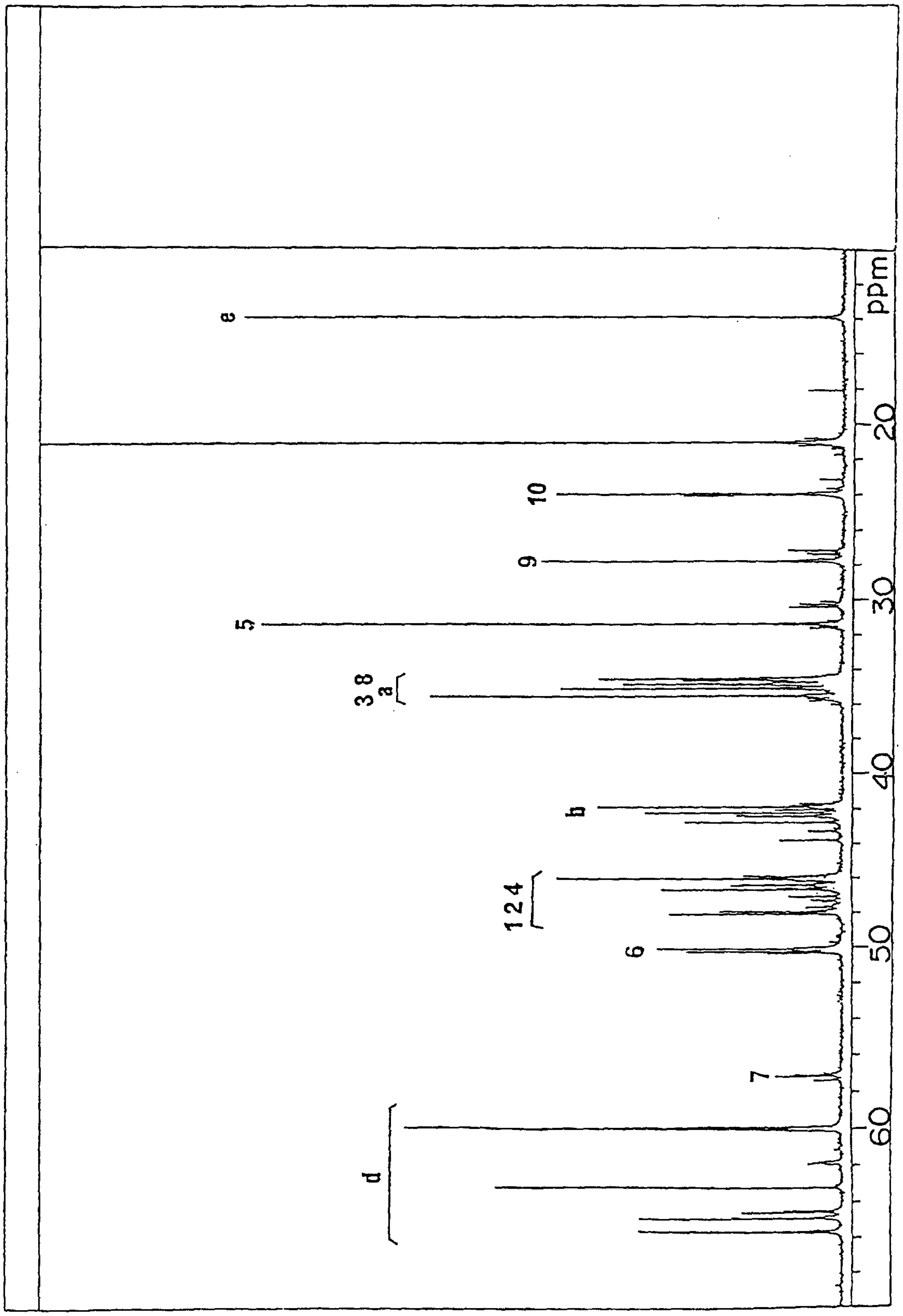

FIG. 2

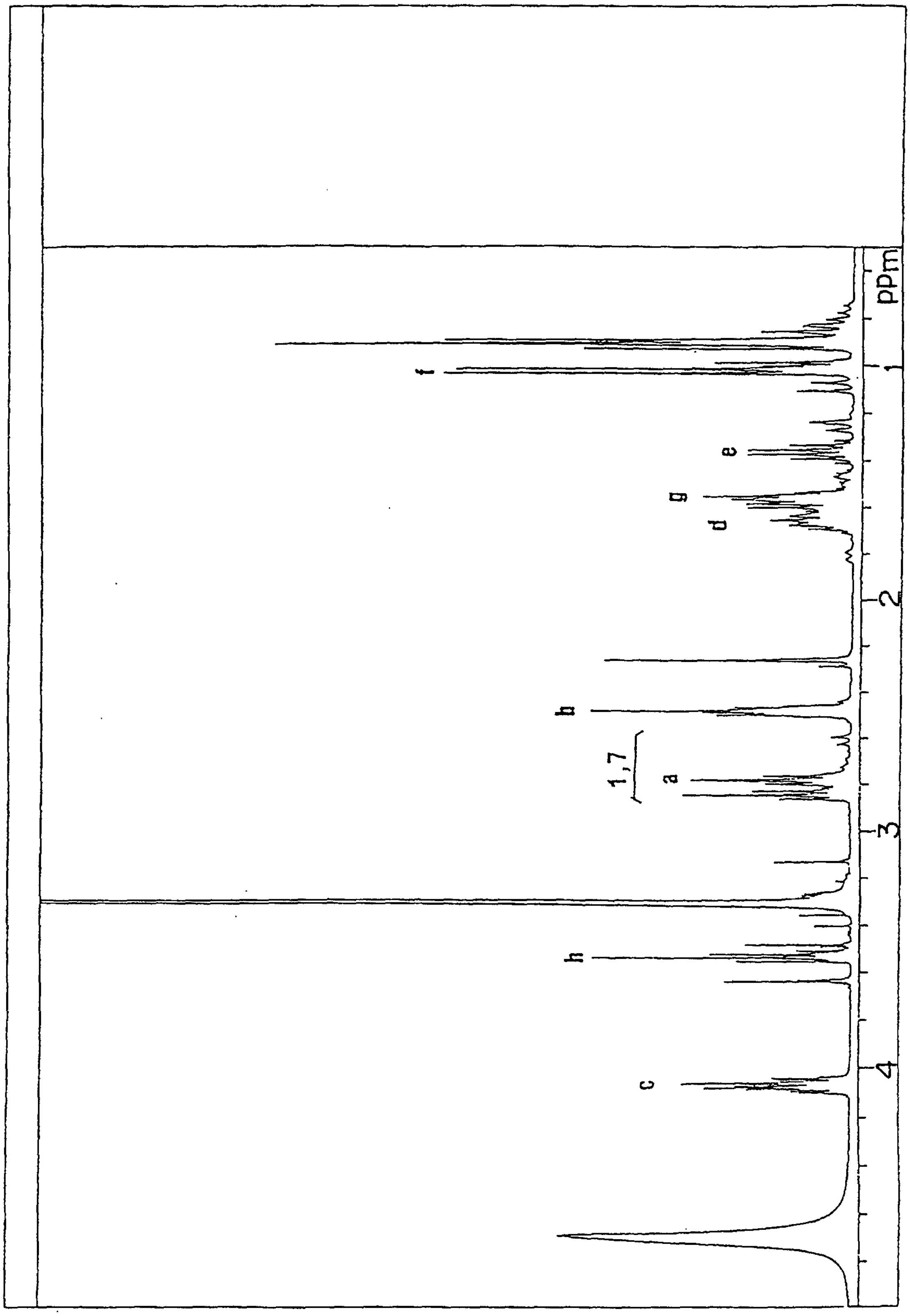

FIG. 3

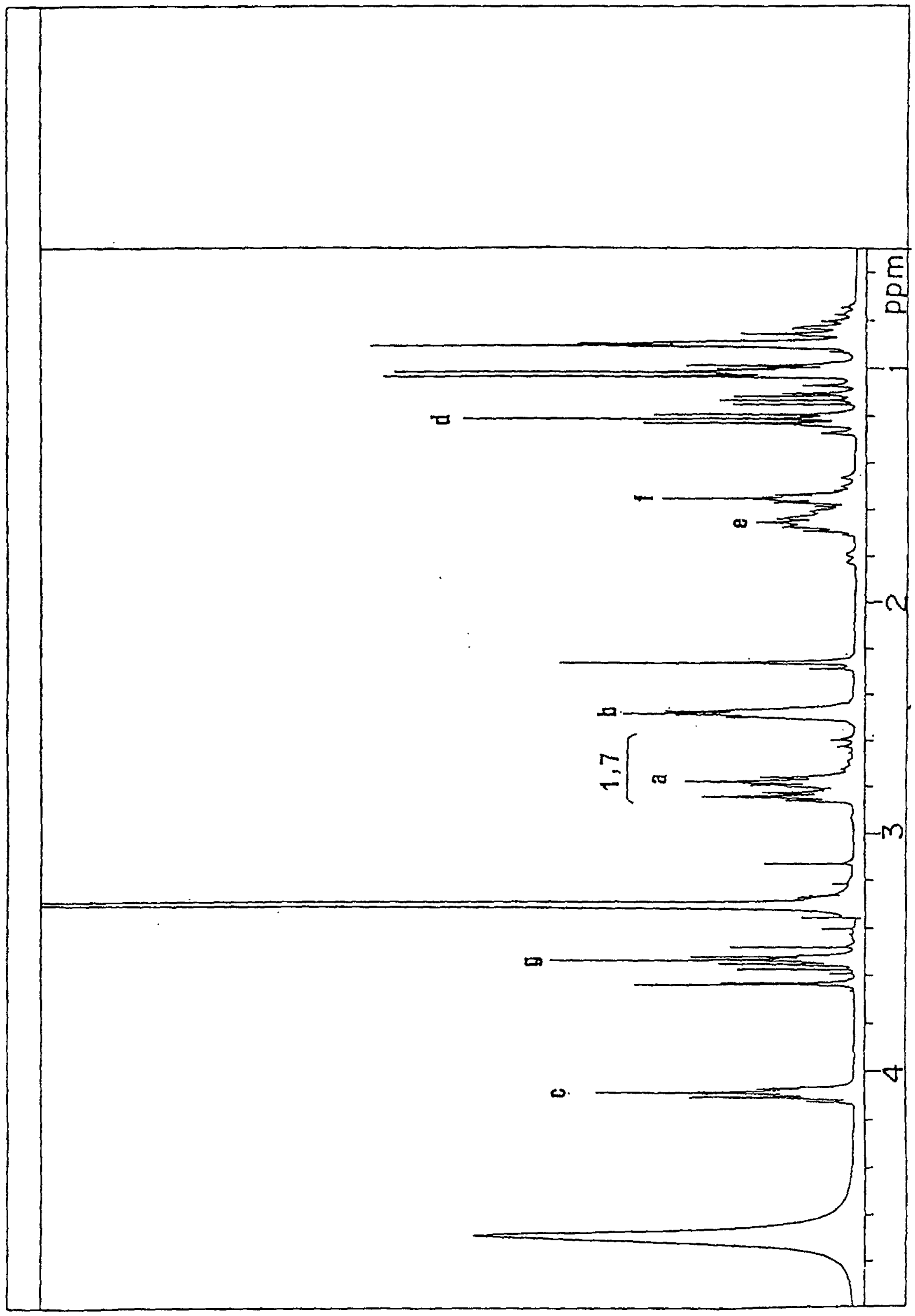

FIG. 4

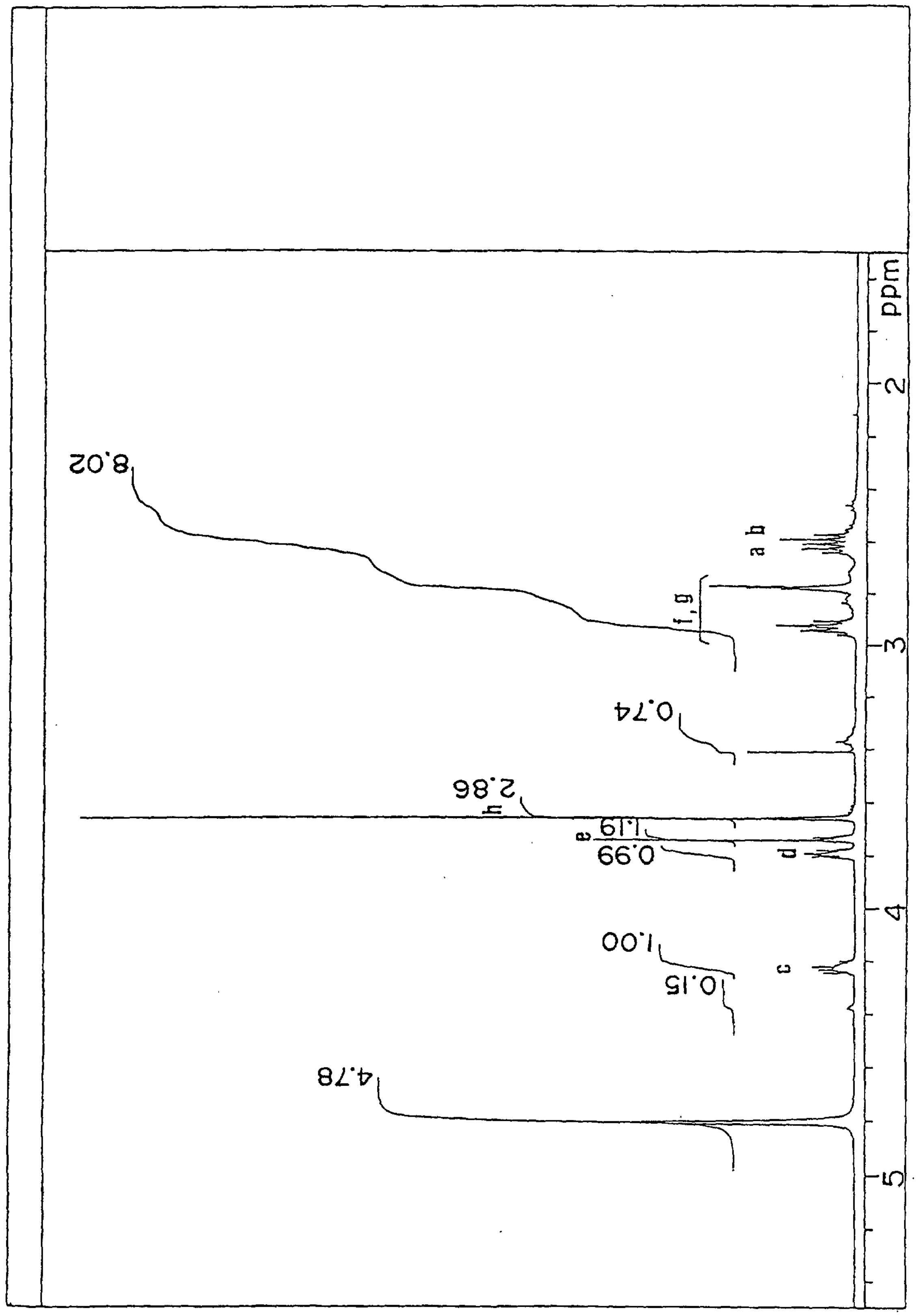

FIG. 5

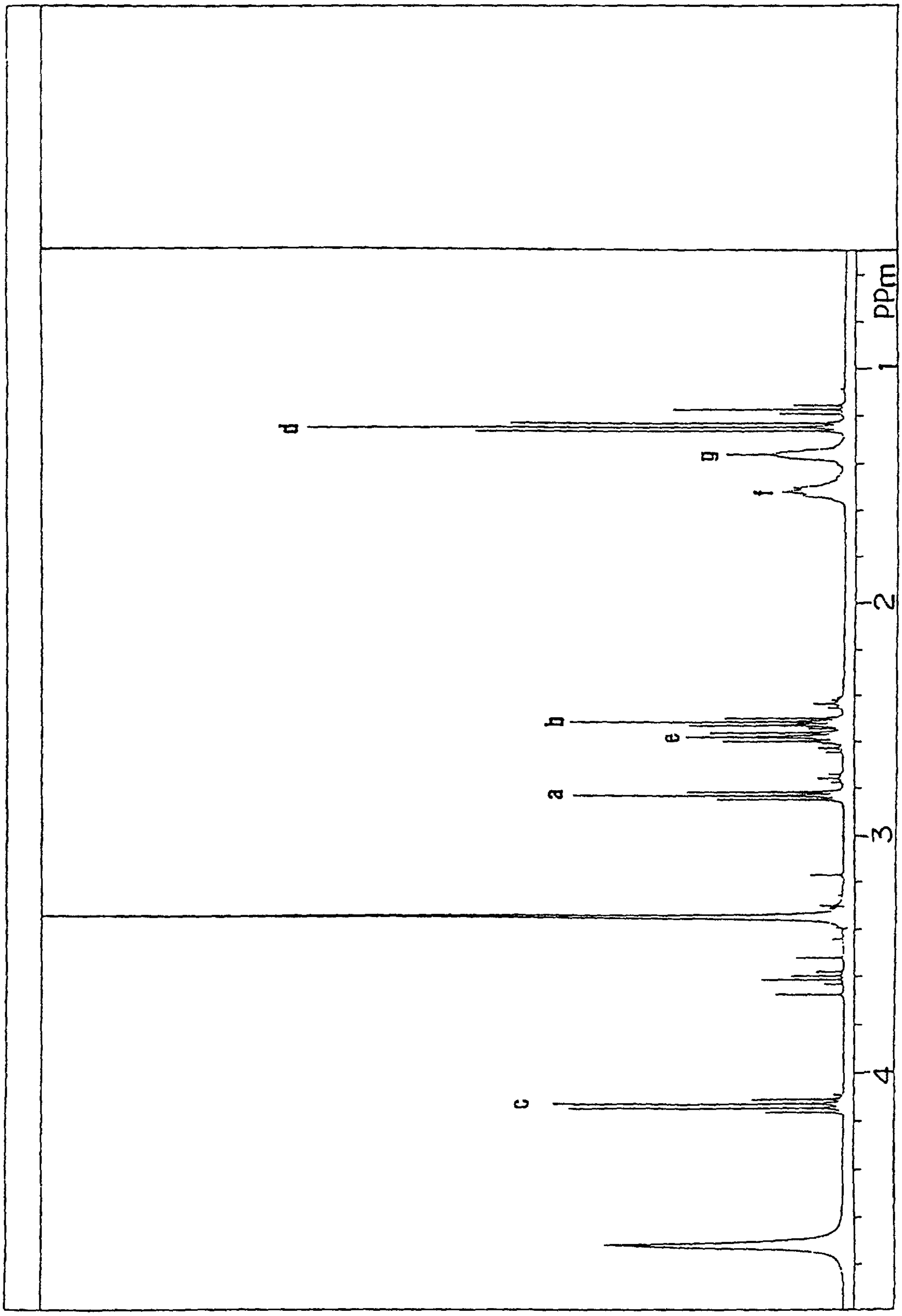

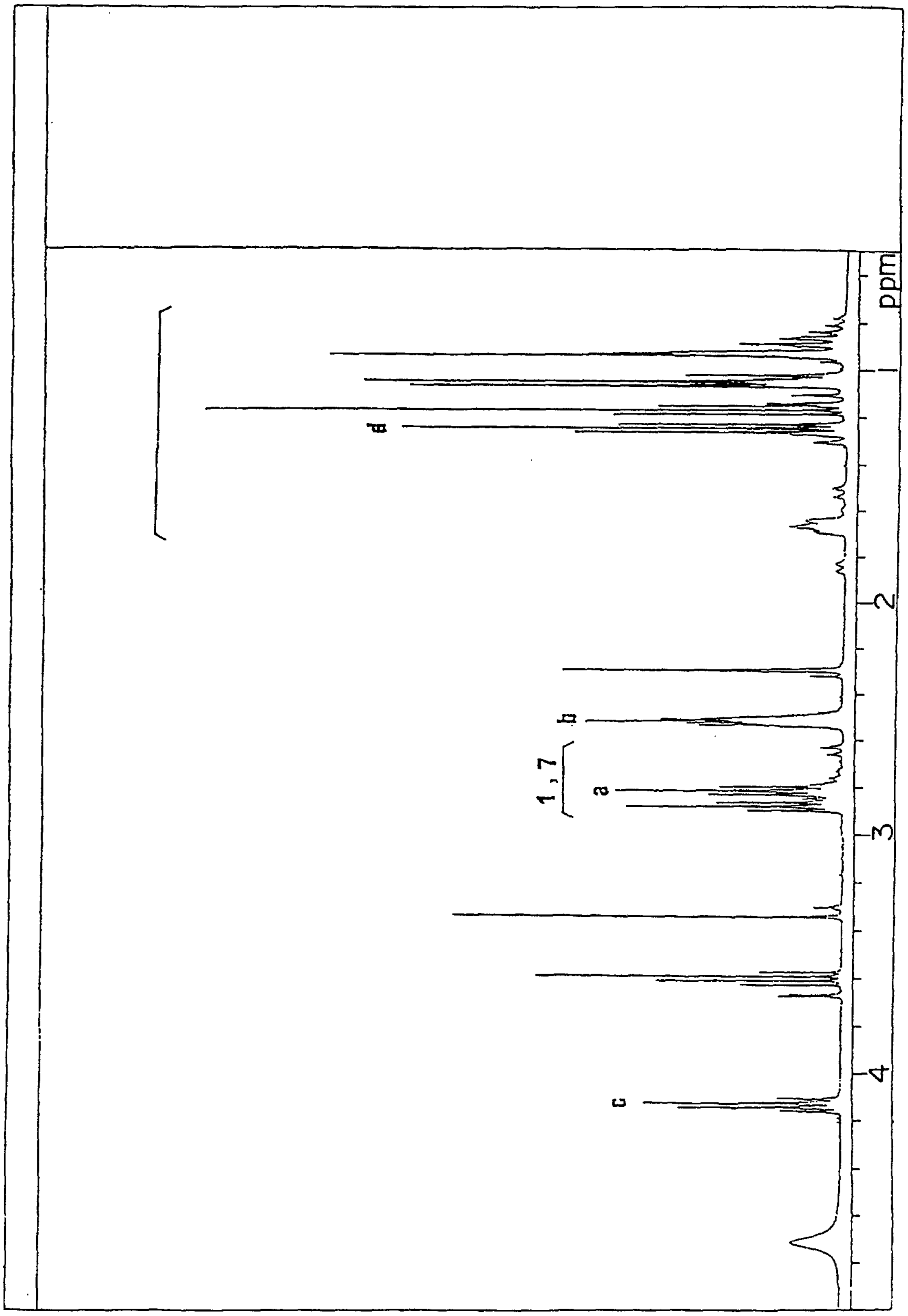


FIG. 6

FIG. 7

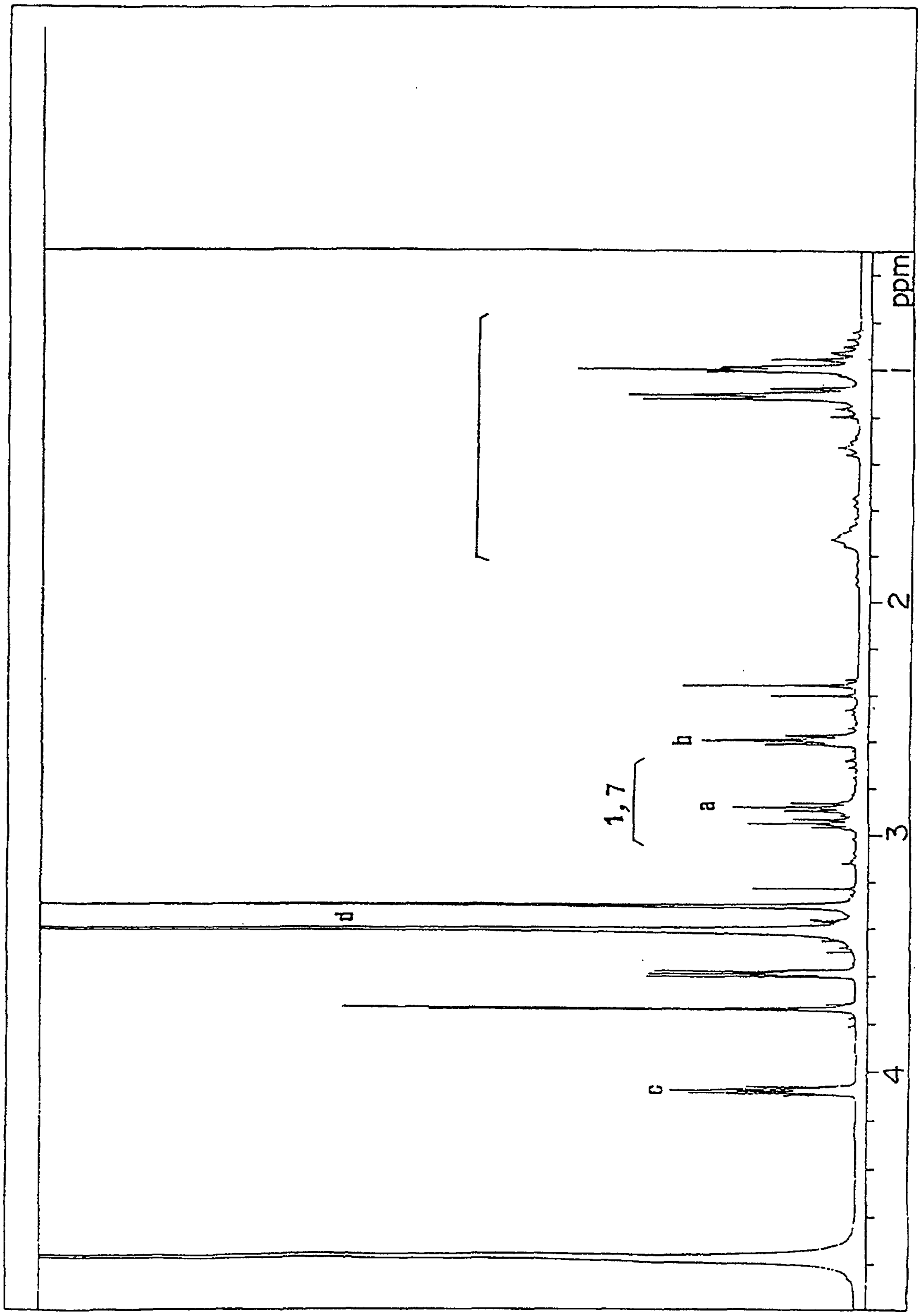

FIG. 8

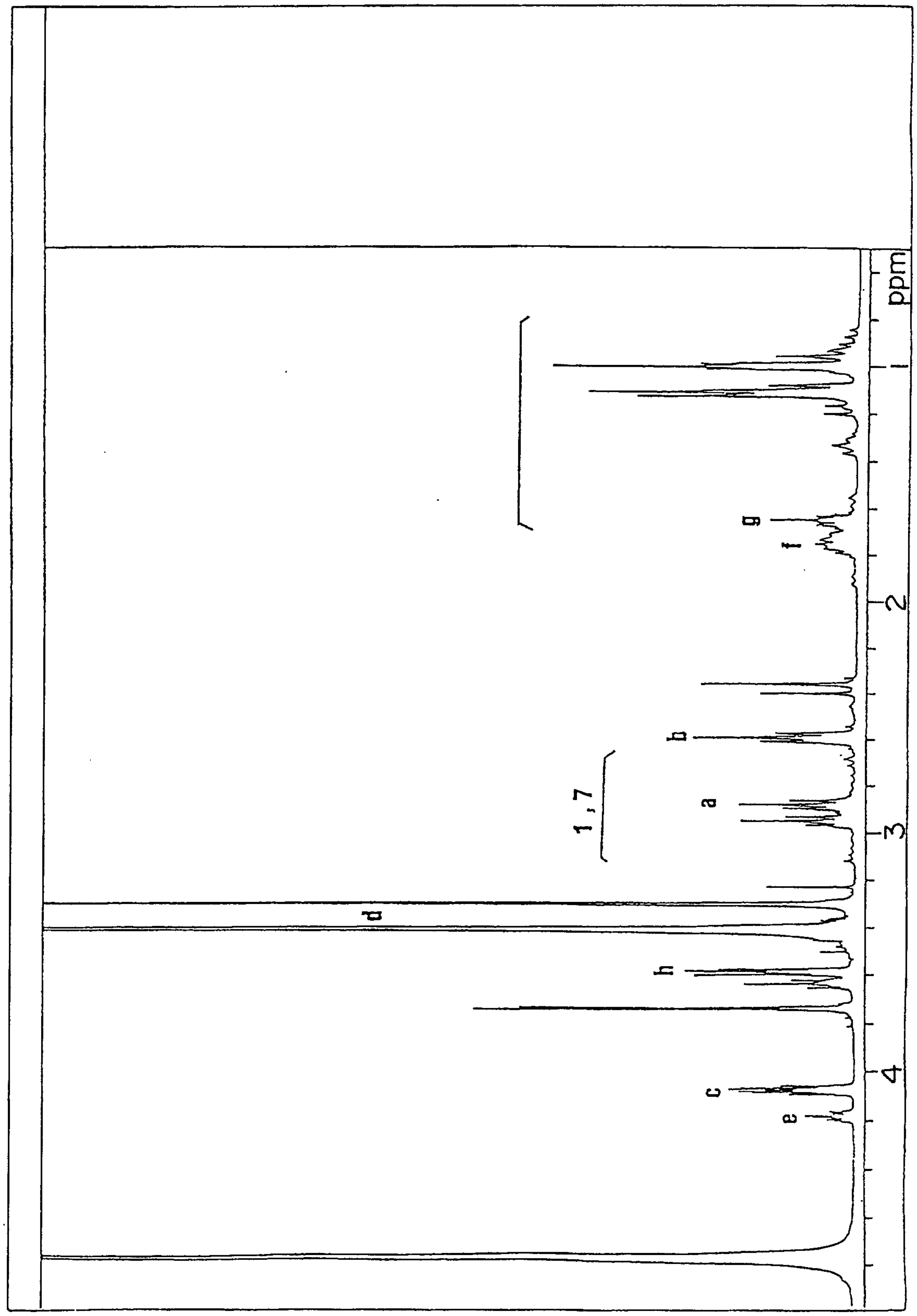

FIG. 9

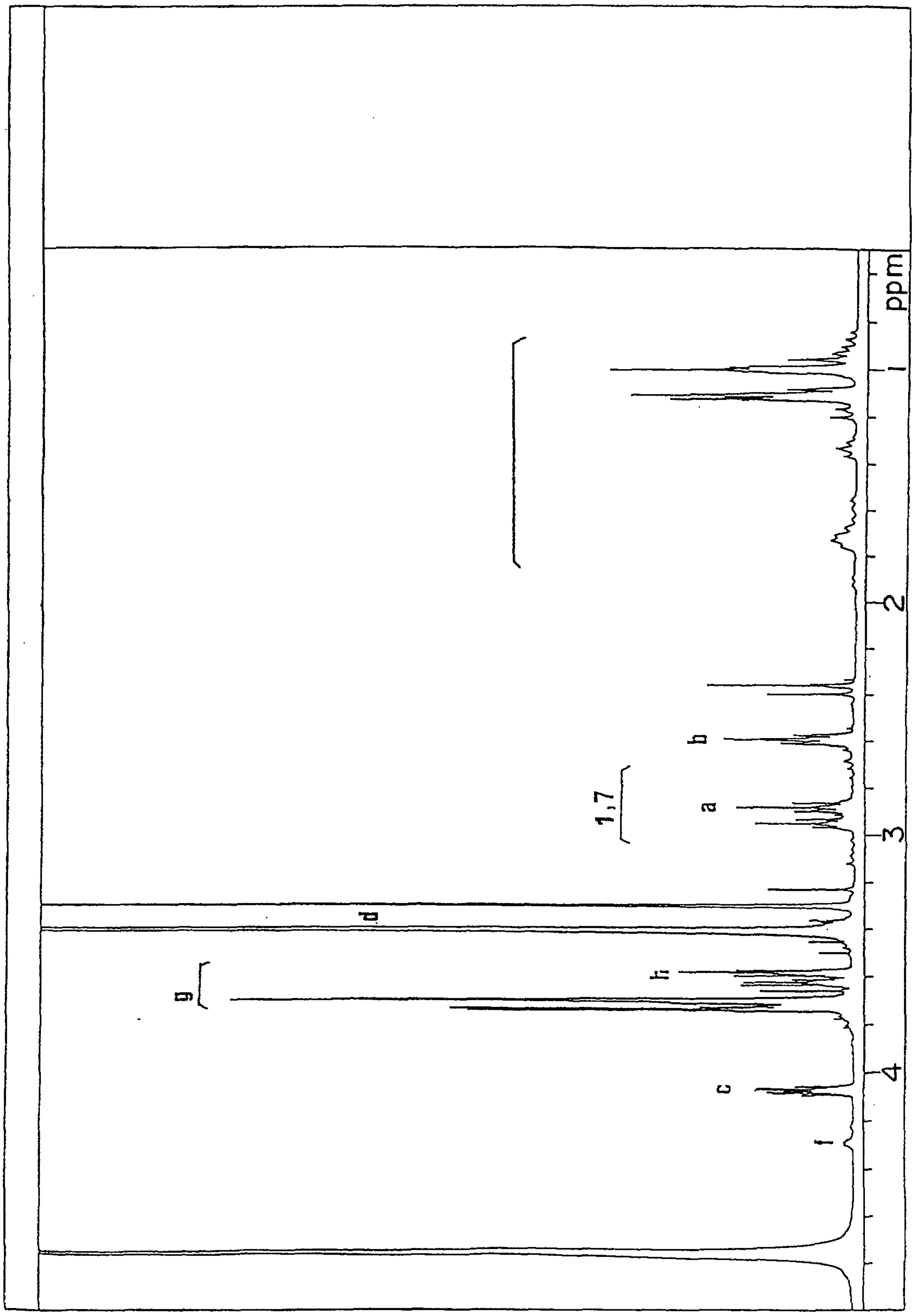

FIG.10

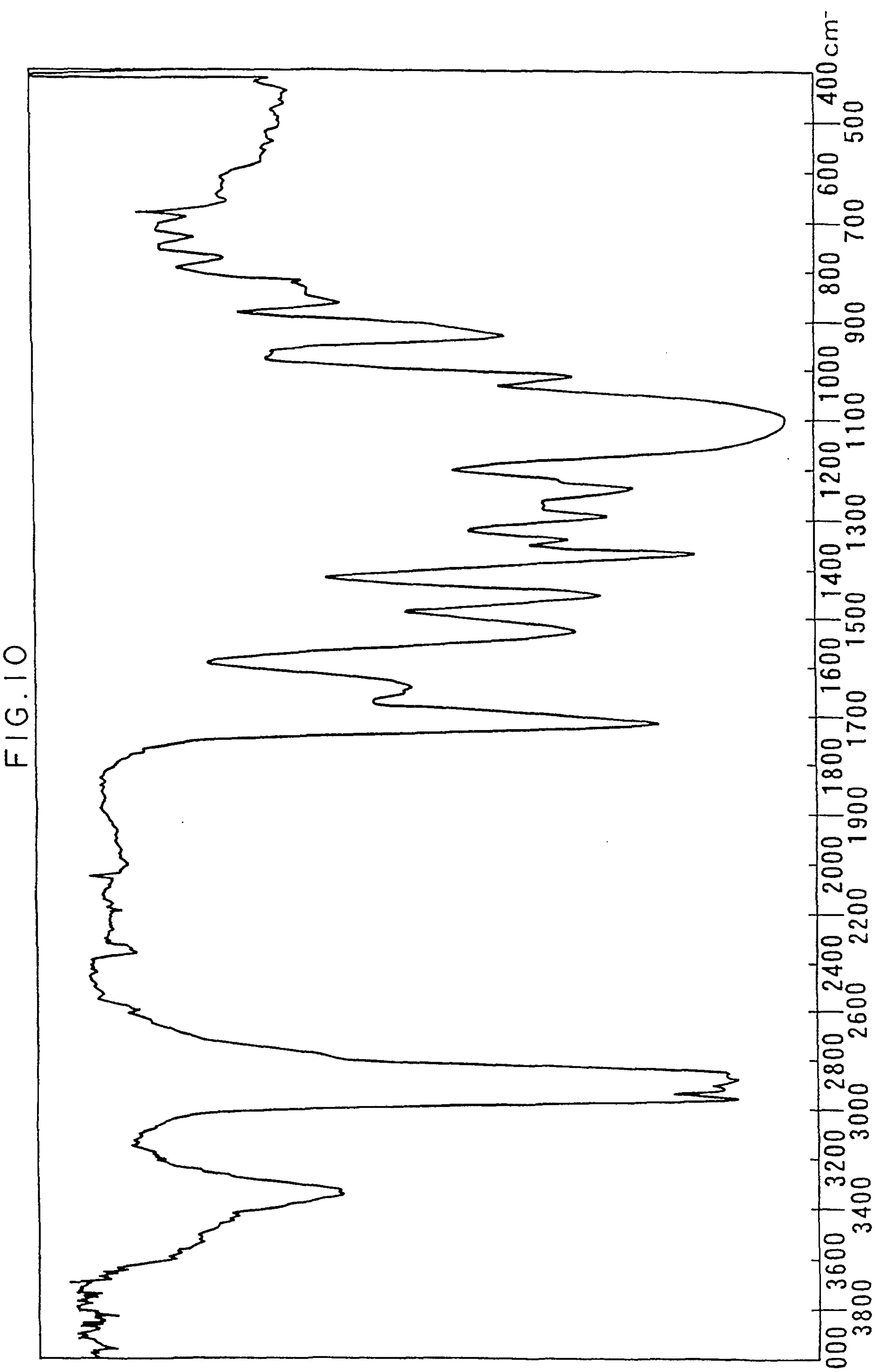
4000 3800 3600 3400 3200 3000 2800 2600 2400 2200 2000 1900 1800 1700 1600 1500 1400 1300 1200 1100 1000 900 800 700 600 500 400 cm-1

FIG.11

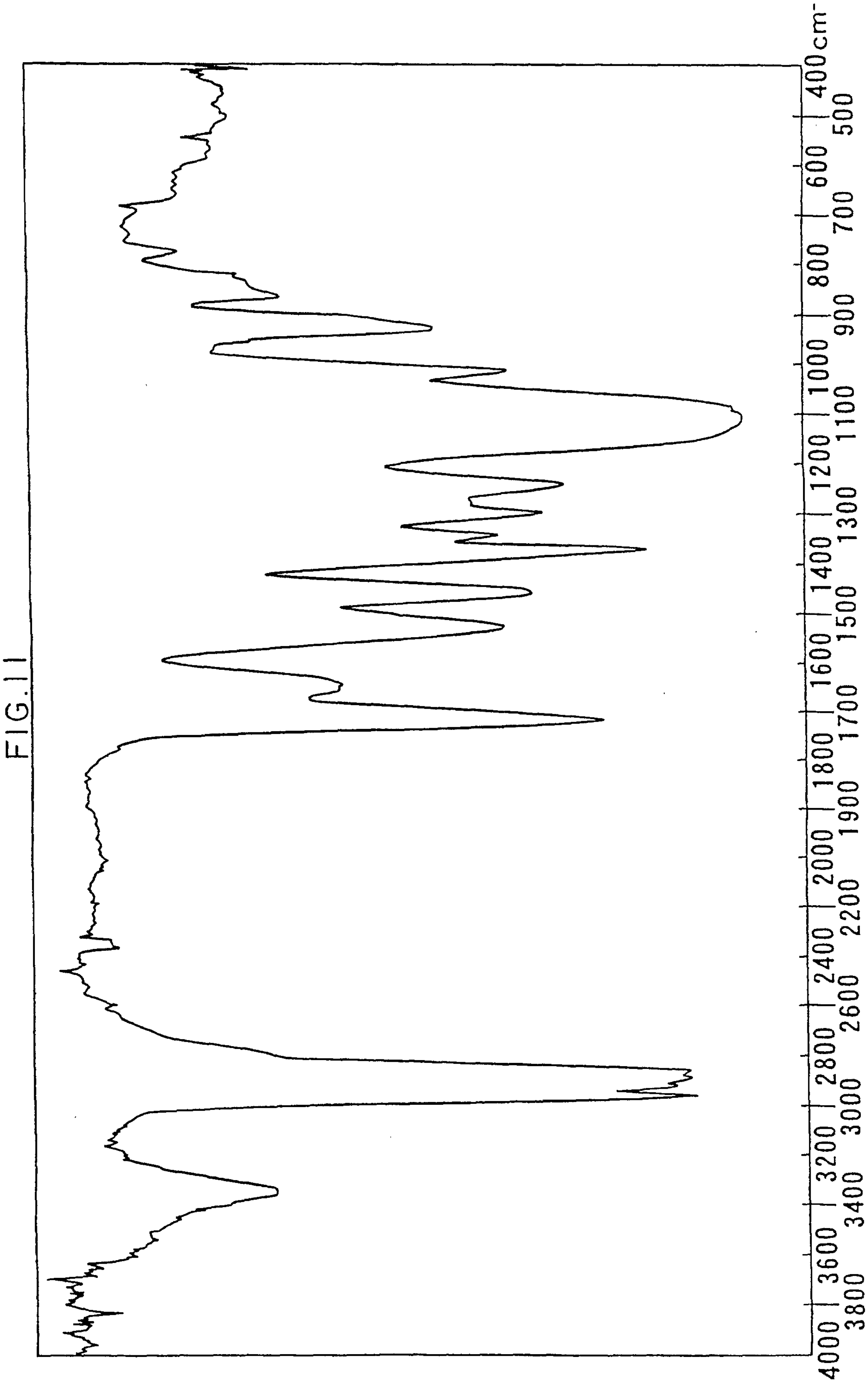
4000
3800
3600
3400
3200
3000
2800
2600
2400
2200
2000
1900
1800
1700
1600
1500
1400
1300
1200
1100
1000
900
800
700
600
500
400 cm-1

FIG.12

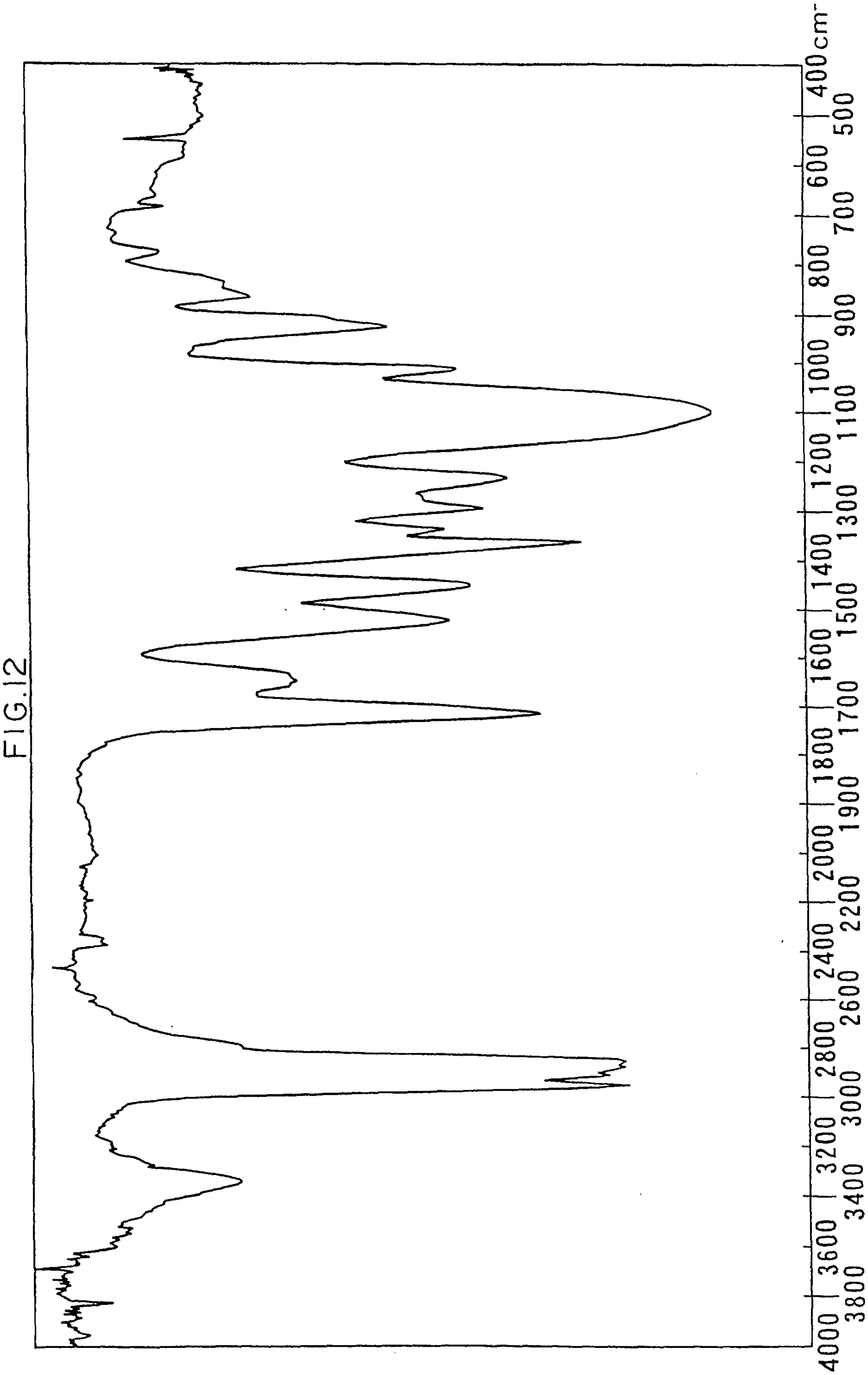
4000 3800 3600 3400 3200 3000 2800 2600 2400 2200 2000 1900 1800 1700 1600 1500 1400 1300 1200 1100 1000 900 800 700 600 500 400 cm⁻

FIG.13

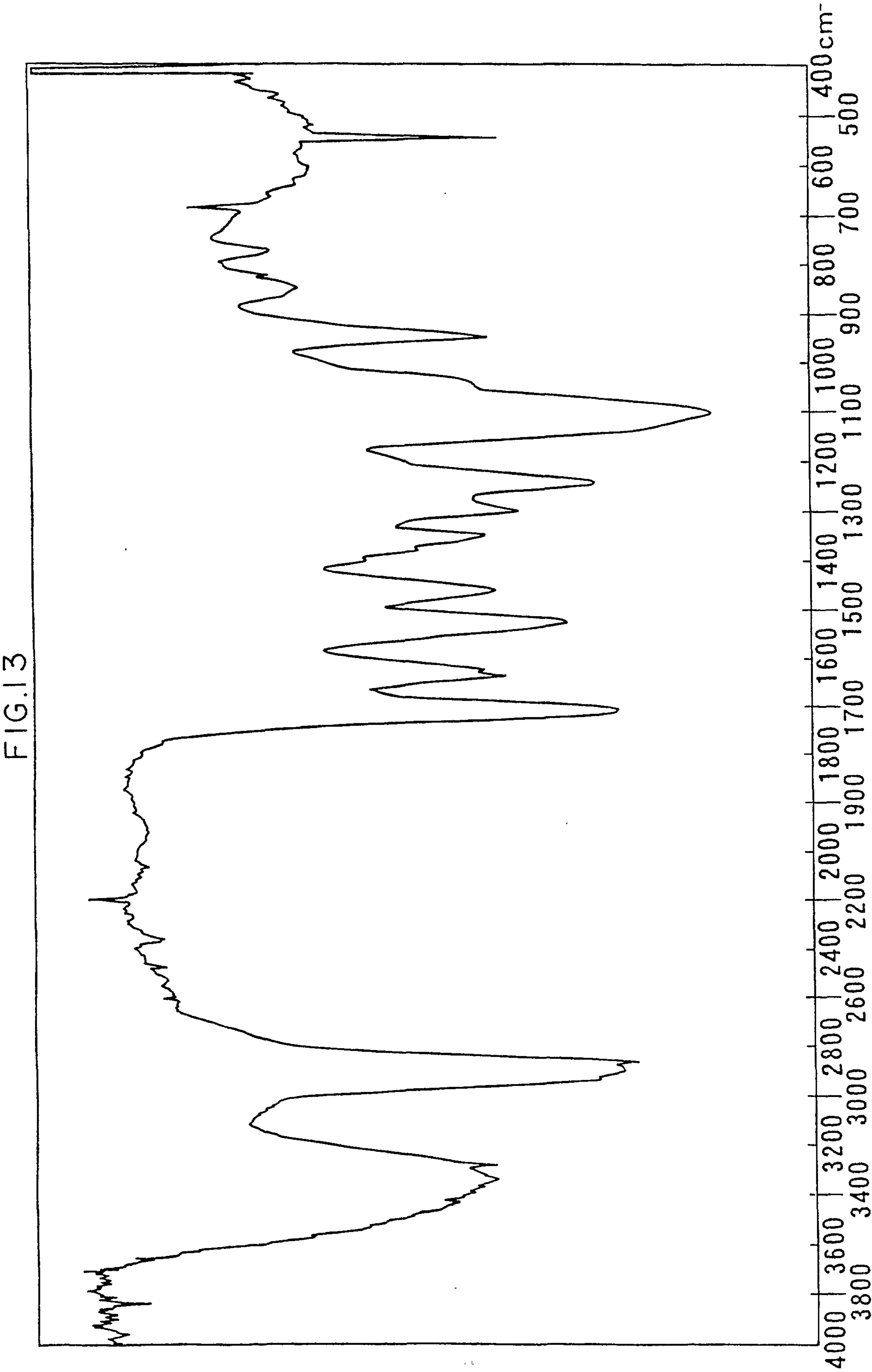
4000
3800
3600
3400
3200
3000
2800
2600
2400
2200
2000
1900
1800
1700
1600
1500
1400
1300
1200
1100
1000
900
800
700
600
500
400cm-

FIG.14

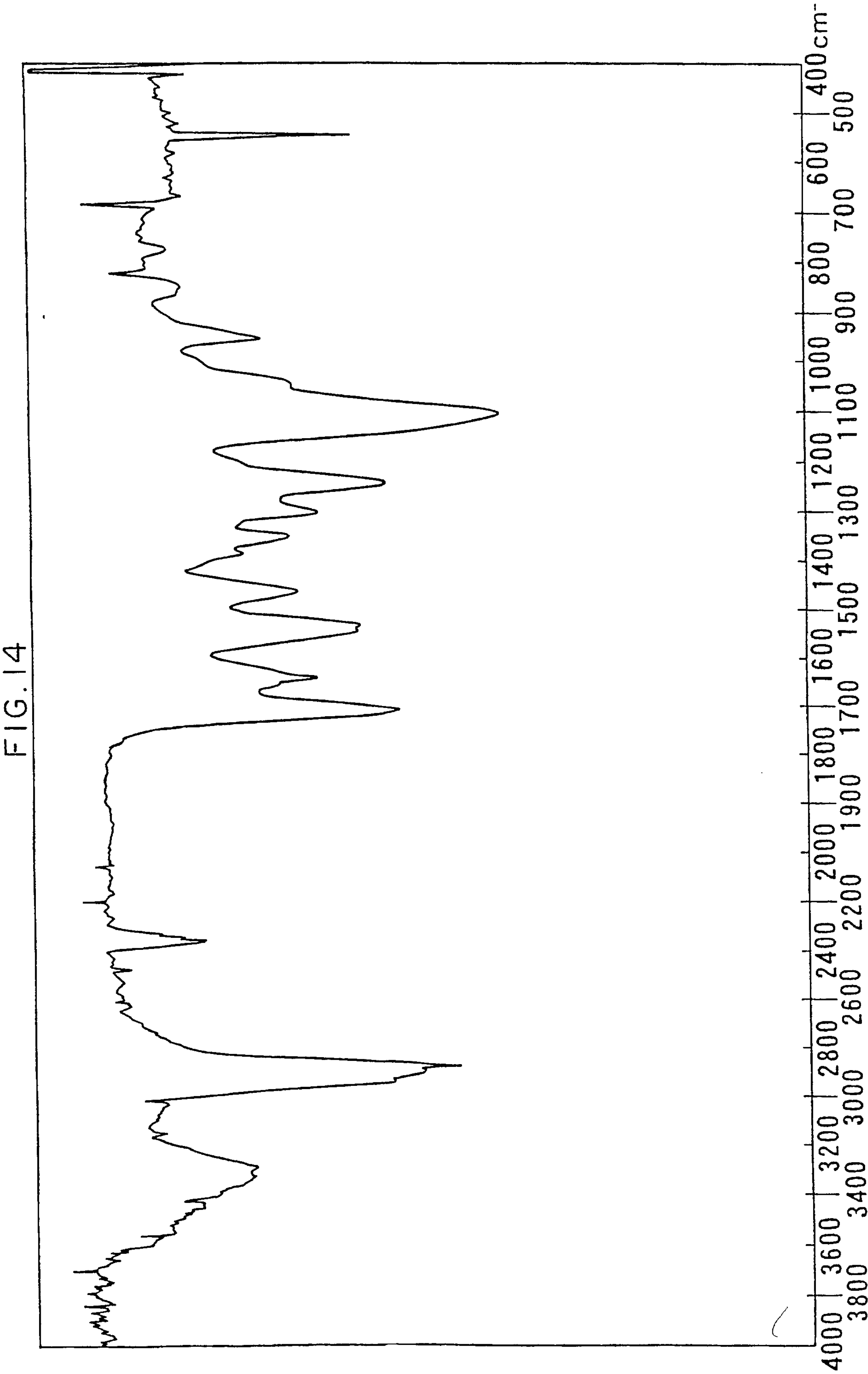
4000
3800
3600
3400
3200
3000
2800
2600
2400
2200
2000
1900
1800
1700
1600
1500
1400
1300
1200
1100
1000
900
800
700
600
500
400 cm-

FIG. 15

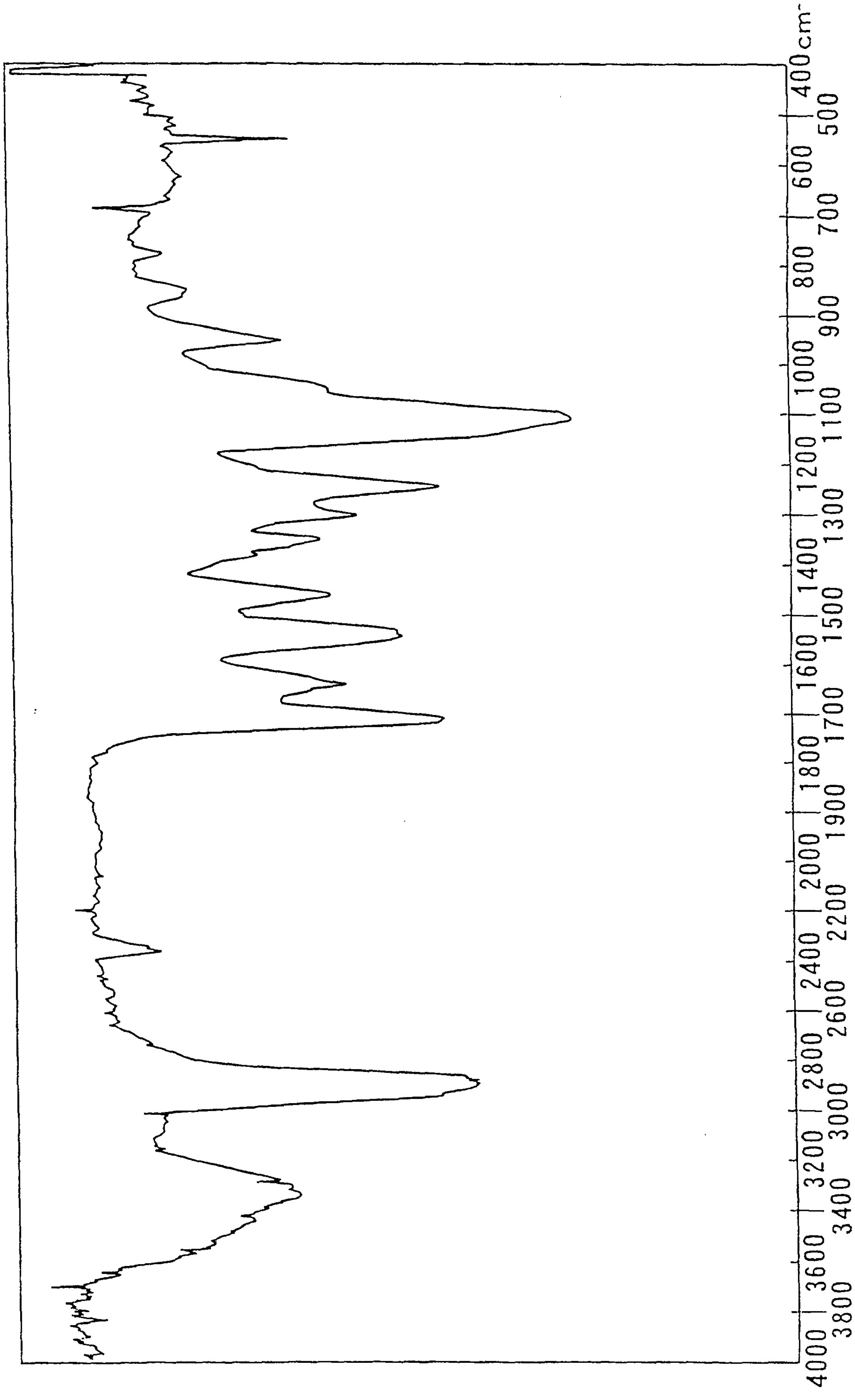
4000
3800
3600
3400
3200
3000
2800
2600
2400
2200
2000
1900
1800
1700
1600
1500
1400
1300
1200
1100
1000
900
800
700
600
500
400 cm⁻¹

FIG. 16

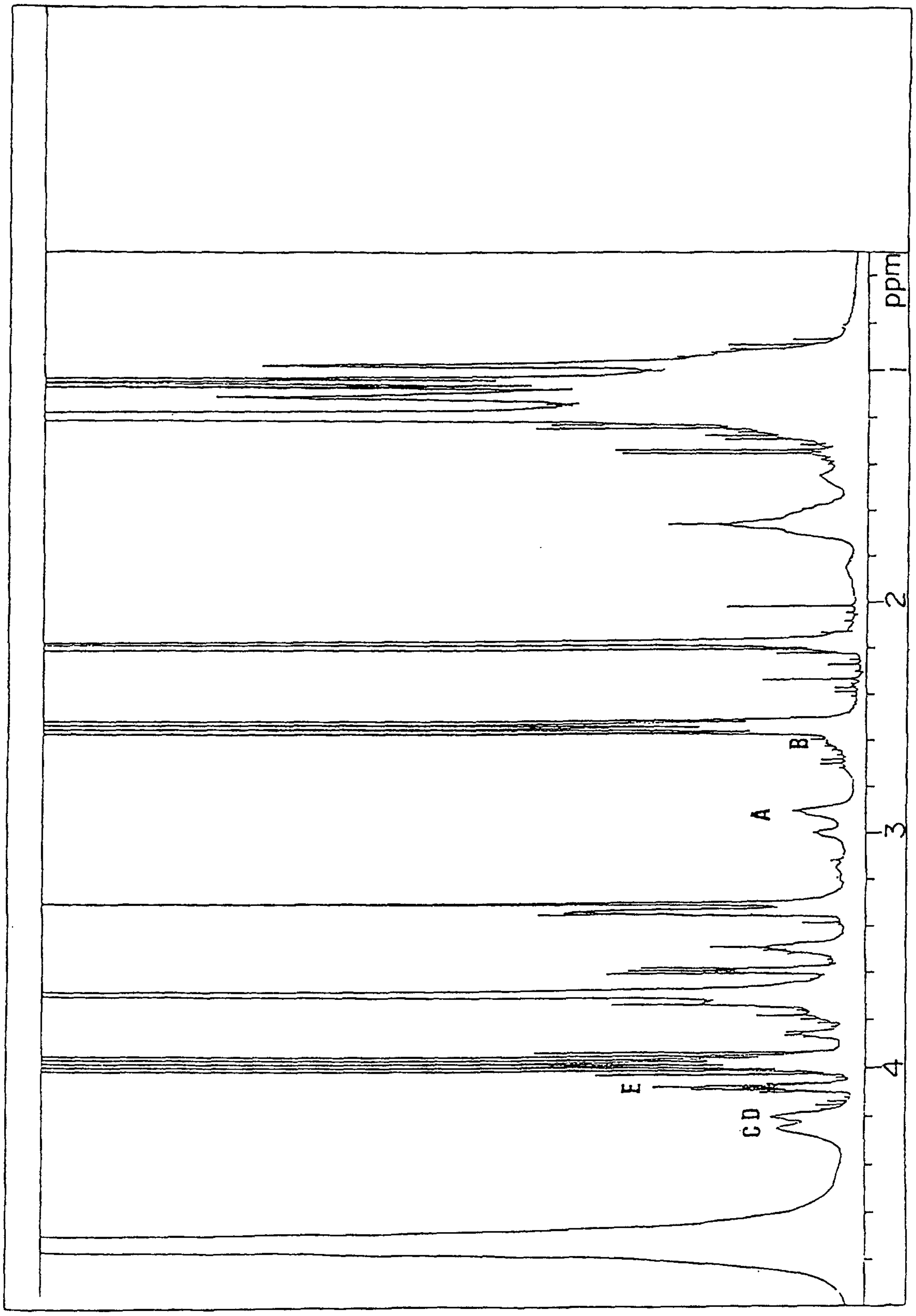

FIG. 17

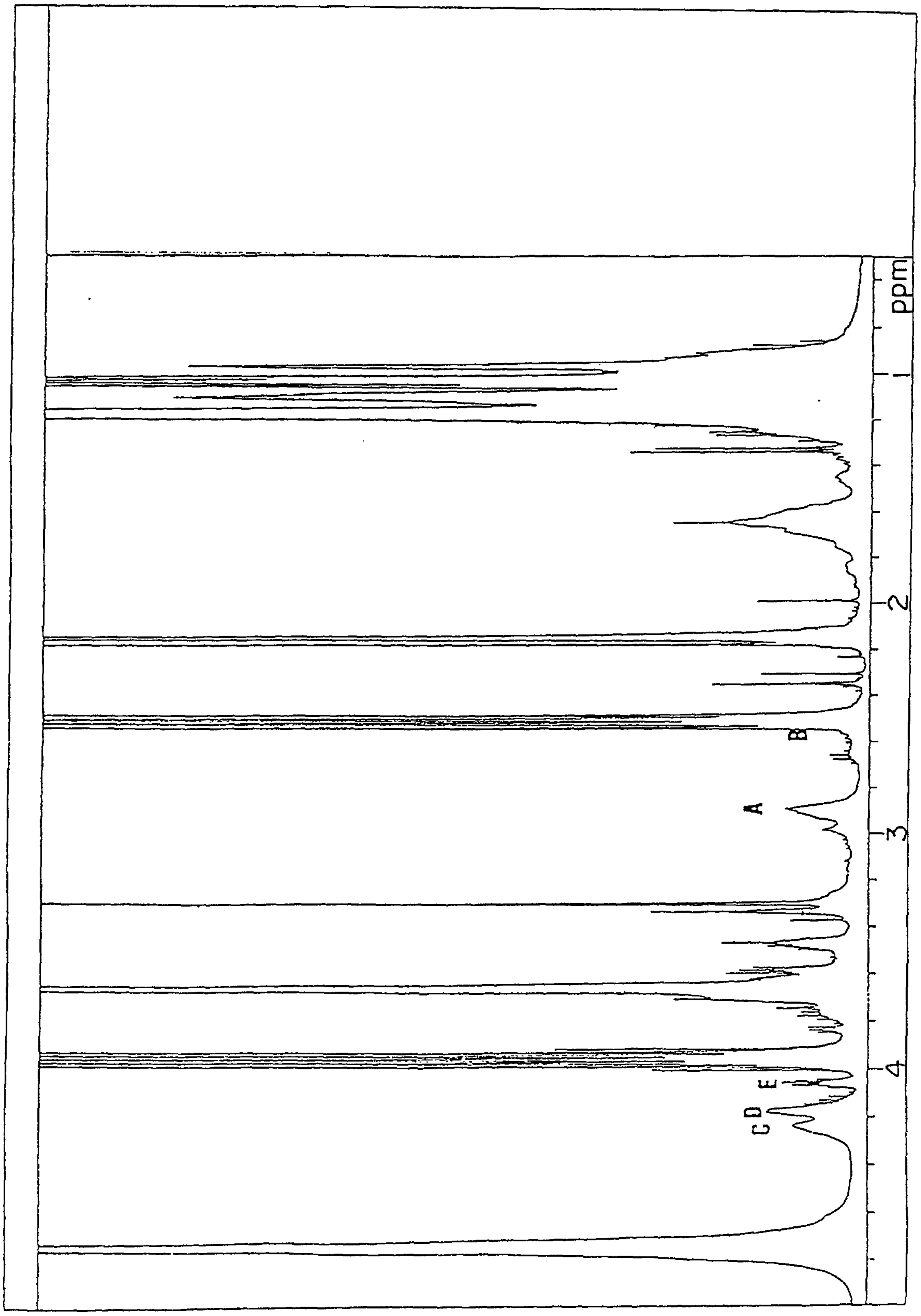

FIG. 18

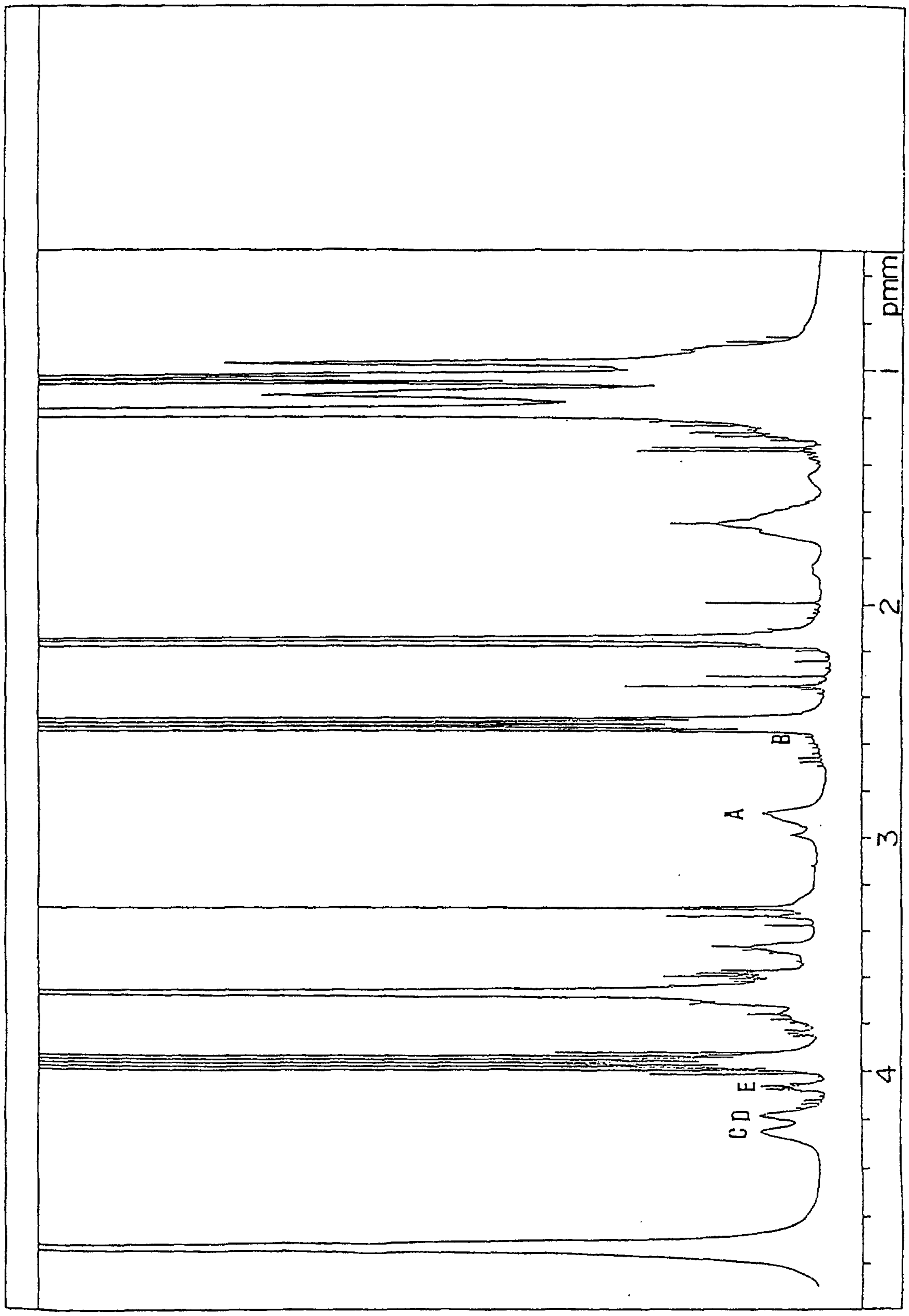

## INTERNATIONAL SEARCH REPORT

International application No.
PCT/JP00/05890

A. CLASSIFICATION OF SUBJECT MATTER
Int.Cl$^7$ C08G18/83, 18/32, C09J175/00

According to International Patent Classification (IPC) or to both national classification and IPC

B. FIELDS SEARCHED

Minimum documentation searched (classification system followed by classification symbols)
Int.Cl$^7$ C08G18/83, 18/32, C09J175/00

Documentation searched other than minimum documentation to the extent that such documents are included in the fields searched

Electronic data base consulted during the international search (name of data base and, where practicable, search terms used)
WPIL

C. DOCUMENTS CONSIDERED TO BE RELEVANT

| Category* | Citation of document, with indication, where appropriate, of the relevant passages | Relevant to claim No. |
|---|---|---|
| X<br>A | US, 5470907, A (BASF Aktiengesellschaft),<br>28 November, 1995 (28.11.95),<br>Claims,<br>Column 11, line 53 to Column 12, line 2<br>& EP, 629664, A1 & JP, 7-18046, A | 1-3,6<br>4,5,7-23 |
| X<br>A | JP, 6-313161, A (BSAF A.G.),<br>08 November, 1994 (08.11.94),<br>Claims; Par. Nos. 76 to 81<br>& EP, 622436, A1 | 1-3,6<br>4,5,7-23 |
| A | JP, 64-33170, A (PPG Industries, Inc.),<br>03 February, 1989 (03.02.89),<br>Claims<br>& US, 4786682, A & EP, 297344, A1 | 1-23 |
| A | JP, 9-31150, A (Dainippon Ink and Chemicals, Inc.),<br>04 February, 1997 (04.02.97),<br>Claims (Family: none) | 1-23 |
| A | DE, 19805136, A1 (BASF AG),<br>12 August, 1999 (12.08.99), | 1-23 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 November, 2000 (27.11.00) | 05 December, 2000 (05.12.00) |
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

International application No.
PCT/JP00/05890

C (Continuation). DOCUMENTS CONSIDERED TO BE RELEVANT

| Category* | Citation of document, with indication, where appropriate, of the relevant passages | Relevant to claim No. |
|---|---|---|
| | Patentanspruche<br>(Family: none) | |

Form PCT/ISA/210 (continuation of second sheet) (July 1992)